# EUROPEAN PATENT SPECIFICATION

(11) **EP 2 402 156 B1**
(45) Date of publication and mention of the grant of the patent: **14.02.2018**
(21) Application number: 10746203.8
(22) Date of filing: 23.02.2010
(51) Int. Cl.: B32B 27/32, B65D 65/40, A61J 1/10

(54) **MULTILAYER FILM AND BAG FORMED OF THE FILM**
MEHRSCHICHTIGE FOLIE UND AUS DER FOLIE HERGESTELLTER BEUTEL
FILM MULTICOUCHE ET SAC FORMÉ DU FILM

(30) Priority: 26.02.2009 JP 2009044625; 28.09.2009 JP 2009223116; 26.11.2009 JP 2009268514
(43) Date of publication of application: 04.01.2012
(73) Proprietor: Otsuka Pharmaceutical Factory, Inc., Tokushima 772-8601 (JP)
(72) Inventor: IGARASHI, Koichi, Ichihara-shi Chiba 299-0108 (JP); SAITO, Tetsuya, Ichihara-shi Chiba 299-0108 (JP); NAGATA, Yasushi, Naruto-shi Tokushima 772-8601 (JP); MORI, Toshifumi, Naruto-shi Tokushima 772-8601 (JP); MORI, Hitoshi, Naruto-shi Tokushima 772-8601 (JP)
(74) Representative: Hoffmann Eitle
(86) International application number: PCT/JP2010/052767
(87) International publication number: WO 2010/098322

(56) References cited:
- EP-A1- 0 567 210
- WO-A1-2007/102336
- WO-A2-02/055298
- JP-A- 8 309 939
- JP-A- 9 308 683
- JP-A- 2000 177 077
- JP-A- 2002 301 796
- JP-A- 2003 237 002
- DATABASE WPI Week 200564 Thomson Scientific, London, GB; AN 2005-622314 XP002676418, -& JP 2005 219485 A (NIPPON POLYETHYLENE KK) 18 August 2005 (2005-08-18)
- DATABASE WPI Week 200281 Thomson Scientific, London, GB; AN 2002-746218 XP002676419, -& JP 2002 301796 A (OTSUKA SEIYAKU KOGYO KK) 15 October 2002 (2002-10-15)

## Description

### [TECHNICAL FIELD]

The present invention relates to a multilayer film and a bag formed of the film.

### [BACKGROUND ART]

In recent years, drug solution bags made of flexible plastic film have become the mainstream among containers for containing infusion solutions and other drug solutions. This type of drug solution bag has merits of being easy to handle and readily disposable. This type of solution bag comes in direct contact with a drug solution and thus those formed of polyethylene, polypropylene, and other polyolefins, the safety of which is well-established, are generally used.

JP-A-2002-238975 discloses a medical container made of a laminate of an outer layer, formed of a linear low-density polyethylene or ethylene-α-olefin copolymer having a density of 0.920-0.930 g/cm³ and polymerized using a metallocene catalyst (hereinafter these polymers shall be referred to as "metallocene polyethylenes"), and an inner layer, formed of a metallocene polyethylene with a density of 0.890-0.920 g/cm³, a metallocene polyethylene with a density of 0.920-0.930 g/cm³, and a linear low-density polyethylene or ethylene-α-olefin copolymer having a density of 0.910-0.930 g/cm³ and polymerized using a Ziegler-Natta catalyst.

Also, JP-A-2001-172441 discloses a heat-resistant sheet formed of a polymer composite that includes 45-75 wt.-% of a metallocene catalyst based linear polyethylene with a density of ≥ 0.928 g/cm³, 5-35 wt.-% of a high pressure method low-density polyethylene, and 15-45 wt.-% of a metallocene catalyst based linear polyethylene with a density of ≤ 0.910 g/cm³, and an infusion solution bag formed using the heat-resistant sheet.

JP-A-2006-21504 discloses a plastic film with a five-layer structure that includes: a sealing layer made of a mixture of a propylene-α-olefin random copolymer and a propylene homopolymer; a first flexible layer formed on a surface of the sealing layer and made of a mixture of a propylene-α-olefin random copolymer, etc., and an ethylene-α-olefin copolymer elastomer; a reinforcing layer formed on a surface of the first flexible layer and made of a propylene homopolymer, a polycyclic olefin, etc.; a second flexible layer formed on a surface of the reinforcing layer and made of the same mixture as the first flexible layer; and an outermost layer formed on a surface of the second flexible layer and made of a propylene homopolymer, a propylene-α-olefin random copolymer, etc., and a container formed using the plastic film.

WO 2002/055298 describes a polyethylene-base resin laminate having at least an inner layer, an intermediate layer and an outer layer, wherein the inner layer comprises a resin (A) containing a high-density polyethylene, the intermediate layer comprises a resin (B) mainly comprising polyethylene-based resin I which is an ethylene/C₃₋₂₀- (α-olefin) copolymer having a density of < 0.920 g/cm³, (b) a MFR of 0 .1-50 g/10 min and having additional specified properties, and the outer layer comprises a resin material (c) containing a high-density polyethylene.

JP-A-2005-219485 relates to a laminated body suitable a bag containing a pharmaceutical liquid, the laminated body comprising at least an outer layer, a middle layer and an internal layer. The outer layer is made of a polyolefin (A) with a specified Vicat softening temperature, the middle layer is formed by of 97-85 wt.-% of an ethylene/α-olefin copolymer (B) with an MFR of 0.1-20 g/10 min and a density of 0.880-0.930 g/cm³ and 3-15 wt.-% of a HDPE (C) with an MFR of 0.1-20 g/10 min and a density of 0.940-0.980 g/cm³ of, and the internal layer is formed of a composition of 80-95 wt.% of component (B) of and 5-20 wt.% of component (C).

EP-A-0 567 210 discloses a medical bag comprised of a laminate film, sheet or tube composed of three or more layers. At least the inner layer in contact with a liquid contained in the bag comprises a high-density polyethylene having a density of ≥ 0.945 g/cm³ and a Mw/Mn of ≤ 4.0 or a composition comprising said high-density polyethylene and, added thereto, < 60 wt.-% of a low-density polyethylene resin having a density of ≤ 0.930 g/cm³ produced by a radical polymerization; and an intermediate layer comprising a composition composed of a linear, low-density polyethylene resin having a short-chain branching and a density of ≤ 0.920 g/cm³ and < 15 wt.-% of a high-density polyethylene resin having a density of ≥ 0.945 g/cm³ and a Mw/Mn of ≤ 4.0.

JP-A-2002-301796 discloses a multilayer film comprising five layers, layer (1) being made of an intermediate/high-density linear ethylene/α-olefin copolymer or aliphatic polyamide resin, layer (2) being made of a mixture of a linear ultra-low density ethylene/α-olefin copolymer and a modified polyolefin unsaturated carboxylate, layer (3) being made of a cyclic olefin copolymer, layer (4) being made of a mixture of a linear ultra-low density ethylene/α-olefin copolymer and a modified polyolefin unsaturated carboxylate, and layer (5) being made of an intermediate/high density linear ethylene/α-olefin copolymer. Also disclosed is a container made thereof and having the layer (1) as an outer layer, and the layer (5) as an inner layer.

### [SUMMARY OF THE INVENTION]

### [PROBLEMS TO BE SOLVED BY THE INVENTION]

However, a drug solution, such as an infusion solution, is normally subject to high-pressure steam sterilization, hot water shower sterilization, or other heat sterilization process in a state of being contained and housed in a drug solution bag. Although a temperature condition of such a heat sterilization process is generally approximately 105-110°C, a sterilization process under a high temperature condition of 118-121°C may be necessary depending on, for example, the type, usage or usage environment of the drug solution.

However, in a case where a drug solution bag is manufactured from a general polyethylene, the drug solution bag tends to be low in heat resistance, and a problem such as deformation, breakage, and lowering of transparency of the drug solution bag occurs due to a sterilization process under a high temperature condition.

Moreover, such problems cannot be resolved adequately even in a case where a linear low-density polyethylene polymerized using a metallocene catalyst is used as the polyethylene as in the drug solution bags (medical container and infusion solution bag) described in JP-A-2002-238975 and JP-A-2001-172441. The containers described in JP-A-2002-238975 and JP-A-2001-172441 thus cannot be subject to a sterilization process at 118-121°C.

Also, in a case where a drug solution bag is formed of a general polypropylene, the drug solution bag tends to be low in flexibility. Also as characteristics of polypropylene, impact strength at low temperature is poor, and a bag may break due to impact received during transport of the bag in a low temperature state.

Moreover, such a problem cannot be resolved adequately even in a case where a flexible layer, made of a mixture of a propylene based polymer and a ethylene based polymer, is provided inside a multilayer film as in the container described in JP-A-2006-21504 . The container described in JP-A-2006-21504 thus has difficulties in terms of flexibility and impact strength at low temperature.

It is thus desired that a drug solution bag be improved in heat resistance while maintaining such basic performance as flexibility, transparency, impact strength at low temperature, etc.

An object of the present invention is to provide a multilayer film having excellent heat resistance that enables a sterilization process at 118-121°C to be withstood and being capable of maintaining flexibility and transparency after the sterilization process, and a bag formed of the film, in particular, a bag that contains a drug solution.

### [MEANS FOR SOLVING THE PROBLEMS]

To achieve the aforementioned object, a multilayer film according to the present invention is, as a first mode, a multilayer film, which is a three-layer film having a laminated structure formed by laminating a layer (A-1), a layer (A-2) and a layer (A-3) in that order, wherein
(i) layer (A-1) comprises a polyethylene or a mixture of two or more types of polyethylene having a DSC melting point of > 126°C and ≤ 132°C and a density higher than the density of the A-2 layer,
(ii) layer (A-3) comprises a polyethylene or a mixture of two or more types of polyethylene having a DSC melting point of > 125°C and ≤ 130°C and a density higher than the density of the A-2 layer,
(iii) layer (A-2) comprises a polyethylene mixture having a DSC melting point of 120-126°C and a density of 0.910-0.920 g/cm³, the polyethylene mixture making up the A-2 layer comprises:
   - 10-55 wt.-% of a linear polyethylene having a density of 0.910-0.930 g/cm³;
   - 5-15 wt.-% of a high-density polyethylene having a density of 0.950-0.970 g/cm³; and
   - 35-85 wt.-% of a linear polyethylene having a density of 0.900-0.910 g/cm³ and polymerized using a single-site catalyst, and
   the thickness of the entirety of the film is 180-280 µm.

Also, the present invention provides a bag using the above multilayer film of the first mode of the invention and being formed so that the layer (A-1) is an outer layer and the layer (A-3) is an inner layer.

As a second mode, the multilayer film according to the present invention is a five-layer film having a laminated structure formed by laminating a layer (B-1), a layer (B-2), a layer (B-3), a layer (B-4), and a layer (B-5) in that order, wherein
(i) each of the layers (B-1) and (B-5) comprises a linear polyethylene having a DSC melting point of > 125°C and ≤ 130°C and a density of 0.935-0.946 g/cm³,
   the linear polyethylene mixture making up the layer (B-1) and the layer (B-5) comprises:
   - 75-90 wt.-% of a linear polyethylene having a DSC melting point of 120-125°C and a density of 0.930-0.940 g/cm³; and
   - 10-25 wt.-% of a high-density polyethylene having a density of 0.950-0.970 g/cm³,
(ii) the layer (B-3) comprises a linear polyethylene having a DSC melting point of 120-125°C and a density of 0.930-0.940 g/cm³,
(iii) each of the layers (B-2) and (B-4) comprises a linear polyethylene mixture having a DSC melting point of 120-126°C and a density of 0.910-0.920 g/cm³,
the linear polyethylene mixture making up the layer (B-2) and the layer (B-4) comprises:
- 35-85 wt.-% of a linear polyethylene having a density of 0.900-0.910 g/cm³ and polymerized using a single-site catalyst;
- 0-55 wt.-% of a linear polyethylene having a density of 0.910-0.930 g/cm³; and
- 5-15 wt.-% of a high-density polyethylene having a density of 0.950-0.970 g/cm³.

The present invention further provides a bag using the above multilayer film of the first mode of the invention and being formed so that the layer (B-1) is an outer layer and the layer (B-5) is an inner layer.

With the multilayer films of the present invention, lowering of transparency can be suppressed and a suitable flexibility can be maintained even after a sterilization process performed at 118-121°C.

With the multilayer film according to the first mode, the DSC melting points and densities of the respective layers are respectively set in the specific ranges from a standpoint of suppressing the lowering of transparency and thermal deformation of the multilayer film due to the sterilization process in the A-1 layer and the A-3 layer and from a standpoint of imparting the multilayer film with a suitable flexibility, impact resistance, and transparency in the A-2 layer.

The multilayer film according to the first mode can thus be made extremely high in heat resistance. Also, a bag formed using the multilayer film can be subject to a sterilization process at 118-121°C. Moreover, the multilayer film according to the first mode can be made extremely high in flexibility, transparency, and impact resistance and can maintain an appropriate flexibility and an excellent transparency and impact resistance even after being subject to the sterilization process at 118-121°C.

Preferably, with the multilayer film according to the first mode, the density of the A-1 layer is 0.940-0.951 g/cm³, and the density of the A-3 layer is 0.937-0.946 g/cm³.

Also preferably with the multilayer film according to the first mode, the A-1 layer is made of 55-85 wt.-% of a linear polyethylene having a DSC melting point of 120-125°C and a density of 0.930-0.940 g/cm³ and 15-45 wt.-% of a high-density polyethylene having a density of 0.950-0.970 g/cm³, and the A-3 layer is a polyethylene mixture made of 70-85 wt.-% of a linear polyethylene having a DSC melting point of 120-125°C and a density of 0.930-0.940g/cm³ and 15-30 wt.-% of a high-density polyethylene having a density of 0.950-0.970 g/cm³.

By this mode, the heat resistance in the sterilization process at 118-121°C can be improved further without degradation of transparency.

Also preferably with the multilayer film according to the first mode, the thickness of the A-1 layer is 10-30µm, the thickness of the A-2 layer is 140-250µm, and the thickness of the A-3 layer is 15-45µm.

By setting the respective thicknesses of the A-1 to A-3 layers in the above ranges, an adequate impact resistance can be imparted while maintaining the flexibility and the transparency of the multilayer film and the bag formed using the multilayer film.

Also preferably with the multilayer film according to the first mode, a DSC curve of the polyethylene mixture making up the A-2 layer has, in addition to the required DSC melting point peak in a range of 120-126°C, and a second peak, lower than the DSC melting point peak, in a range of 90-105°C, and a ratio of a height HL of the second peak with respect to a height Hp of the DSC melting point peak (HL/Hp) is 0.20-0.50.

Also, to achieve the above object, a bag according to the present invention uses the multilayer film of the first mode and is formed so that the A-1 layer is an outer layer and the A-3 layer is an inner layer.

The bag is formed using the multilayer film according to the first mode and is thus extremely high in heat resistance and can be subject to a sterilization process at 118-121°C. Further, the bag is extremely high in flexibility, transparency, and impact resistance and can maintain an appropriate flexibility and an excellent transparency and impact resistance even after being subject to the sterilization process at 118-121°C.

Also, with the multilayer film according to the second mode of the present invention, linear polyethylenes are used in all of the layers from the B-1 layer to the B-5 layer. Further, the DSC melting points and densities of the respective layers are respectively set in the specific ranges from a standpoint of suppressing the lowering of transparency and thermal deformation of the multilayer film due to the sterilization process in the B-1 layer and the B-5 layer, from a standpoint of imparting the multilayer film with a suitable flexibility, impact resistance, and transparency in the B-2 layer and the B-4 layer, and from a standpoint of suppressing thermal deformation of the multilayer film in the B-3 layer.

The multilayer film according to the second mode can thus be made extremely high in heat resistance, and a bag formed using the multilayer film can be subject to a sterilization process at 118-121°C. Moreover, with the multilayer film, flexibility and transparency can be made extremely high and an appropriate flexibility and excellent transparency can be maintained even after being subject to the sterilization process at 118-121°C.

Also, by using a high pressure method polyethylene in combination in the B-3 layer, thinning of the film due to heat sealing or heat sealing of other parts can be prevented without degradation of transparency and flexibility.

Also with the multilayer film according to the second mode, each of the B-1 layer and the B-5 layer has a DSC melting point of > 125°C and ≤ 130°C and a density of 0.935-0.946 g/cm³, and the B-3 layer has a DSC melting point of 120-125°C and a density of 0.930-0.940 g/cm³.

Also with the multilayer film according to the second mode, the polyethylene making up each of the B-1 layer and the B-5 layer is made of 75-90 wt.-% of a linear polyethylene having a DSC melting point of 120-125°C and a density of 0.930-0.940 g/cm³; and 10-25 wt.-% of a high-density polyethylene having a density of 0.950-0.970 g/cm³.

By this mode, the heat resistance in the sterilization process at 118-121°C can be improved further.

Also preferably with the multilayer film according to the second mode, the thickness of each of the B-1 layer and the B-3 layer is 10-30 µm, the thickness of each of the B-2 layer and the B-4 layer is 70-110 µm, and the thickness of the B-5 layer is 15-45 µm.

By setting the respective thicknesses of the B-1 to B-5 layers in the above ranges, an adequate mechanical strength can be imparted while maintaining the flexibility of the multilayer film and the bag formed using the multilayer film.

Also, to achieve the above object, a bag according to the present invention uses the multilayer film of the second mode and is formed so that the B-1 layer is an outer layer and the B-5 layer is an inner layer.

The bag is formed using the multilayer film according to the second mode and is thus extremely high in heat resistance and can be subject to a sterilization process at 118-121°C. Further, the bag is extremely high in flexibility, transparency, and impact resistance and can maintain an appropriate flexibility and an excellent transparency and impact resistance even after being subject to the sterilization process at 118-121°C.

### [EFFECTS OF THE INVENTION]

By the multilayer film and the bag formed by the multilayer film according to the present invention, a bag that is excellent in flexibility, transparency, and impact resistance and can withstand a sterilization process under a high temperature condition can be provided.

The present invention is thus especially favorable for application to a usage of containing and storing a drug solution that requires a sterilization process under a high temperature condition according to, for example, type, usage, or usage environment.

### [BRIEF DESCRIPTION OF THE DRAWINGS]

FIG. 1 is a schematic arrangement diagram of a layer arrangement of a multilayer film (II) according to the first mode of the invention.
FIG. 2 is a schematic front view of a drug solution bag according to one embodiment of the invention.
FIG. 3 is a schematic sectional view (section taken along a section plane A1-A1) of the drug solution bag of FIG. 2.
FIG. 4 is a photograph of a plate drop test apparatus.

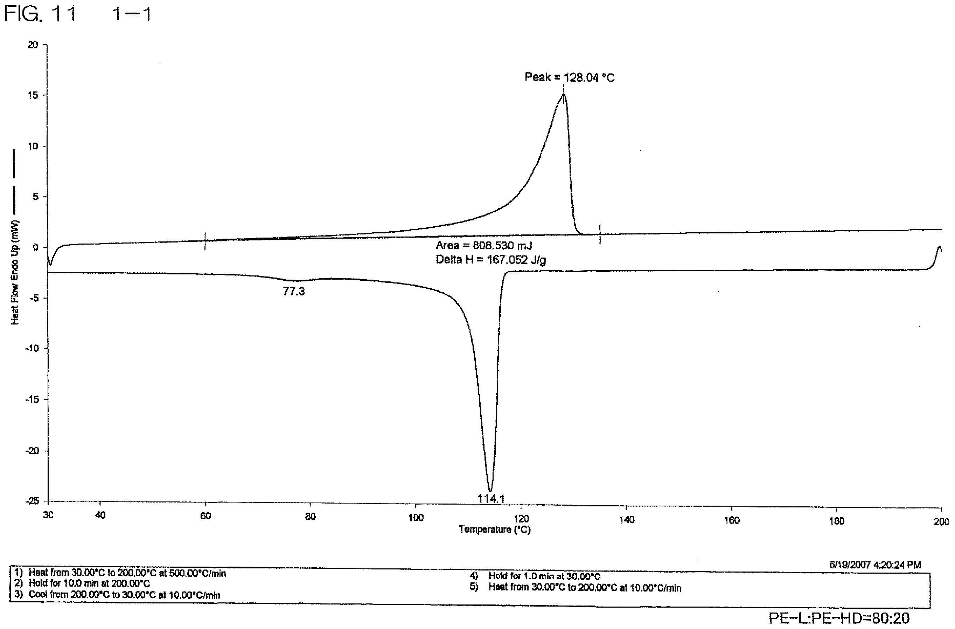

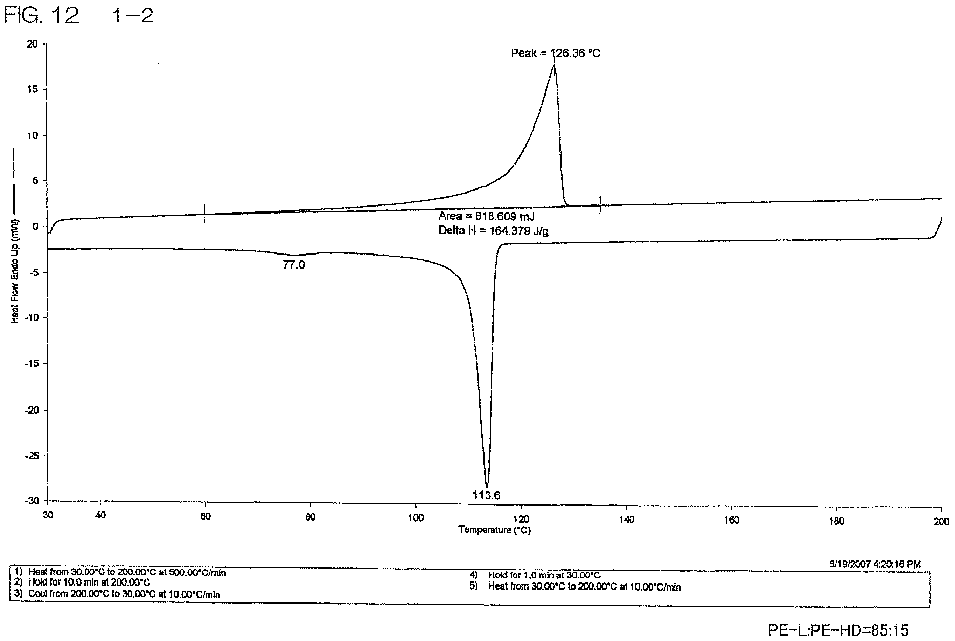

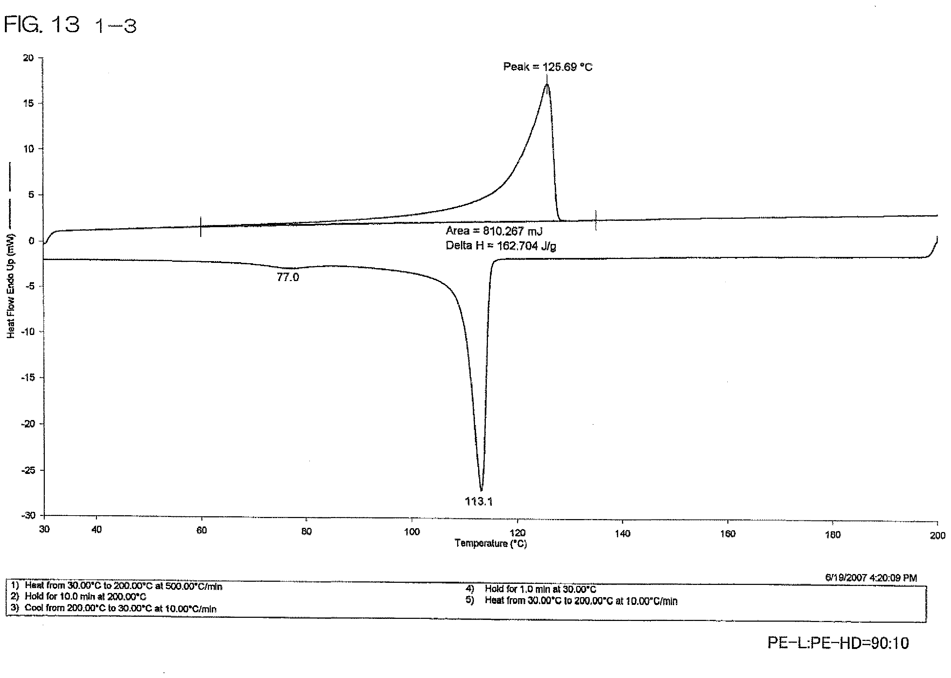

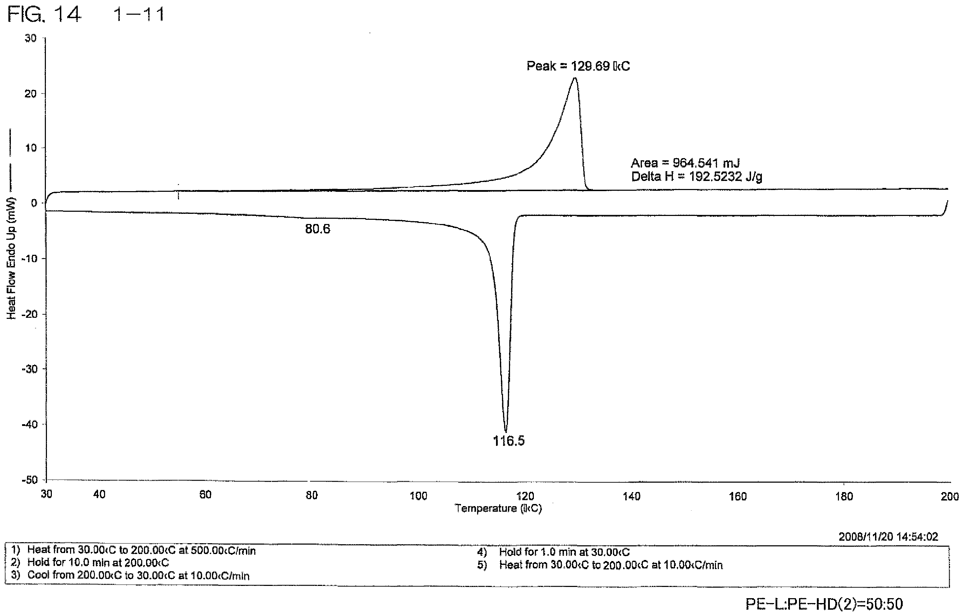

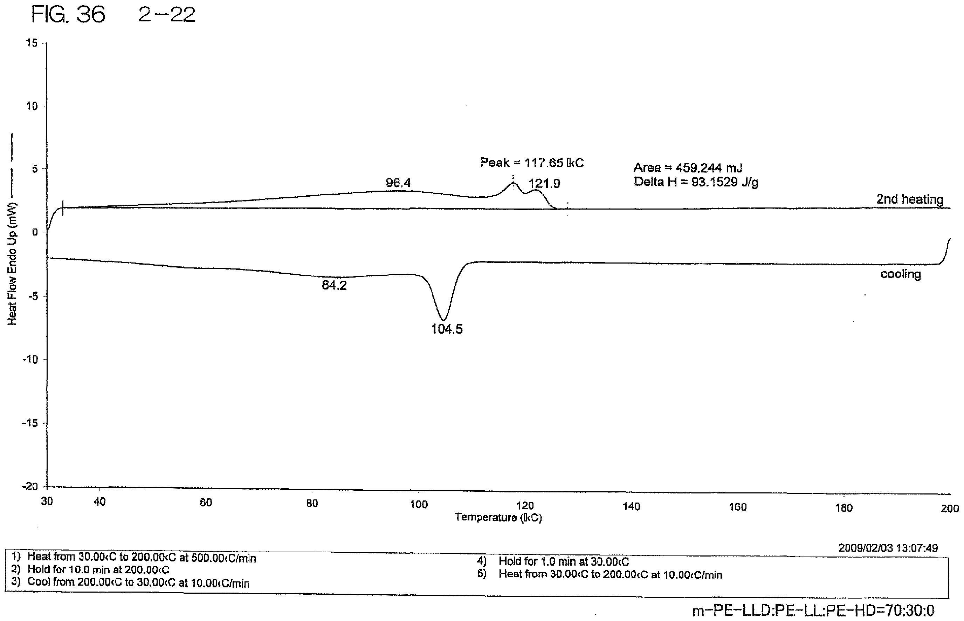

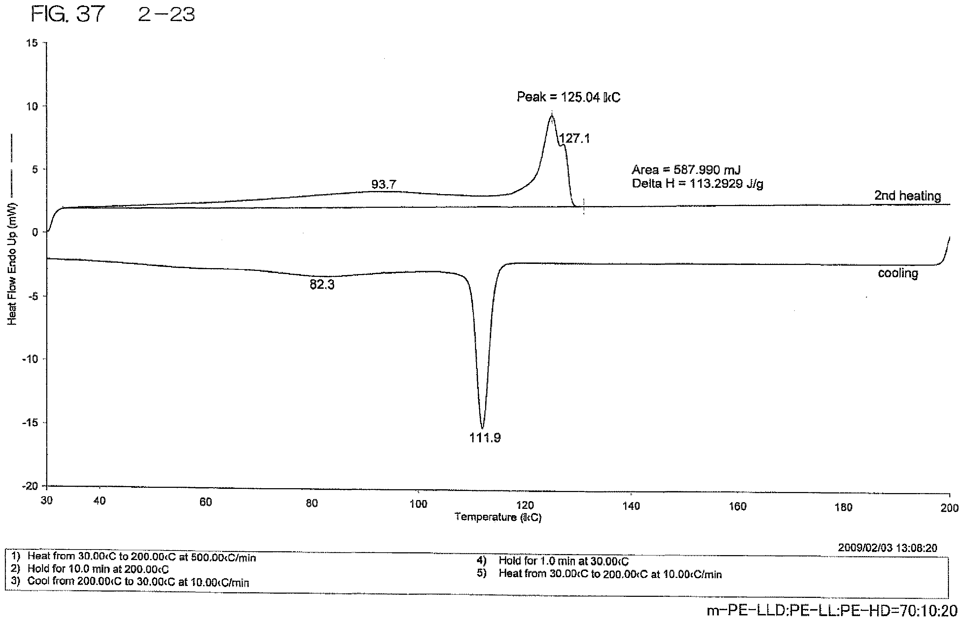

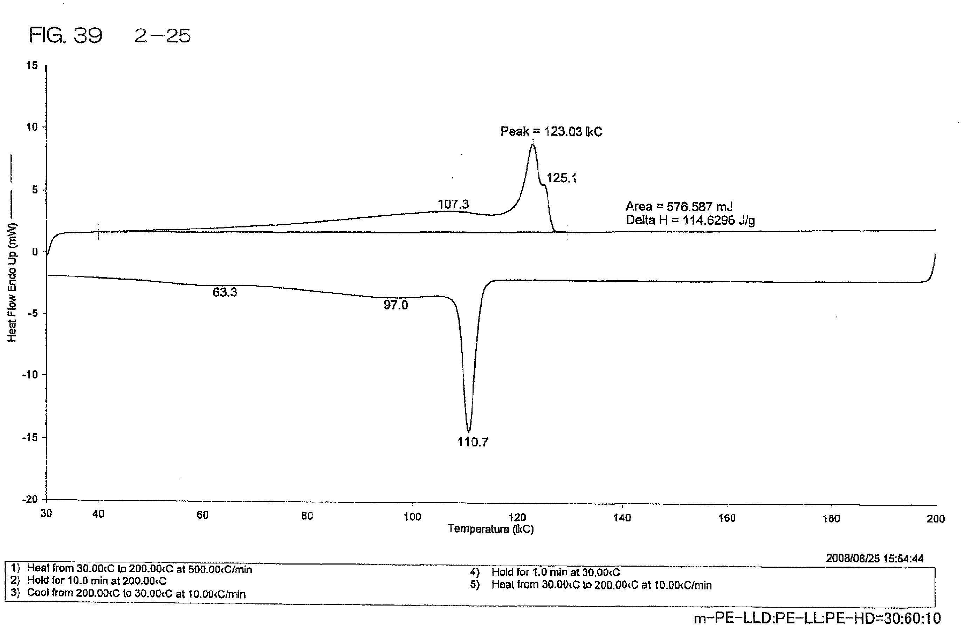

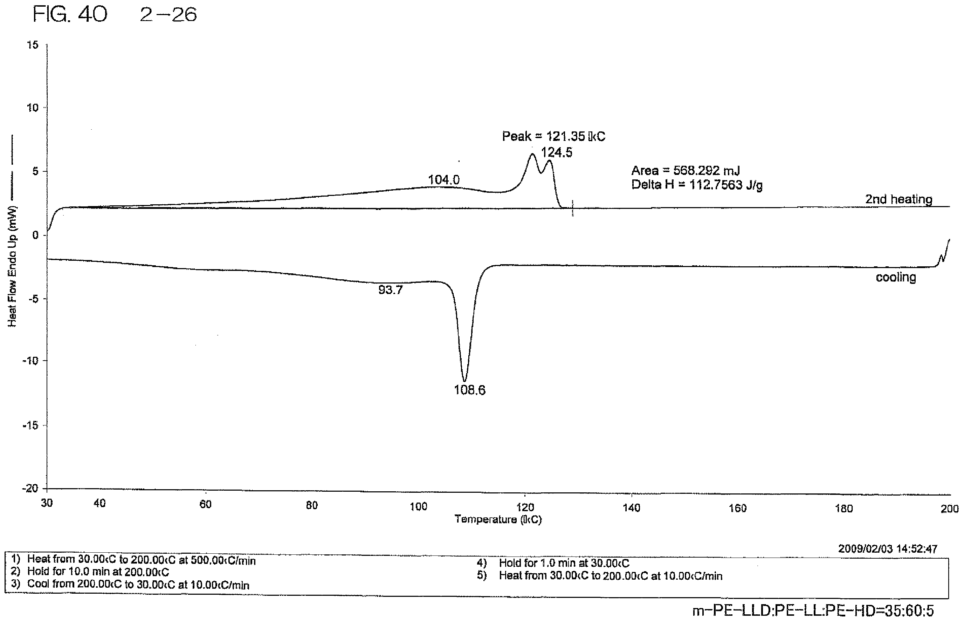

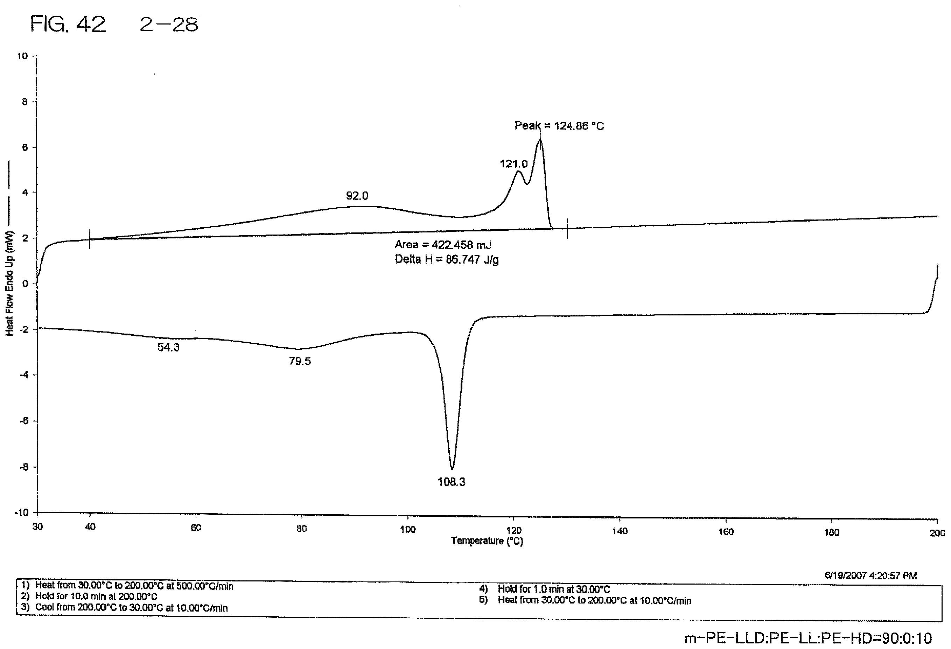

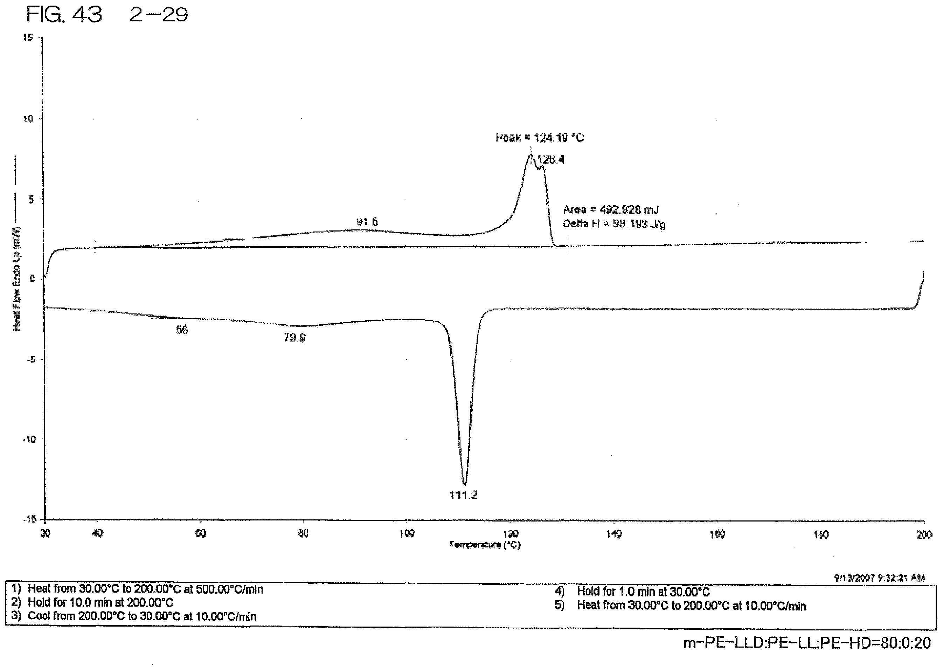

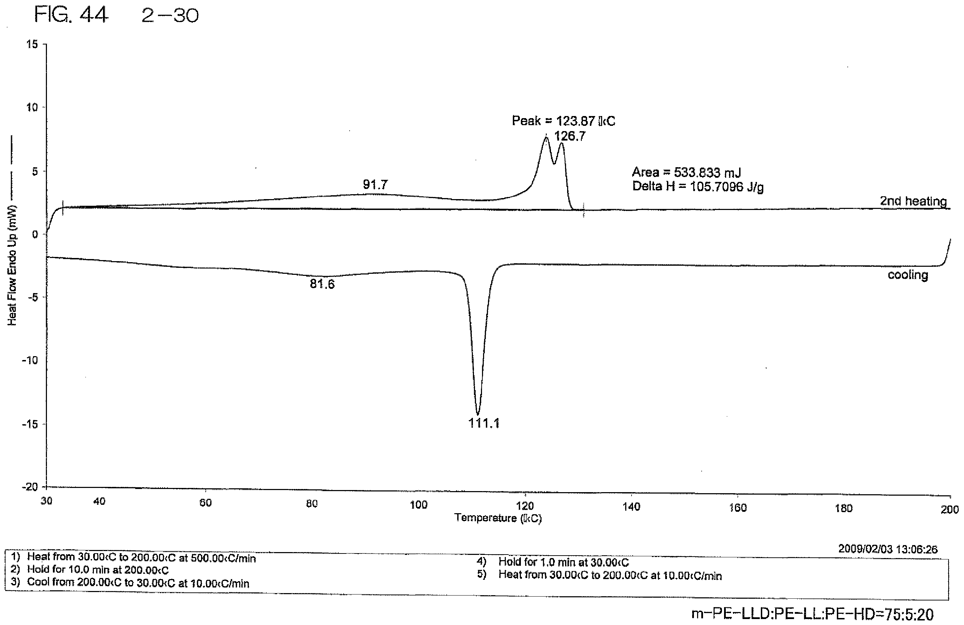

FIG. 5 to Fig. 44 are DSC curves obtained by differential scanning calorimetry (DSC).
FIG. 45 is a graph of a relationship of average density and oxygen permeability of a film with a thickness of 240 µm.
FIG. 46 is a graph of a relationship of oxygen permeability and water vapor permeability of a film with a thickness of 240µm.
FIG. 47 is a schematic arrangement diagram of a layer arrangement of a multilayer film (III) according to the second mode of the invention.
FIG. 48 is a schematic front view of a drug solution bag according to another embodiment of the present invention.
FIG. 49 is a schematic sectional view (section taken along a section plane A2-A2) of the drug solution bag of FIG. 48.

### [EMBODIMENTS OF THE INVENTION]

### <Multilayer Film (II)>

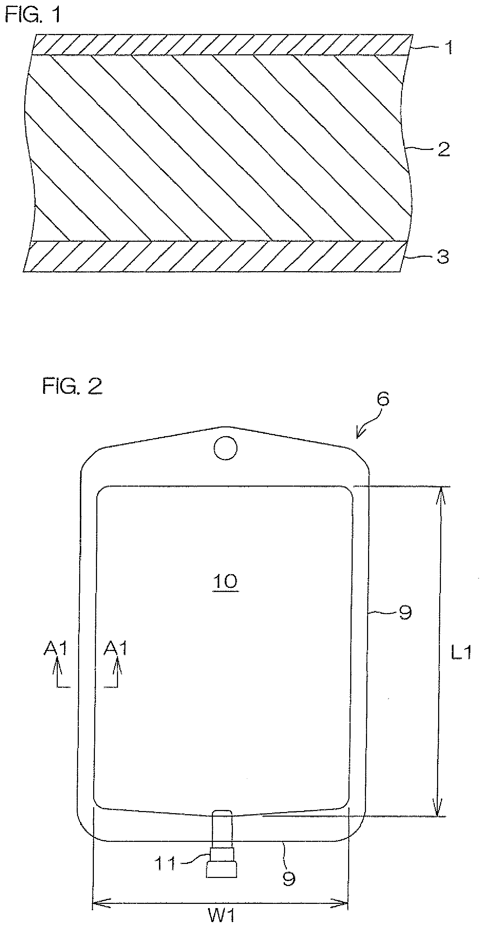

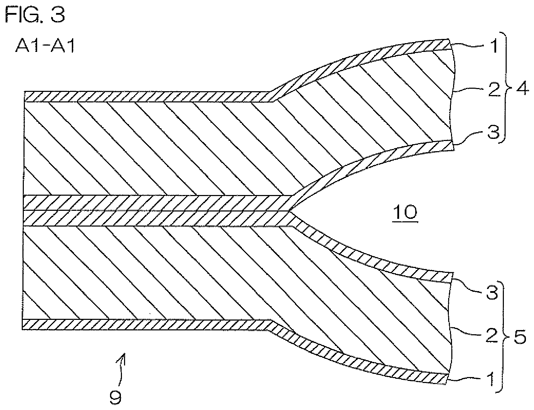

FIG. 1 is a schematic arrangement diagram of a layer arrangement of a multilayer film (II) according to the first mode of the invention. FIG. 2 is a schematic front view of a drug solution bag according to one embodiment of the present invention. FIG. 3 is a schematic sectional view (section taken along a section plane A1-A1) of the drug solution bag of FIG. 2.

The multilayer film (II) of the invention shall first be described with reference to FIG. 1. In the description that follows, portions that are the same or are of the same type shall be indicated by the same symbol throughout the plurality of embodiments.

Referring to FIG. 1, the multilayer film (II) includes: an A-1 layer 1 as a first layer; an A-2 layer 2 as a second layer laminated on the A-1 layer 1; and an A-3 layer 3 as a third layer laminated on the A-2 layer 2, and is made of a three-layer structure formed by the A-1 layer 1, the A-2 layer 2, and the A-3 layer 3 being laminated in that order.

The A-1 layer 1 is a layer disposed at a surface at one side of the multilayer film (II) and forms an outer layer of a drug solution bag 6 to be described below.

The A-1 layer 1 is made of a polyethylene or a mixture of two or more types of polyethylene having a DSC melting point > 126°C and ≤ 132°C and a density of 0. 940-0. 951 g/cm³ and a density higher than the density of the A-2 layer.

With each layer forming the multilayer film (II), the DSC melting point refers to a temperature of an apex of a melting peak of a DSC curve obtained by differential scanning calorimetry (DSC) (in a case where there are a plurality of peaks, the temperature of the peak of highest height), that is, a melting peak temperature Tₚₘ (°C) (the same applies hereinafter).

The DSC melting point can be measured, for example, by the following method (the same applies hereinafter).

First, approximately 1g of polyethylene pellets is sandwiched between Teflon (registered trademark) sheets of 100µm. To prepare the pellets in a case of measuring a polyethylene mixture made of a plurality of polyethylenes, a mixture in which the respective polyethylenes are mixed at appropriate proportions is heated to a resin temperature of 200°C, kneaded and extruded to a strand of approximately 2mm diameter by a uniaxial extruder, cooled with tap water, and cut into pellets.

The pellets sandwiched by the sheets are then left for 2 minutes in an atmosphere of 200°C and thereafter pressed for 10 seconds at 200°C. The sample that is thereby melted is immediately sandwiched by metal plates cooled with tap water to attain a thickness of 0.1-0.5 mm and cooled for 1 minute. After cooling, the sample is cut with a razor and a measurement sample of approximately 5mg is weighed out.

The measurement sample that has been cut is filled in an aluminum pan, raised in temperature from 30°C to 200°C at a heating rate of 500°C/minute, and held at 200°C for 10 minutes. Thereafter, the temperature is dropped to 30°C at a rate of 10°C/minute, and after holding for 1 minute at 30°C, the DSC melting point can be determined from an endothermic curve obtained during raising of the temperature to 200°C at a rate of 10°C/minute. As a specific commercially available example of a measurement apparatus, the Diamond DSC apparatus made by PerkinElmer, Inc. can be cited.

The density of polyethylene can be measured, for example, by the following method (the same applies hereinafter) .

The sample polyethylene or polyethylene mixture is loaded in a melt indexer set at 190°C, held therein for 6 minutes, and a strand is obtained at a load of 2.16kg in a case where an MFR is ≥ 1 g/10min and at a load of 5kg in a case where the MFR is 0.1-1 g/10min. The strand is cooled rapidly by being dropped directly onto a metal plate. The obtained strand is annealed for 30 minutes in boiling water and then cooled as it is to room temperature (30°C) over a period of 1 hour. Thereafter, the strand is taken out and cut to lengths of 2-3mm. The cut strands are loaded in a density gradient tube and the density is determined from a stationary position of the sample after 1 hour.

When the DSC melting point and the density of the polyethylene or the mixture of two or more types of polyethylene forming the A-1 layer 1 are within the abovementioned ranges, heat resistance and transparency are good. Thus, when a sterilization process at 118-121°C (hereinafter, the sterilization process at this temperature range shall be referred to as the "high-temperature sterilization process") is applied to the below-described drug solution bag 6 made from the multilayer film (II), occurrence of recrystallization due to the high-temperature sterilization process is low because the DSC melting point is adequately high and occurrence of problems, such as lowering of transparency or wrinkling, can be prevented. Further, excellent impact resistance, such as strength against impact, can be imparted to the drug solution bag 6 to be described below, and good adhesive strength (interlayer strength) can be realized between the A-1 layer 1 and the A-2 layer 2.

The DSC melting point of the polyethylene forming the A-1 layer 1 is preferably 127-130°C. Also, the density is preferably 0.940-0.949 g/cm³.

A polyethylene with which the DSC melting point and the density are within the abovementioned ranges may be used solitarily as the polyethylene forming the A-1 layer 1. Or, a mixture of two or more types of polyethylene prepared so that both the DSC melting point and the density of the mixture are within the abovementioned ranges may be used.

In a case where the polyethylene forming the A-1 layer 1 is a solitary linear polyethylene with which the DSC melting point and the density are within the abovementioned ranges, an ethylene-α-olefin copolymer can be cited as an example of such a linear polyethylene.

As examples of the α-olefin in the ethylene-α-olefin copolymer, α-olefins with 3 to 12 carbons, such as propylene, 1-butene, 1-pentene, 1-hexene, 4-methyl-1-pentene, 1-heptene, 1-octene, 1-nonene, 1-decene, 1-undecene, 1-dodecene, etc., can be cited. Any of these α-olefins may be used solitarily or two or more types may be mixed and used. Among the above examples, 1-butene, 1-pentene, 1-hexene, 4-methyl-1-pentene, 1-heptene, and 1-octene are preferable as the α-olefin, and 1-butene, 1-pentene, 1-hexene, and 4-methyl-1-pentene are more preferable. A proportion of the α-olefin contained in the ethylene-α-olefin copolymer is set suitably according to the density required of the ethylene-α-olefin copolymer.

Meanwhile, in a case where the polyethylene forming the A-1 layer 1 is a mixture of two or more types of polyethylene, a linear polyethylene and a high-density polyethylene can be cited as the polyethylenes forming the mixture. A mixture having the linear polyethylene as a main component and having the high-density polyethylene mixed therein can be cited as a preferable example.

The density of the linear polyethylene is preferably 0.932-0.944 g/cm³, and more preferably 0.934-0.939 g/cm³. When the density of the linear polyethylene falls below this range, a large amount of high-density polyethylene must be mixed to maintain the heat resistance, and degradation of transparency or lowering of impact resistance of the A-1 layer 1 may thereby occur. Also, when the above range is exceeded, balancing of heat resistance and transparency cannot be achieved, and the transparency cannot be improved even when the added amount of the high-density polyethylene is lessened.

Meanwhile, the density of the high-density polyethylene is preferably ≤ 0.970 g/cm³, more preferably 0.950-0.970 g/cm³, and especially preferably 0.955-0.968 g/cm³. When the density of the high-density polyethylene exceeds this range, the A-1 layer 1 becomes too high in rigidity, and flexibility of the multilayer film (II) as a whole may degrade. On the other hand, when the density of the high-density polyethylene falls below the above range, it may not be possible to impart an adequate heat resistance.

Mixing proportions of the linear polyethylene and the high-density polyethylene are set as suited according to the respective densities and the density required of the mixture.

As a preferred embodiment of the polyethylene mixture forming the A-1 layer 1, for example, a mixture made of 55-85 wt.-% of a linear polyethylene having a DSC melting point of 120-125°C and a density of 0.930-0.940 g/cm³ and 15-45 wt.-% of a high-density polyethylene having a density of 0.950-0.970 g/cm³ can be cited.

Also, in the case where the polyethylene forming the A-1 layer 1 is a mixture of two or more types of polyethylene, for example, polyethylenes that differ mutually in melt flow rate (MFR), may be used.

The thickness of the A-1 layer 1 is set as suited from a standpoint of, for example, impact resistance of the multilayer film (II) or the drug solution bag formed using the film and, for example, is preferably approximately 5-15% of a thickness of an entirety (hereinafter, "total thickness") of the multilayer film (II) .

Also, the thickness of the A-1 layer 1 is preferably 10-30 µm and more preferably 15-25 µm.

The A-2 layer 2 is a layer disposed between the A-1 layer 1 and the A-3 layer 3 and is a layer forming an intermediate layer of the drug solution bag 6 to be described below.

The A-2 layer 2 is made of a polyethylene mixture having a DSC melting point of 120-126°C and a density of 0.910-0.920 g/cm³.

When the DSC melting point and the density of the polyethylene mixture forming the A-2 layer 2 are within the abovementioned ranges, the transparency and the flexibility are good. Also, occurrence of problems, such as lowering of transparency or wrinkling, can thereby be prevented when the high-temperature sterilization process is applied to the below-described drug solution bag 6 made from the multilayer film (II). Further, good adhesive strength (interlayer strength) of the A-2 layer 2 with the A-1 layer 1 and the A-3 layer 3 can be realized.

The DSC melting point of the polyethylene mixture forming the A-2 layer 2 is preferably 122-126°C, and an upper limit of the density is preferably 0.918 g/cm³ and more preferably 0.916 g/cm³. When the upper limit of the density exceeds this range, the transparency decreases, and the impact resistance, as represented by a plate drop strength, may also decrease. When a lower limit of the density falls below the range, it becomes difficult to maintain the heat resistance, and deformation and whitening may occur.

The plate drop strength can be measured, for example, by the following method.

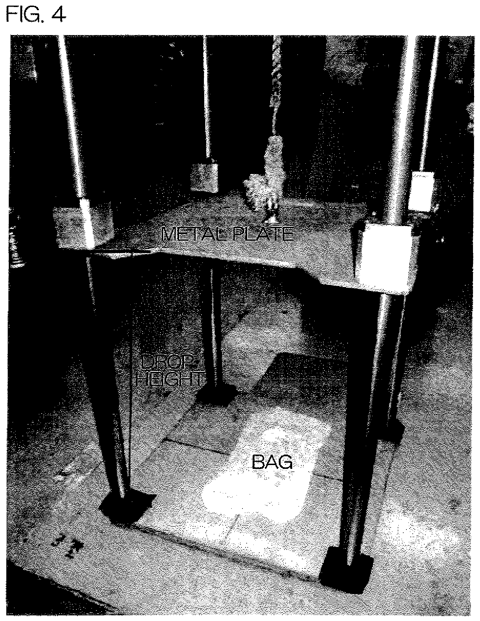

A drug solution bag (500mL) formed of the multilayer film (II) is immersed for not less than 5 hours in ice water at 0°C and then taken in an adequately cooled state. Then as shown in FIG. 4, the drug solution bag is placed on an iron plate, and from above, a metal plate of 6.8kg (approximately 37cmx37cm in size and 0.5cm in thickness) is dropped onto the drug solution bag with a surface of the metal plate being parallel to the drug solution bag. The plate drop strength is measured by measuring a height (drop height) of the metal plate at which the drug solution bag ruptures.

The polyethylene forming the A-2 layer 2 is a mixture comprising 10-55 wt.-% of a linear polyethylene having a density of 0.910-0.930 g/cm³; 5-15 wt.-% of a high-density polyethylene having a density of 0.950-0.970 g/cm³; and 35-85 wt.-% of a linear polyethylene having a density of 0.900-0.910 g/cm³ and polymerized using a single-site catalyst.

This is because even with the same density and DSC melting point, a linear polyethylene polymerized using a single-site catalyst contains hardly any α-olefin copolymers, is low in components that give rise to large crystals, and is thus high in transparency as well as excellent in impact resistance due to there being a large number of tie molecules between crystals.

The lower limit of the density of the linear polyethylene polymerized using the single-site catalyst is preferably 0.901 g/cm³ and more preferably 0.902 g/cm³. When the lower limit of the density falls below this limit, it may not be possible to maintain the heat resistance of the A-2 layer 2. Meanwhile, the upper limit of the density of the linear polyethylene polymerized using the single-site catalyst is preferably 0.907 g/cm³ and more preferably 0.906 g/cm³. When the upper limit of the density exceeds this limit, the transparency may degrade.

The lower limit of the density of the linear polyethylene is preferably 0.912 g/cm³ and more preferably 0.915 g/cm³. When the lower limit of the density falls below this limit, a large amount of high-density polyethylene must be mixed to maintain the heat resistance, and degradation of the transparency of the A-2 layer 2 may thereby occur. Also, the upper limit of the density of the linear polyethylene is preferably 0.927 g/cm³ and more preferably 0.925 g/cm³. When the upper limit of the density exceeds this limit, the transparency cannot be improved even when the added amount of the high-density polyethylene is lessened. The density and preferable examples of the high-density polyethylene are the same as those of the A-1 layer 1.

Mixing proportions of the linear polyethylene polymerized using a single-site catalyst, the linear polyethylene, and the high-density polyethylene are set as suited according to the respective densities and the density required of the mixture.

The polyethylene forming the A-2 layer 2is a mixture made of 35-85 wt.-% (preferably 50-85 wt.-% and more preferably 60-80 wt.-%) of a linear polyethylene polymerized using a single-site catalyst and having a density of 0.900-0.910 g/cm³, 10-55 wt.-% (preferably 10-40 wt.-% and more preferably 10-30 wt.-%) of a linear polyethylene having a density of 0.910-0.930 g/cm³, and 5-15 wt.-% of a high-density polyethylene having a density of 0.950-0.970 g/cm³.

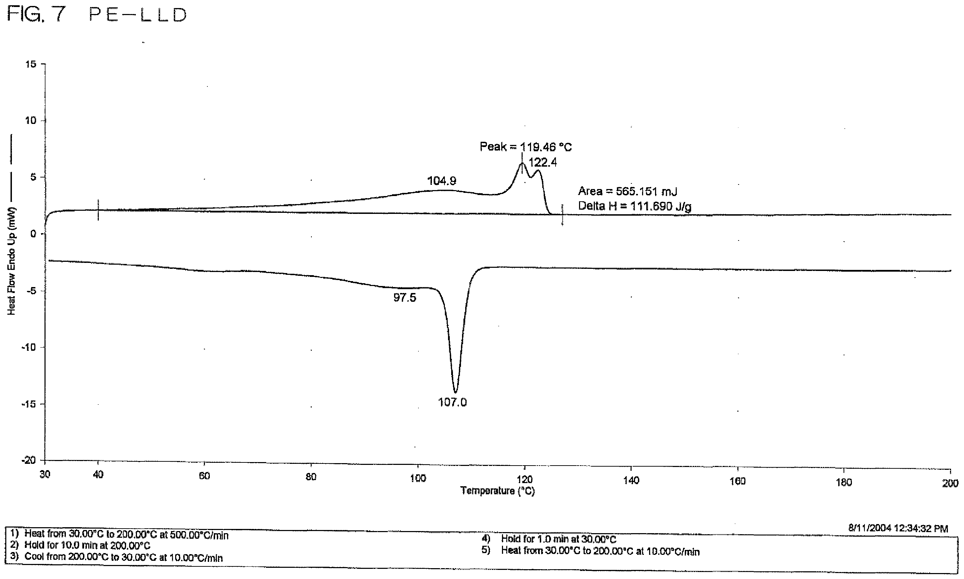

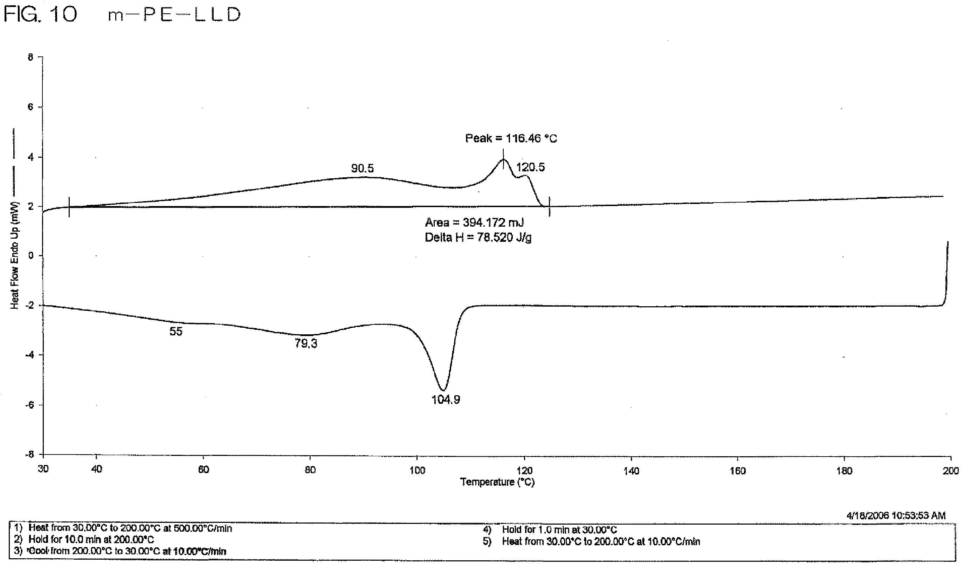

Also preferably, peaks of the DSC curve of the linear polyethylene polymerized using a single-site catalyst and having a density of 0.900-0.910 g/cm³ include at least the DSC melting point peak in the range of 115-125°C and a second peak, lower than the height of the DSC melting point peak, in the range of 85-110°C in addition to the DSC melting point peak as shown in FIG. 10. Also preferably, peaks of the DSC curve of the linear polyethylene having the density of 0.910-0.930 g/cm³ include at least the DSC melting point peak in the range of 115-125°C and a second peak, lower than the height of the DSC melting point peak, in the range of 85-110°C in addition to the DSC melting point peak as shown in FIG. 7.

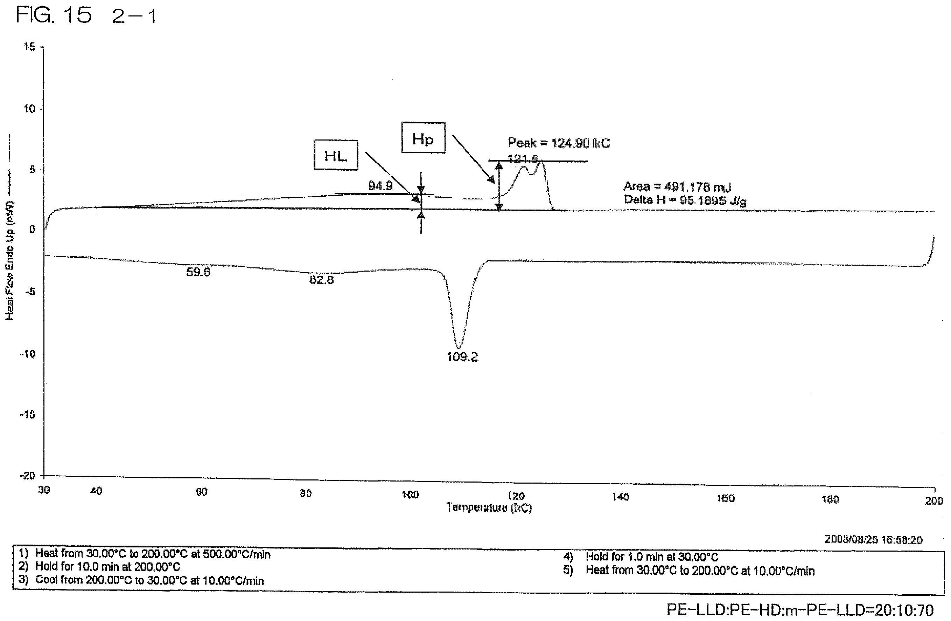

Preferably, the DSC curve of the polyethylene mixture in which these polyethylenes are mixed (m-PE-LLD+PE-LLD+PE-HD) satisfies all of the following conditions (1) - (3) as shown in FIG. 15.
(1) The DSC curve has the DSC melting point peak in a range of 120-126°C and a second peak, lower than the height of the DSC melting point peak, in a range of 90-105°C.
(2) ΔH is ≥ 85 J/g. Here, ΔH is a heat quantity required for all crystals in the polyethylene to melt. A baseline for computing ΔH is formed by extending a slope of a line of a portion beyond a peak at a highest temperature side to a low temperature side. ΔH is a sum of the portion above the baseline.
(3) A ratio of the height HL of the second peak with respect to the height Hp of the DSC melting point peak (HL/Hp) is 0.20-0.50. HL/Hp is a ratio of values of HL and Hp measured from a DSC chart using a ruler.

By HL/Hp being in the above range, the film can be improved in transparency and heat resistance. It thereby becomes possible to maintain the heat resistance while keeping the transparency. The DSC measurement method is the method described in the description of the DSC melting point.

The multilayer film (II) has good flexibility and impact resistance because the polyethylenes of the above composition with which the DSC melting points and the densities are respectively within the abovementioned ranges are used in the A-2 layer 2 of the multilayer film (II). Also, occurrence of problems, such as lowering of transparency or wrinkling, after the high-temperature sterilization process can thereby be prevented. Further, good adhesive strength (interlayer strength) between the A-1 layer 1 and the A-2 layer 2 and good adhesive strength (interlayer strength) between the A-2 layer 2 and the A-3 layer 3 can be realized in the drug solution bag 6 to be described below.

The thickness of the A-2 layer 2 is set as suited from a standpoint of flexibility, etc., of the multilayer film (II) or the drug solution bag formed using the film and, for example, is preferably approximately 60-90% and more preferably approximately 80-90% of the total thickness of the multilayer film (II) .

Also, the thickness of the A-2 layer 2 preferably is 140-250 µm, more preferably 160-240 µm, and even more preferably 180-240 µm.

The A-3 layer 3 is a layer that is disposed at a surface at the other side of the multilayer film (II) and forms an inner layer of the drug solution bag 6 to be described below.

As with the A-1 layer 1, the A-3 layer 3 is formed of polyethylene, with the DSC melting point thereof being > 125°C and ≤ 130°C and the density thereof being higher than the density of the A-2 layer, and preferably being 0.937-0.946 g/cm³.

When the DSC melting point and the density of the polyethylene forming the A-3 layer 3 are within the abovementioned ranges, heat resistance and transparency are good. Also, occurrence of problems, such as lowering of transparency or wrinkling, can thereby be prevented when a high-temperature sterilization process is applied to the below-described drug solution bag 6 made from the multilayer film (II). Further, occurrence of a phenomenon (whitening phenomenon) in which the inner layer (the A-3 layer 3) of the drug solution bag whitens at a headspace portion can be prevented. This phenomenon is considered to occur due to a portion of the inner layer melting and the surface roughening during high-temperature sterilization. Also, good adhesive strength (interlayer strength) can be realized between the A-3 layer 3 and the A-2 layer 2.

The DSC melting point of the polyethylene forming the A-3 layer 3 is preferably 126-129°C, and the density is preferably 0.939-0.945 g/cm³.

A polyethylene with which the DSC melting point and the density are within the abovementioned ranges may be used solitarily as the polyethylene forming the A-3 layer 3. Or, a mixture of two or more types of polyethylene prepared so that both the DSC melting point and the density of the mixture are within the abovementioned ranges may be used.

Meanwhile, in a case where the polyethylene forming the A-3 layer 3 is a mixture of two or more types of polyethylene, a linear polyethylene and a high-density polyethylene can be cited as the polyethylenes forming the mixture. A mixture having the linear polyethylene as the main component and having the high-density polyethylene mixed therein can be cited as a preferable example.

As a preferred embodiment of the polyethylene mixture forming the A-3 layer 3, for example, a mixture made of 70-85 wt.-% of a linear polyethylene having a DSC melting point of 120-125°C and a density of 0.930-0.940 g/cm³ and 15-30 wt.-% of a high-density polyethylene having a density of 0.950.0.970 g/cm³ can be cited.

The A-3 layer 3 is usable with both the density and the DSC melting point being in regions lower than those of the A-1 layer 1 because whereas the A-1 layer 1 is put in direct contact with hot water or shower of high temperature during high-temperature sterilization, the A-3 layer 3 is not put in direct contact. The transparency is further improved thereby.

Also, in the case where the polyethylene forming the A-3 layer 3 is a mixture of two or more types of polyethylene, for example, polyethylenes that differ mutually in melt flow rate (MFR), may be used.

The heat resistance of the multilayer film (II) is good because in the multilayer film (II), the polyethylenes of the above composition with which the DSC melting points and the densities are respectively within the abovementioned ranges are used in the A-3 layer 3. Also, occurrence of problems, such as lowering of transparency or wrinkling, after the high-temperature sterilization process can be prevented. Further, excellent impact resistance, such as strength against impact, can be imparted to the drug solution bag 6 to be described below. Also, good adhesive strength (interlayer strength) can be realized between the A-3 layer 3 and the A-2 layer 2.

The thickness of the A-3 layer 3 is set as suited from a standpoint of e.g. mechanical strength of the multilayer film (II) or the drug solution bag formed using the film and, for example, is preferably approximately 5-25% of the total thickness of the multilayer film (II).

Also, the thickness of the A-3 layer 3 is preferably 15-45 µm and more preferably 20-40 µm.

With the multilayer film (II) having, for example, a total thickness of 240µm, an oxygen permeability at 25°C and a humidity (RH) of 60% within 12 hours after the high-temperature sterilization process is, for example, 660-860 cc/m²·day·atm. Also, a water vapor permeability of the multilayer film (II) as measured in conformance to method A (humidity sensor method) defined in JIS K 7129 (1992) is, for example, 1.3-2.2 g/ m²·day at 25°C and RH 90%.

A method for manufacturing the multilayer film (II) is not restricted in particular, and water-cooling and air-cooling co-extrusion inflation methods, a co-extrusion T-die method, a dry lamination method, an extrusion lamination method, etc., can be cited as examples. Among these, the water-cooling co-extrusion inflation method and the co-extrusion T-die method can be cited as preferable methods from a standpoint of characteristics, in particular, transparency of the multilayer film (II), economy of manufacture of the multilayer film (II) and sanitation properties of the multilayer film (II).

Although in any of the above methods, the manufacture of the multilayer film (II) must be carried out at a temperature at which the resins forming the respective layers melt, if the manufacturing temperature is too high, a portion of the resins may undergo thermal decomposition and cause lowering of performance due to decomposition products. The manufacturing temperature of the multilayer film (II) is thus preferably 150-250°C and more preferably 170-200°C but is not restricted thereto.

The multilayer film (II) is excellent in characteristics such as transparency, flexibility, heat resistance with respect to high-temperature sterilization process and mechanical strength. The multilayer film (II) is thus favorable as a forming material of a drug solution bag, such as an infusion solution bag.

The bag according to the present invention shall now be described with reference to FIG. 2 and FIG. 3. In the present embodiment, the drug solution bag 6 is prepared and formed with the A-1 layer 1 of the multilayer film (II), shown in FIG. 1, as the outermost layer and the A-3 layer 3 as the innermost layer. Also, the drug solution bag 6 includes a peripheral sealed portion 9 formed by mutually overlapping the A-3 layers 3 of two multilayer films (II) 4, 5 and heat sealing peripheral portions thereof.

The peripheral sealed portion 9 can also be formed by forming the multilayer film (II) to a bag shape or a tube shape by an inflation method so that the A-3 layer 3 is disposed at the inner side and heat sealing a peripheral portion of the bag-shaped or tube-shaped multilayer film (II) thus obtained.

A container portion 10 of the drug solution bag 6 is defined by the peripheral sealed portion 9. The drug solution bag 6 is a single chamber bag that includes the single container portion 10 in its interior.

At a portion of the peripheral sealed portion 9, a tube member 11, for making, for example, a drug solution, flow in and out between the container portion 10 and an exterior of the drug solution bag 6, is heat sealed in a state of being sandwiched by the two multilayer films (II) 4, 5.

The peripheral sealed portion 9 is formed, for example, by overlapping the two multilayer films (II) 4, 5 so that the respective A-1 layers 1 are the outer layers and the respective A-3 layers 3 are the inner layers and thereafter heat sealing the respective A-1 layer 1 side surfaces of peripheral portions of the overlapped multilayer films (II) 4, 5 by a heat sealing die.

Conditions of the heat sealing by the heat sealing die are not restricted in particular and, for the multilayer film (II) with a total thickness of 180-280µm, the die temperature is preferably 130-200°C and more preferably 150-180°C. Also, in this case, the pressure is preferably 0.1-0.8 MPa and more preferably 0.15-0.5 MPa. Further, in this case, the press time is preferably 1-5 seconds and more preferably 1.5-3 seconds.

The tube member 11 is not restricted in particular and a known tube member can be applied. For example, the tube member 11 is a member for making the drug solution, contained inside the container portion 10 of the drug solution bag 6, flow out to the exterior of the drug solution bag 6 or for making the drug solution flow into the container portion 10 from the exterior of the drug solution bag 6, and normally, a sealing member (for example, a rubber stopper), which is for sealing the tube member 11 and is pierceable by a hollow needle, etc., is disposed in an interior thereof.

With the drug solution bag 6 shown in FIG. 2, a method for making a drug solution or other content be contained and sealed inside the container portion 10 is not restricted in particular and a known method can be employed.

Also, after the drug solution or other content is contained and sealed inside the container portion 10, the drug solution bag 6 is subject to a sterilization process.

The sterilization process method is not restricted in particular and, for example, a known heat sterilization method, such as high-pressure steam sterilization or hot water shower sterilization, can be applied.

The sterilization process temperature in such a heat sterilization process is generally approximately 105-110°C, and the sterilization process temperature may be set at 118-121°C in accordance with, for example, the type, usage or usage environment of the drug solution.

The drug solution bag 6 is formed using the multilayer film (II) according to the present invention and is thus extremely high in heat resistance with respect to the high-temperature sterilization process. Thus, even in a case where a sterilization process at 118-121°C (high-temperature sterilization process) is applied to the drug solution bag, appropriate flexibility and good transparency can be maintained.

### <Multilayer Film (III)>

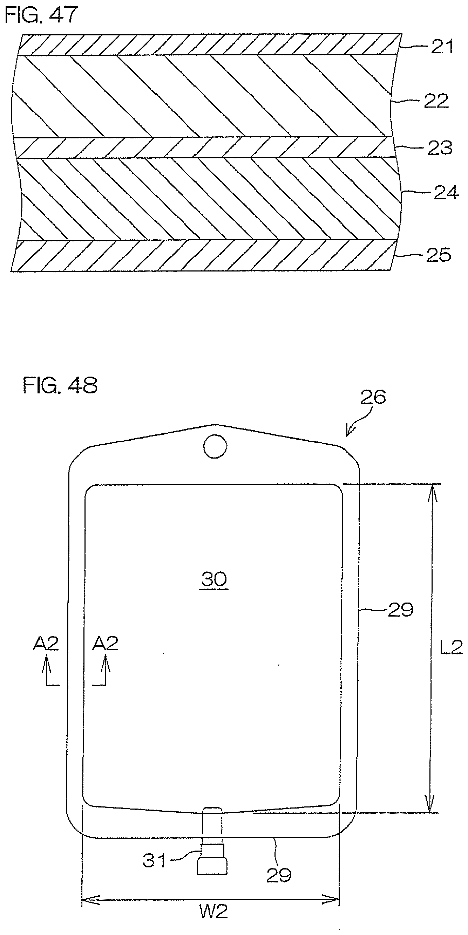

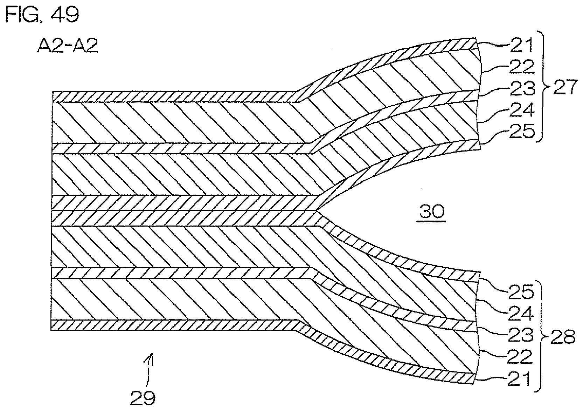

FIG. 47 is a schematic arrangement diagram of a layer arrangement of a multilayer film (III) according to the second mode of the invention. FIG. 48 is a schematic front view of a drug solution bag according to another embodiment of the present invention. FIG. 49 is a schematic sectional view (section taken along a section plane A2-A2) of the drug solution bag of FIG. 48.

The multilayer film (III) of the invention shall now be described with reference to FIG. 47.

Referring to FIG. 47, the multilayer film (III) includes: a B-1 layer 21; a B-2 layer 22 laminated on the B-1 layer 21; a B-3 layer 23 laminated on the B-2 layer 22; a B-4 layer 24 laminated on the B-3 layer 23; and a B-5 layer 25 laminated on the B-4 layer 24.

The B-1 layer 21 is a layer that is disposed at a surface at one side of the multilayer film (III) and forms an outermost layer of a drug solution bag 26 to be described below.

The B-1 layer 21 is formed of a polyethylene with a DSC melting point > 125°C and ≤ 130°C and a density of 0.935-0.946 g/cm³.

With each layer forming the multilayer film (III), the DSC melting point refers to the temperature of the apex of the melting peak of the DSC curve obtained by differential scanning calorimetry (DSC) (in a case where there are a plurality of peaks, the temperature of the peak of highest height), that is, the melting peak temperature Tₚₘ(°C) (the same applies hereinafter) .

The DSC melting point can be measured, for example, by the same method as the method described for the embodiment of the multilayer film (II).

The density is measured by the following method (the same applies hereinafter).

The sample polyethylene is loaded into a melt indexer set at 200°C and a strand is obtained. The strand is dropped directly onto a metal plate. The obtained strand is annealed for 30 minutes in boiling water and thereafter cooled as it is to room temperature (30°C) over a period of 1 hour. Thereafter, the strand is taken out, cut to lengths of 2-3 mm, loaded in a density gradient tube, and the density is determined from the stationary position of the sample after 1 hour.

When the DSC melting point and the density of the polyethylene forming the B-1 layer 21 of the multilayer film (III) are within the abovementioned ranges, the heat resistance and transparency are good. Also, occurrence of problems, such as lowering of transparency or wrinkling, can thereby be prevented even when a sterilization process at 118-121°C (hereinafter, the sterilization process at this temperature range shall be referred to as the "high-temperature sterilization process") is applied to the drug solution bag 26 made from the multilayer film (III) . Further, excellent mechanical strength, such as strength against impact, can be imparted to the drug solution bag 26 to be described below, and good adhesive strength (interlayer strength) can be realized between the B-1 layer 21 and the B-2 layer 22.

The DSC melting point of the polyethylene forming the B-1 layer 21 is preferably ≥ 126°C and ≤ 129°C, and the density is preferably 0.937-0.943 g/cm³.

The polyethylene forming the B-1 layer 21 is a linear polyethylene mixture comprising 75-90 wt.-% of a linear polyethylene having a DSC melting point of 120-125°C and a density of 0.930-0.940 g/cm³; and 10-25 wt.-% of a high-density polyethylene having a density of 0.950-0.970 g/cm³.

The density of the linear polyethylene is preferably 0.932-0.944 g/cm³, and more preferably 0.934-0.939 g/cm³. When the density of the linear polyethylene falls below this range, a large amount of high-density polyethylene must be mixed to maintain the heat resistance, and degradation of transparency or lowering of mechanical strength of the B-1 layer 21 may thereby occur. Also, when the above range is exceeded, balancing of heat resistance and transparency cannot be achieved and the transparency cannot be improved even when the added amount of the high-density polyethylene is lessened.

Meanwhile, the density of the high-density polyethylene is 0.950-0.970 g/cm³, and preferably 0.955-0.968 g/cm³. When the density of the high-density polyethylene exceeds this range, the B-1 layer 21 becomes too high in rigidity, and flexibility of the multilayer film (III) as a whole may degrade, and when the density falls below the above range, it may not be possible to impart an adequate heat resistance.

Mixing proportions of the linear polyethylene and the high-density polyethylene are set as suited according to the respective densities and the density required of the mixture.

The thickness of the B-1 layer 21 is set as suited from e.g. a standpoint of the mechanical strength of the multilayer film (III) or the drug solution bag formed using the film and, for example, is preferably approximately 5-15% of the total thickness of the multilayer film (III).

Also, for example, in a case where the total thickness of the multilayer film (III) is 180-260 µm, the thickness of the B-1 layer 21 is preferably 10-30 µm and more preferably 15-25 µm.

The B-2 layer 22 is a layer disposed between the B-1 layer 21 and the B-3 layer 23 to be described below and is a layer forming an outer intermediate layer of the drug solution bag 26 to be described below.

The B-2 layer 22 is formed of a polyethylene with a DSC melting point of 120-126°C and a density of 0. 910-0. 920 g/cm³.

When the DSC melting point and the density of the polyethylene forming the B-2 layer 22 of the multilayer film (III) are within the abovementioned ranges, the flexibility is good. Also, occurrence of problems, such as lowering of transparency or wrinkling, can thereby be prevented even when the high-temperature sterilization process is applied to the drug solution bag made from the multilayer film (III) . Further, good adhesive strength (interlayer strength) of the B-2 layer 22 with the B-1 layer 21 and the B-3 layer 23 to be described below can be realized.

The DSC melting point of the polyethylene forming the B-2 layer 22 is preferably 122-126°C, and the upper limit of the density is preferably 0.918 g/cm³ and more preferably 0.916 g/cm³. When the upper limit of the density exceeds the abovementioned range, the transparency decreases, and strength against impact, as represented by the plate drop strength, also decreases. When the lower limit of the density falls below the range, it becomes difficult to maintain the heat resistance, and deformation and whitening occur.

The plate drop strength can be measured, for example, by the same method as the method described for the embodiment of the multilayer film (II).

The polyethylene forming the B-2 layer 22 is a mixture comprising 35-85 wt.-% of a linear polyethylene having a density of 0.900-0.910 g/cm³ and polymerized using a single-site catalyst; 0-55 wt.-% of a linear (low-density or medium-density) polyethylene having a density of 0.910-0.930 g/cm³; and 5-15 wt.-% of a high-density polyethylene having a density of 0.950-0.970 g/cm³.

The lower limit of the density of the linear low-density polyethylene polymerized using the single-site catalyst is preferably 0.901 g/cm³ and more preferably 0.902 g/cm³. When the lower limit of the density falls below this limit, it may not be possible to maintain the heat resistance of the B-2 layer 22. The upper limit of the density is preferably 0.907 g/cm³ and more preferably 0.906 g/cm³. When the upper limit of the density exceeds this limit, the transparency may degrade.

The lower limit of the density of the linear low-density or medium-density polyethylene is preferably 0.912 g/cm³ and more preferably 0.915 g/cm³. When the density of the linear low-density or medium-density polyethylene falls below the lower limit, a large amount of the high-density polyethylene must be mixed to maintain the heat resistance, and degradation of the transparency of the B-2 layer 22 may thereby occur. The upper limit is preferably 0.927 g/cm³ and more preferably 0.925 g/cm³. When the upper limit is exceeded, the transparency cannot be improved even when the added amount of the high-density polyethylene is lessened. Also, the density and preferable examples of the high-density polyethylene are the same as those of the B-1 layer 21.

Mixing proportions of the linear low-density polyethylene polymerized using the metallocene catalyst, the linear low-density or medium-density polyethylene, and the high-density polyethylene are set as suited according to the respective densities and the density required of the mixture.

Further, preferably, peaks of the DSC curve of each of the linear polyethylene (m-PE-LLD) polymerized using the single-site catalyst and having the density of 0.900-0.910 g/cm³ and the linear polyethylene (PE-LLD) having the density of 0.910-0.930 g/cm³ include, in addition to the DSC melting point, a peak lower than the DSC melting point at a portion at 85-110°C and at least a single peak in the range of 115-125°C as shown in FIGS. 10 and 7, and consequently all of the following conditions are satisfied as shown in FIG. 15.
- The DSC curve has a DSC melting point peak at 120-126°C and a peak, lower than the DSC melting point, at 90-105°C.
- ΔH is not less than 85 J/g. Here, ΔH is the heat quantity required for all crystals to melt.
- The ratio HL/Hp of the height HL of the peak, lower than the DSC melting point, at 90-105°C and the height Hp of the DSC melting point peak at 120-126°C is 0.20-0.50 (Table 5).

It thereby becomes possible to maintain the heat resistance while keeping the transparency. The DSC measurement method is the method described in the description of the DSC melting point.

The multilayer film (III) has good flexibility and impact resistance because the polyethylenes of the above composition with which the DSC melting points and the densities are respectively within the abovementioned ranges are used in the B-2 layer 22 of the multilayer film (III). Also, occurrence of problems, such as lowering of transparency or wrinkling, after the sterilization process can thereby be prevented. Further, good adhesive strength (interlayer strength) between the B-1 layer 21 and the B-2 layer 22 and good adhesive strength (interlayer strength) between the B-2 layer 22 and the B-3 layer 23 to be described below can be realized in the drug solution bag to be described below.

The thickness of the B-2 layer 22 is set as suited from a standpoint of e.g. flexibility of the multilayer film (III) or the drug solution bag formed using the film and, for example, is preferably approximately 30-60% and more preferably approximately 40-50% of the total thickness of the multilayer film (III) .

Also, for example, in a case where the total thickness of the multilayer film (III) is 180-260 µm, the thickness of the B-2 layer 22 is preferably 70-110 µm, and more preferably 70-100 µm. Also, the thickness of B-2 layer 22 is preferably 0.8-1.25 times the thickness of the B-4 layer 24 to be described below and especially preferably the same as the thickness of the B-4 layer 24.

The B-3 layer 23 is a layer that is disposed opposite the B-1 layer 21 across the B-2 layer 22 and is a layer that forms an intermediate layer of the drug solution bag 26 to be described below.

The B-3 layer 23 comprises a linear polyethylene with a DSC melting point of 120-125°C and a density of 0.930-0.940g/cm³.

When the DSC melting point and the density of the polyethylene forming the B-3 layer 23 of the multilayer film (III) are within the abovementioned ranges, the heat resistance of the multilayer film (III) is good. Also, occurrence of problems, such as wrinkling can thereby be prevented even when the high-temperature sterilization process is applied to the drug solution bag made from the multilayer film (III), and deformation of the multilayer film (III) after the high-temperature sterilization process can be suppressed. Further, good adhesive strength (interlayer strength) of the B-3 layer 23 with the B-2 layer 22 and the B-4 layer 24 to be described below can be realized.

The DSC melting point of the polyethylene forming the B-3 layer 23 is preferably 123-125°C, and the density is preferably 0.934-0.939 g/cm³.

A polyethylene with which the DSC melting point and the density are within the abovementioned ranges may be used solitarily as the polyethylene forming the B-3 layer 23. Or, a mixture of two or more types of polyethylene prepared so that both the DSC melting point and the density of the mixture are within the abovementioned ranges may be used.

Meanwhile, in a case where the polyethylene forming the B-3 layer 23 is a mixture of two or more types of polyethylene, a linear low-density or medium-density polyethylene and a high-density polyethylene can be cited as the polyethylenes forming the mixture, and a mixture having the linear low-density or medium-density polyethylene as the main component and having the high-density polyethylene mixed therein can be cited as a preferable example.

In this case, the density and preferable examples of the linear low-density or medium-density polyethylene, the density and preferable examples of the high-density polyethylene, and the mixing proportions of the linear low-density or medium-density polyethylene and the high-density polyethylene are the same as those in the case of mixing a linear low-density or medium-density polyethylene and a high-density polyethylene in the B-1 layer 21.

Also, in the case where two or more types of polyethylene are to be mixed, for example, a mixture, containing two or more types of ethylene-α-olefin copolymers that differ mutually in melt flow rate (MFR), as the polyethylenes, may be used.

Also, by using a high pressure method polyethylene in combination in the B-3 layer, thinning of the film due to heat sealing or heat sealing of other parts can be prevented without degradation of transparency and flexibility.

The thickness of the B-3 layer 23 is set as suited from a standpoint of e.g. the mechanical strength of the multilayer film (III) or the drug solution bag formed using the film and, for example, is preferably approximately 5-15% of the total thickness of the multilayer film (III).

Also, for example, in a case where the total thickness of the multilayer film (III) is 180-260 µm, the thickness of the B-3 layer 23 is preferably 10-30 µm and more preferably 15-25 µm.

The B-4 layer 24 is a layer disposed opposite the B-2 layer 22 across the B-3 layer 23 and is a layer forming an inner intermediate layer of the drug solution bag 26 to be described below.

The B-4 layer 24 is formed of a polyethylene with a DSC melting point of 120-126°C and a density of 0.910-0.920 g/cm³.

When the DSC melting point and the density of the polyethylene forming the B-4 layer 24 of the multilayer film (III) are within the abovementioned ranges, the flexibility is good. Also, occurrence of problems, such as lowering of transparency or wrinkling, can thereby be prevented even when the high-temperature sterilization process is applied to the drug solution bag made from the multilayer film (III) . Further, good adhesive strength (interlayer strength) of the B-4 layer 24 with the B-3 layer 23 and the B-5 layer 25 to be described below can be realized.

The DSC melting point of the polyethylene forming the B-4 layer 24 is preferably 122-126°C, and the density is preferably 0.910-0.918 g/cm³ and more preferably 0.910-0.915 g/cm³.

When the above range is exceeded, the transparency decreases, and the mechanical strength against impact, as represented by the plate drop strength, also decreases. When the density falls below the range, it becomes difficult to maintain the heat resistance, and deformation and whitening occur.

The polyethylene forming the B-4 layer 24 is a linear polyethylene mixture comprising 35-85 wt.-% of a linear polyethylene having a density of 0.900-0.910 g/cm³ and polymerized using a single-site catalyst; 0-55 wt.-% of a linear polyethylene having a density of 0.910-0.930 g/cm³; and 5-15 wt.-% of a high-density polyethylene having a density of 0.950-0.970 g/cm³.

The types of the polyethylene forming the B-4 layer 24, the combination in the mixture, the mixing proportions, etc., are all the same as those in the case of the B-2 layer 22.

As preferred embodiments of the polyethylene forming the B-4 layer 24, the same preferred embodiments of the polyethylene forming the B-2 layer 22 can be cited.

The thickness of the B-4 layer 24 is set as suited from a standpoint of e.g. the flexibility of the multilayer film (III) or the drug solution bag formed using the film and, for example, is preferably approximately 30-60% and more preferably approximately 40-50% of the total thickness of the multilayer film (III) .

Also, for example, in a case where the total thickness of the multilayer film (III) is 180-260 µm, the thickness of the B-4 layer 24 is preferably 70-110 µm and more preferably 70-100 µm.

Also, the thickness of B-4 layer 24 is preferably 0.8-1.25 times the thickness of the B-2 layer 22 and especially preferably the same as the thickness of the B-2 layer 22.

The B-5 layer 25 is a layer that is disposed at a surface at the other side of the multilayer film (III) and is a layer forming an innermost layer of the drug solution bag 26 to be described below.

As with the B-1 layer 21, the B-5 layer 25 comprises a linear polyethylene, with the DSC melting point of > 125°C and ≤ 130°C and the density thereof being 0.935-0.946 g/cm³.

When the DSC melting point and the density of the polyethylene forming the B-5 layer 25 of the multilayer film (III) are within the abovementioned ranges, the heat resistance and transparency are good. Occurrence of problems, such as lowering of transparency or wrinkling, can thereby be prevented even when the drug solution bag, made from the multilayer film (III), is subject to a high-temperature sterilization process, and further, occurrence of the phenomenon (whitening phenomenon) in which the inner layer (the B-5 layer 25) of the drug solution bag whitens at a headspace portion can be prevented. Also, good adhesive strength (interlayer strength) can be realized between the B-5 layer 25 and the B-4 layer 24.

The DSC melting point of the polyethylene forming the B-5 layer 25 is preferably 126-129°C, and the density is preferably 0.937-0.942 g/cm³.

The polyethylene forming the B-5 layer 25 is a linear polyethylene mixture comprising 75-90 wt.-% of a linear polyethylene having a DSC melting point of 120-125°C and a density of 0.930-0.940 g/cm³; and 10-25 wt.-% of a high-density polyethylene having a density of 0.950-0.970 g/cm³,

As preferred embodiments of the polyethylene forming the B-5 layer 25, the same preferred embodiments of the polyethylene forming the B-1 layer 21 can be cited.

The heat resistance of the multilayer film (III) is good because in the multilayer film (III), the polyethylenes of the above composition with which the DSC melting points and the densities are respectively within the abovementioned ranges are used in the B-5 layer 25. Also, occurrence of problems, such as lowering of transparency or wrinkling, after the sterilization process can be prevented. Further, excellent mechanical strength, such as strength against impact, etc., can be imparted to the drug solution bag 26 to be described below. Also, good adhesive strength (interlayer strength) can be realized between the B-5 layer 25 and the B-4 layer 24.

The thickness of the B-5 layer 25 is set as suited from a standpoint of e.g. mechanical strength of the multilayer film (III) or the drug solution bag formed using the film and, for example, is preferably approximately 5-25% of the total thickness of the multilayer film (III).

Thus, for example, in a case where the total thickness of the multilayer film (III) is 180-260 µm, the thickness of the B-5 layer 25 is preferably 15-45 µm and more preferably 20-40 µm.

The total thickness of the multilayer film (III) is not restricted in particular and can be set as suited in accordance with a size (containment volume of a drug solution) required of the drug solution bag, that is, in accordance with the application and purpose of use of the multilayer film (III).

Thus, when, for example, the containment volume of the drug solution bag is approximately 100-1000 ml, which is used in general applications of e.g. an infusion solution, the total thickness of the multilayer film (III) is 100-300 µm and preferably 180-260 µm but is not restricted thereto.

The method for manufacturing the multilayer film (III) is not restricted in particular, and the water-cooling and air-cooling co-extrusion inflation methods, the co-extrusion T-die method, the dry lamination method and the extrusion lamination method can be cited as examples. Among these, the water-cooling co-extrusion inflation method and the co-extrusion T-die method can be cited as preferable methods from a standpoint of characteristics, in particular, transparency of the multilayer film (III), economy of manufacture of the multilayer film (III) and sanitation properties of the multilayer film (III).

Although in any of the above methods, the manufacture of the multilayer film (III) must be carried out at a temperature at which the resins forming the respective layers melt, if the manufacturing temperature is too high, a portion of the resins may undergo thermal decomposition and cause lowering of performance due to the decomposition products. The manufacturing temperature of the multilayer film (III) is thus preferably 150-250°C and more preferably 170-200°C but is not restricted thereto.

The multilayer film (III) is excellent in such characteristics as transparency, flexibility, heat resistance with respect to high-temperature sterilization process, mechanical strength, etc. The multilayer film (III) is thus favorable as a forming material of a drug solution bag, such as an infusion solution bag.

The bag according to the present invention shall now be described with reference to FIG. 48 and FIG. 49. In the present embodiment, the drug solution bag 26 is prepared and formed with the B-1 layer 21 of the multilayer film (III), shown in FIG. 47, as the outer layer and the B-5 layer 25 as the inner layer. Also, the drug solution bag 26 includes a peripheral sealed portion 29 formed by mutually overlapping the B-5 layers 25 of two multilayer films (III) 27, 28 and heat sealing peripheral portions thereof.

The peripheral sealed portion 29 can also be formed by forming the multilayer film (III) to a bag shape or a tube shape by the inflation method so that the B-5 layer 25 is disposed at the inner side and heat sealing a peripheral portion of the bag-shaped or tube-shaped multilayer film (III) thus obtained.

A container portion 30 of the drug solution bag 26 is defined by the peripheral sealed portion 29. The drug solution bag 26 is a single chamber bag that includes the single container portion 30 in its interior.

At a portion of the peripheral sealed portion 29, a tube member 31, for making a drug solution, etc., flow in and out between the container portion 30 and an exterior of the drug solution bag 26, is heat sealed in a state of being sandwiched by the two multilayer films (III) 27, 28.

The peripheral sealed portion 29 is formed, for example, by overlapping the two multilayer films (III) 27, 28 so that the respective B-1 layers 21 are the outer layers and the respective B-5 layers 25 are the inner layers and thereafter heat sealing the respective B-1 layer 21 side surfaces of peripheral portions of the overlapped multilayer films (III) 27, 28 by a heat sealing die.

The conditions of the heat sealing by the heat sealing die are not restricted in particular, and, for example, in a case of using the multilayer film (III) with a total thickness of 100-300 µm, the die temperature is preferably 130-200°C and more preferably 150-180°C, the pressure is preferably 0.1-0.8 MPa and more preferably 0.15-0.5 MPa, and the press time is preferably 1-5 seconds and more preferably 1.5-3 seconds.

The tube member 31 is not restricted in particular, and a known tube member can be applied. For example, the tube member 31 is a member for making the drug solution, contained inside the container portion 30 of the drug solution bag 26, flow out to the exterior of the drug solution bag 26 or for making the drug solution flow into the container portion 30 from the exterior of the drug solution bag 26, and normally, a sealing member (for example, a rubber stopper), which is for sealing the tube member 31 and is pierceable by a hollow needle, etc., is disposed in an interior thereof.

With the drug solution bag 26 shown in FIG. 48, a method for making a drug solution or other content be contained and sealed inside the container portion 30 is not restricted in particular and a known method can be employed.

Also, after the drug solution or other content is contained and sealed inside the container portion 30, the drug solution bag 26 is subject to a sterilization process.

The sterilization process method is not restricted in particular and, for example, a known heat sterilization method, such as high-pressure steam sterilization and hot water shower sterilization can be applied.

The sterilization process temperature of such a heat sterilization process is generally approximately 105-110°C, and the sterilization process temperature may be set at 118-121°C in accordance with e.g. the type, usage or usage environment of the drug solution.

The drug solution bag 26 is formed using the multilayer film (III) according to the present invention and is thus extremely high in heat resistance with respect to the high-temperature sterilization process. Thus, even in a case where a sterilization process at 118-121°C (high-temperature sterilization process) is applied to the drug solution bag, appropriate flexibility and good transparency can be maintained.

### [EXAMPLES]

The present invention shall now be described in detail by way of examples and comparative examples.

### <Methods for Measuring Physical Properties of Polymers>

Physical properties of polymers were measured by the following methods.

### 1. DSC melting point

First, approximately 1g of polyethylene pellets was sandwiched between Teflon (registered trademark) sheets of 100µm. To prepare the pellets in a case of measuring a mixture made of a plurality of polyethylenes, a mixture in which the respective polyethylenes were mixed at appropriate proportions was heated to a resin temperature of 200°C, kneaded and extruded to a strand of approximately 2mm diameter by a uniaxial extruder, cooled with tap water, and cut into pellets.

The pellets sandwiched by the sheets were then left for 2 minutes in an atmosphere of 200°C and thereafter pressed for 10 seconds at 200°C. The sample that was thereby melted was immediately sandwiched by metal plates cooled with tap water to attain a thickness of 0.1-0.5 mm and cooled for 1 minute. After cooling, the sample was cut with a razor and a measurement sample of approximately 5mg was weighed out.

The measurement sample that had been cut was filled in an aluminum pan, and using the "Diamond DSC Apparatus" made by PerkinElmer, Inc., raised in temperature from 30°C to 200°C at a heating rate of 500°C/minute and held at 200°C for 10 minutes. Thereafter, the temperature was dropped to 30°C at a rate of 10°C/minute, and after holding for 1 minute at 30°C, the temperature was raised to 200°C at a rate of 10°C/minute, and the melting point was thus measured. ΔH, HL, and Hp were computed from the DSC curve obtained.

### 2. Density

The sample polyethylene was loaded in a melt indexer set at 200°C, and a strand was obtained. The strand was dropped directly onto a metal plate. The obtained strand was annealed for 30 minutes in boiling water and then cooled as it was to room temperature (30°C) over a period of 1 hour. Thereafter, the strand was taken out and cut to lengths of 2-3 mm. The cut strands were loaded in a density gradient tube, and the density was determined from a stationary position of the sample after 1 hour.

### <Manufacture of Polymers>

### 1. Manufacture of PE-L and PE-L (2)

### (1) Preparation of catalyst

Under a nitrogen atmosphere, 10 mol of a commercially sold anhydrous magnesium chloride were suspended in 201 of dehydration-refined hexane, and after dripping 58 mol of ethanol in the suspension over a period of 1 hour while stirring, the suspension was left to react for 1 hour at room temperature. 26 mol of diethylaluminum chloride were then dripped in at room temperature and stirring was continued for 2 hours. Then after adding 22 mol of titanium tetrachloride, the reaction system was raised in temperature to 80°C and made to react while stirring for 2 hours. A solid portion after the reaction was then separated and washed repeatedly with refined hexane, and 16L of refined hexane were thereafter added to prepare a suspension.

60mol of ethanol were then added to 161 of the suspension, the temperature was raised to 80°C, and the suspension was left to react for 2 hours. After the reaction, the suspension was left to cool to room temperature.

After letting the suspension cool, 2 mol of triethylaluminum were dripped gradually into the suspension at room temperature and the suspension was left to react for 1.5 hours at room temperature. After the reaction, the solid portion was washed repeatedly with refined hexane and then made into a hexane suspension.

### (2) Polymerization of PE-L

Using a continuous polymerizer with an internal capacity of 2001, continuous supplying of dehydration-refined solvent hexane at a rate of 70 kg/hr, ethylaluminum sesquichloride at a rate of 7.5 mmol/hr, diethylaluminum chloride at a rate of 7.5 mmol/hr, and the catalyst obtained in (1) at a rate of 0.26 mmol/hr as Ti was performed. At the same time, continuous supplying of ethylene at a rate of 15 kg/hr, 1-butene at a rate of 0.35kg/hr, and hydrogen at a rate of 21.5 l/hr was performed into the polymerizer. By then performing copolymerization under conditions of a polymerization temperature of 170°C; a total pressure of 2.8 MPa; and a retention time of 1.5 hours, an ethylene-1-butene copolymer, indicated as PE-L, was obtained. The copolymer obtained had a density of 0.937 g/cm³ and an MFR of 2.25 g/10 minutes (190°C, 2.16 kg load).

### (3) Polymerization of PE-L (2)

Using a continuous polymerizer with an internal capacity of 200L, continuous supplying of dehydration-refined solvent hexane at a rate of 70 1/hr, ethylaluminum sesquichloride at a rate of 8.5 mmol/hr, diethylaluminum chloride at a rate of 8.5 mmol/hr, and the same catalyst as that for PE-L at a rate of 0.26 mmol/hr as Ti was performed. Also, at the same time, continuous supplying of ethylene at a rate of 15 kg/hr, 1-butene at a rate of 0.70kg/hr, and hydrogen at a rate of 18L/hr was performed into the polymerizer. By then performing copolymerization under conditions of a polymerization temperature of 170°C; a total pressure of 2.8 MPa; and a retention time of 1.5 hours, an ethylene-1-butene copolymer, indicated as PE-L (2), was obtained. The copolymer obtained had a density of 0.928 g/cm³ and an MFR of 2.25 g/10 minutes (190°C, 2.16 kg load).

### 2. Manufacture of PE-LLD and PE-HD

### (1) Preparation of catalyst

Under a nitrogen atmosphere, 10mol of a commercially sold anhydrous magnesium chloride were suspended in 201 of dehydration-refined hexane, and after dripping 58 mol of ethanol in the suspension over a period of 1 hour while stirring, the suspension was left to react for 1 hour at room temperature. 26 mol of diethylaluminum chloride were then dripped in at room temperature and stirring was continued for 2 hours. Then after adding 22 mol of titanium tetrachloride, the reaction system was raised in temperature to 80°C and made to react while stirring for 2 hours. A solid portion after the reaction was then separated and washed repeatedly with refined hexane, and then made into a hexane suspension.

### (2) Polymerization of PE-LLD

Using a continuous polymerizer with an internal capacity of 2001, continuous supplying of dehydration-refined solvent hexane at a rate of 70 1/hr, diethylaluminum chloride at a rate of 14 mmol/hr, and the catalyst with carrier obtained in (1) at a rate of 0.26 mmol/hr as Ti was performed. Also, at the same time, continuous supplying of ethylene at a rate of 15 kg/hr, 4-methyl-1-pentene at a rate of 2 kg/hr, and hydrogen at a rate of 17L/hr was performed into the polymerizer. By then performing copolymerization under conditions of a polymerization temperature of 170°C; a total pressure of 2.8 MPa; and a retention time of 1.5 hours, an ethylene-4-methyl-1-pentene copolymer, indicated as PE-LLD, was obtained. The copolymer obtained had a density of 0.919 g/cm³ and an MFR of 2.1g/10 minutes (190°C, 2.16 kg load).

### (3) Polymerization of PE-HD

Using a continuous polymerizer with an internal capacity of 200L, continuous supplying of dehydration-refined solvent hexane at a rate of 56 1/hr, triethylaluminum at a rate of 9mmol/hr, and the same catalyst with carrier as that for PE-LLD at a rate of 0.18 mmol/hr as Ti was performed. Also, at the same time, continuous supplying of ethylene at a rate of 10.5 kg/hr and hydrogen at a rate of 52 l/hr was performed into the polymerizer. By then performing copolymerization under conditions of a polymerization temperature of 157°C; a total pressure of 2.8 MPa; and a retention time of 2 hours, a high-density polyethylene polymer, indicated as PE-HD, was obtained. The polymer obtained had a density of 0.959 g/cm³ and an MFR of 17g/10 minutes (190°C, 2.16 kg load).

### 3. Manufacture of PE-HD (2)

### (1) Preparation of catalyst

Under a nitrogen atmosphere, 8mol of a commercially sold anhydrous magnesium chloride were suspended in 201 of dehydration-refined hexane, and after dripping 46 mol of ethanol in the suspension over a period of 1 hour while stirring, the suspension was left to react for 2 hours at room temperature. 20mol of diethylaluminum chloride were then dripped in at room temperature and stirring was continued for 1 hour. Then after adding 48 mol of titanium tetrachloride, a reaction was carried out while stirring for 1 hour. A solid portion after the reaction was then separated and washed repeatedly with refined hexane, and then made into a hexane suspension.

### (2) Polymerization of PE-HD (2)

Using a continuous polymerizer with an internal capacity of 2001, continuous supplying of dehydration-refined solvent hexane at a rate of 50 l/hr, triethylaluminum at a rate of 14 mmol/hr, and the catalyst with carrier obtained in (1) at a rate of 1.4 mmol/hr as Ti was performed. Also, at the same time, continuous supplying of ethylene at a rate of 28 kg/hr and hydrogen at a rate of 160 l/hr was performed into the polymerizer. By then performing copolymerization under conditions of a polymerization temperature of 85°C; a total pressure of 0.6 MPa; and a retention time of 2 hours, a high-density polyethylene polymer, indicated as PE-HD (2), was obtained. The polymer obtained had a density of 0.967g/cm³ and an MFR of 15g/10 minutes (190°C, 2.16 kg load) .

### 4. Manufacture of m-PE-LLD

### (1) Preparation of solid catalyst

10 kg of silica (SiO₂), dried for 10 hours at 250°C, were suspended in 154l of toluene and thereafter cooled to 0°C. 50.5l of a toluene solution of methylaluminoxane (Al = 1.52 mol/l) were then dripped in over a period of 1 hour. In this process, the temperature inside the reaction system was maintained at 0-5°C. The reaction system was left to react for another 30 minutes, and then the temperature was raised to 95°C over a period of 1.5 hours and the reaction system was left to react for 4 hours at that temperature. Thereafter, the temperature was lowered to 60°C and a supernatant solution was removed by decantation. The solid component obtained was washed twice with toluene, then resuspended in 1001 of toluene, and adjusted to a total volume of 160l. 22.0l of a toluene solution of bis (1,3-n-butylmethylcyclopentadienyl) zirconium dichloride (Zr = 25.7 mmol/L) were then dripped at 80°C over a period of 30 minutes into the suspension thus obtained and then left to react for 2 hours at 80°C. The supernatant solution was thereafter removed and then washing with hexane was performed twice to obtain a solid catalyst component containing 3.2 mg of zirconium per 1g of silica.

### (2) Preparation of prepolymerized catalyst

7.0 kg of the solid catalyst component obtained in (1) and hexane were charged into a 350L reactor the interior of which had been adequately replaced with nitrogen, and the total volume was adjusted to 285l. After cooling the interior of the reaction system to 10°C, ethylene was blown for 5 minutes at a flow rate of 8 Nm³/hr into the hexane suspension of the solid catalyst component. The temperature in the reaction system was maintained at 10-15°C in this process. Thereafter, the supplying of ethylene was stopped, and 2.4 mol of triisobutylaluminum and 1.2 kg of 1-hexene were charged in. After making the interior of the reaction system a sealed system, the supplying of ethylene at 8 Nm³/hr was restarted. 15 minutes later, the flow rate of ethylene was lowered to 2 Nm³/hr and the pressure in the reaction system was set to 0.08 MPa. In this process, the temperature in the reaction system rose to 35°C. Thereafter, ethylene was supplied for 3.5 hours at a flow rate of 4 Nm³/hr while controlling the temperature in the reaction system at 32-35°C. In this process, the pressure inside the reaction system was maintained at 0.07-0.08 MPa. The interior of the reaction system was then replaced with nitrogen, the supernatant solution was removed, and washing with hexane was performed twice. A prepolymerized catalyst, with which 3g of polymer was prepolymerized per 1g of the solid catalyst component, was thus obtained.

### (3) Drying of prepolymerized catalyst

20 kg of a hexane suspension of the prepolymerized catalyst obtained in (2) were loaded into a jacketed filtration dryer with an internal capacity of 130l and the hexane was filtered. Thereafter, the temperature of the jacket was raised to 40°C and drying was performed for 3 hours while passing a gas (nitrogen concentration: 10 ppm; water content: 5 ppm) through the reaction system at 6 Nm³/h. During this process, the temperature in the system rose from 20°C to 35°C.

### (4) Gas-phase polymerization

Using a continuous fluidized-bed gas-phase polymerizer, copolymerization of ethylene and 1-hexene was performed at a total pressure of 2 MPa, a polymerization temperature of 72°C, and a gas line velocity of 0.6 m/s. The prepolymerized catalyst prepared in (2) was supplied continuously at a rate of 60 g/hr, and in order to maintain fixed the gas composition during the polymerization, ethylene, 1-hexene, hydrogen, and nitrogen were supplied continuously (gas composition: 1-hexene/ethylene = 0.04; hydrogen/ethylene = 5.3×10⁻⁴; ethylene concentration: 65%) . An ethylene-1-hexene copolymer, indicated as m-PE-LLD, was thereby obtained. The copolymer obtained had a density of 0.904 g/cm³ and an MFR of 1.25g/10 minutes (190°C, 2.16 kg load).

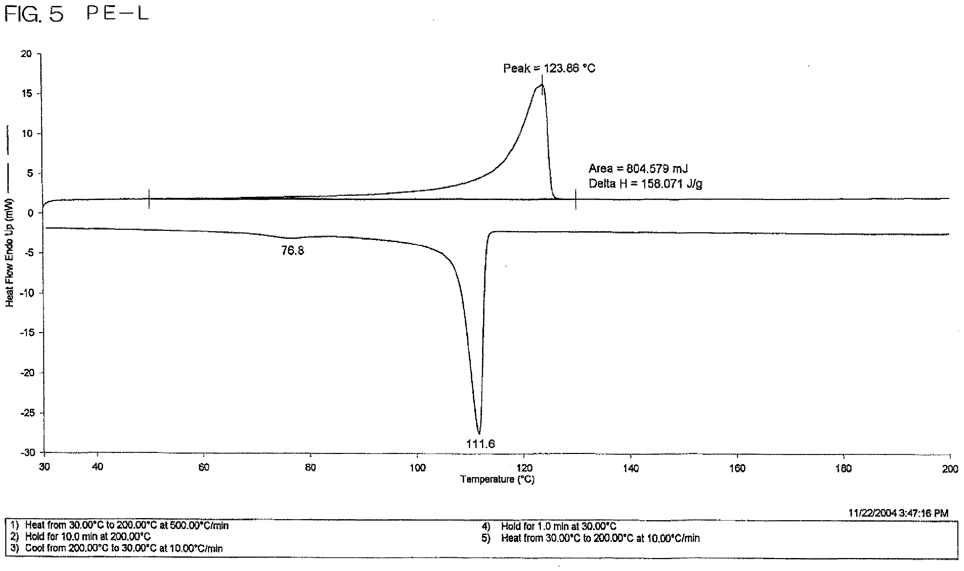

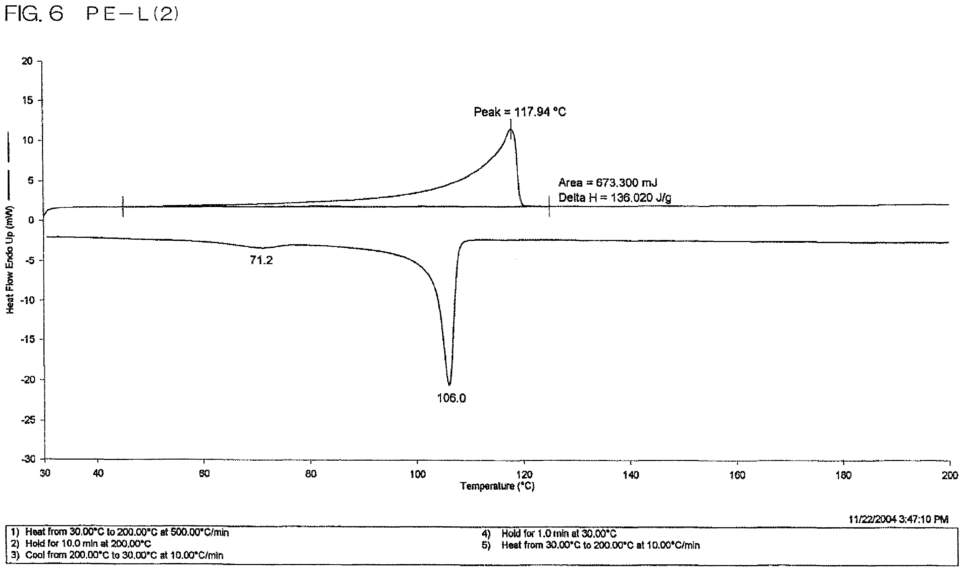

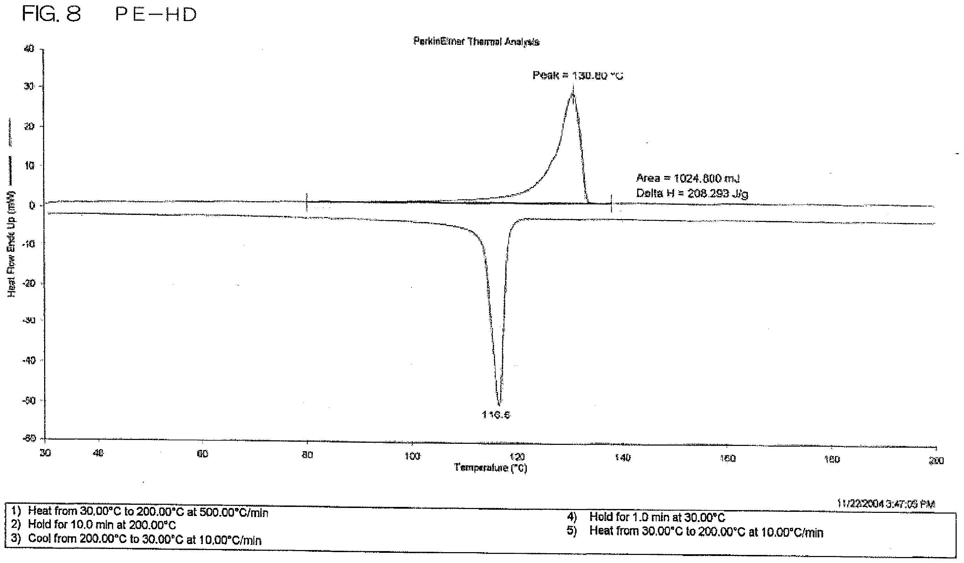

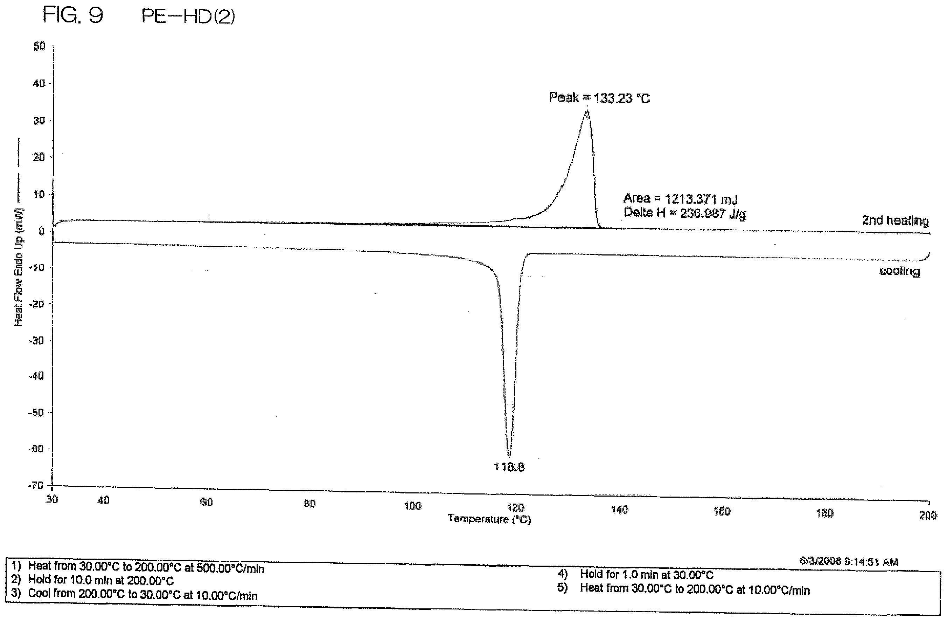

Physical characteristics of the polymers obtained as described above are shown in Table 1 and FIGS. 5-10.

The densities shown in Table 1 are measurement results for the respective polymers determined by the density measurement method described above. The DSC charts shown in FIGS. 5-10 are measurement results for the respective polymers determined by the DSC measurement method described above and the DSC melting points are indicated therein.

In each of the DSC charts of FIGS. 5-10 and each of the DSC charts shown for the examples, peak temperatures are indicated in a measurement line (Hp) at an upper side. A line (HL) at a lower side expresses a value of a central temperature of a group of crystals of polyethylene of low melting point. In each DSC chart, an abscissa indicates the temperature and this temperature signifies a thickness of the polyethylene crystal. That is, the thicker a crystal the higher the temperature at which it melts. An ordinate expresses a number of crystals and indicates the number of crystals that melt at the corresponding temperature.

That is, a polyethylene crystal of large thickness (crystal group indicated by Hp) has good heat resistance but tends to degrade the transparency (flexibility), and oppositely, a polyethylene crystal of small thickness (crystal group indicated by HL) has poor heat resistance but has good transparency (flexibility). Thus, with the present invention, transparency and flexibility are secured by the crystal group of HL that melts at a low temperature, and heat resistance is secured by the crystal group of HP that melts at a high temperature. That is, transparency and heat resistance are realized at the same time by allocating roles among the resins making up the film. A dip between HL and HP signifies that there are no polyethylene crystals of intermediate thickness.

In each table, HL/Hp is an index of balance of HL and Hp.

Compositions and physical properties of the resin materials forming the respective layers of the multilayer films are indicated along with the abbreviations thereof in Tables 2 to 8.

### <EXAMPLES AND COMPARATIVE EXAMPLES>

### Examples 1-28 and Comparative Examples 1-17 (Multilayer Film (II))

### 1. Manufacture of multilayer films

Multilayer films (three-layer films) of the layer arrangements shown in Tables 9-25 below were manufactured by three-layer co-extrusion water-cooling inflation molding. The abbreviations of the resin materials shown in Tables 9-25 are as indicated above.

The thicknesses of the respective layers of the multilayer films were set to the values shown in Tables 9-25. Specifically, the thicknesses of the resin materials that are the raw materials were selected suitably so that the thicknesses of the respective layers took on the values indicated respectively in Tables 9-25 after manufacture by the three-layer co-extrusion inflation molding. For example, in the multilayer film of Example 1 (see Table 9), "1-5," "2-1," and "1-6" were used as the resin materials in the order from the A-1 layer to the A-3 layer, and further, the thicknesses of the resin materials of the respective layers were selected and used so as to be 20-µm, 200-µm, and 20µm, in that order, after molding by the three-layer co-extrusion inflation molding method.

### 2. Manufacture of drug solution bags

Further, the drug solution bags 6, shown in FIG. 2, were manufactured from the films obtained. The peripheral sealed portion 9 was formed by heat sealing the two multilayer films 4, 5 by a heat sealing die (see FIG. 3). The conditions of the heat sealing of the peripheral sealed portion 9 were set to conditions of: a die temperature of 135°C; a pressure of 0.4 MPa; and 1.5 seconds. In regard to the size of the drug solution bag 6, the containment volume of the container portion 10 was set to approximately 1000 ml, a length (L1) in a longitudinal direction of the container portion 10 was set to 30.5 cm, and a width (W1) in a lateral direction was set to 21.3 cm (see FIG. 2).

The drug solution bags for the plate drop test were prepared under the same conditions as the above with the containment volume of the container portion 10 being set to approximately 500 ml, the length (L1) in the longitudinal direction of the container portion 10 being set to 20.0 cm, and the width (W1) in the lateral direction being set to 12.5 cm. Examples 29-55 and Comparative Examples 18-34 (Multilayer Film (III))

### 1. Manufacture of multilayer films

Multilayer films (five-layer films) of the layer arrangements shown in Tables 26-33 below were manufactured by five-layer co-extrusion inflation molding. The abbreviations of the resin materials shown in Tables 26-33 are as indicated above.

The thicknesses of the respective layers of the multilayer films were set to the values shown in Tables 26-33. The thicknesses of the resin materials that are the raw materials were selected suitably so that the thicknesses of the respective layers took on the values indicated respectively in Tables 26-33 after manufacture by the five-layer co-extrusion inflation molding. For example, in the multilayer film of Example 29 (see Table 26), "1-1," "2-1," "3-1," "2-1," and "1-2" were used as the resin materials in the order from the B-1 layer (first layer) to the B-5 layer (fifth layer), and further, the thicknesses of the resin materials of the respective layers were selected and used so as to be 20 µm, 90 µm, 20 µm, 90 µm, and 30 µm, in that order, after the molding by the five-layer co-extrusion inflation molding method.

### 2. Manufacture of drug solution bags

Further, the drug solution bags 26, shown in FIG. 48, were manufactured from the films obtained. The peripheral sealed portion 29 was formed by heat sealing the two multilayer films 27, 28 by a heat sealing die. The conditions of the heat sealing of the peripheral sealed portion 29 were set to conditions of: a die temperature of 135°C; a pressure of 0.4 MPa; and 1.5 seconds. In regard to the size of the drug solution bag 26, the containment volume of the container portion 30 was set to approximately 1000 ml, the length (L1) in the longitudinal direction of the container portion 30 was set to 30.5 cm, and the width (W2) in the lateral direction was set to 21.3 cm (see FIG. 48).

The drug solution bags for the plate drop test were prepared under the same conditions as the above with the containment volume of the container portion 30 being set to approximately 500 ml, the length (L2) in the longitudinal direction of the container portion 30 being set to 20.0 cm, and the width (W2) in the lateral direction being set to 12.5 cm.

### <Evaluation Tests of the Drug Solution Bags>

The container portions 10, 30 of the drug solution bags 6, 26 obtained in the examples and comparative examples were filled with 500 ml or 1000 ml of water for injection, sealed, and each drug solution bag 6 was subject to 30 minutes of a high-pressure steam sterilization process at 118°C, and each drug solution bag 26 was subject to 15 minutes of a high-pressure shower sterilization process at 121°C.

### 1. Evaluation of transparency

After the steam sterilization process, the multilayer film was cut out from each of the container portions 10, 30 of the drug solution bags 6, 26 to prepare a test strip, and after an elapse of approximately 48 hours, light transmittance (%) at 450nm of each test strip was measured in water using a Shimadzu Spectrometer (UV-1200, P/N206-61700), made by Shimadzu Corp., and the transparency of the multilayer film was evaluated based on the measurement result.

With each test strip, the transparency of the multilayer film was rated as good (A) if the light transmittance at 450nm was ≥ 75%, as slightly poor but adequate for practical use (B) if the light transmittance was not less than 70% but less than 75%, and as failing (C) if the light transmittance was < 70%. The evaluation results are shown respectively in the Tables 9133 below.

### 2. Evaluation of presence of whitening and wrinkles

Also, after the steam sterilization process, the presence of whitening at the headspace portion (portion not in contact with the contained liquid in each of the container portions 10, 30) of each of the drug solution bags 6, 26 and wrinkling in each of the drug solution bags 6, 26 were observed visually.

In regard to the whitening of the headspace portion (simply indicated as "whitening" in Tables 9-33), presence or non-presence thereof was evaluated.

Meanwhile, in regard to the presence of wrinkles, evaluation was performed according to the four cases of: a case where no wrinkles were observed; a case where wrinkles were observed in the entirety of the drug solution bag 6, 26; a case where wrinkles were observed at a heat sealed portion (mouth portion) of the tube member 11, 31; and a case where wrinkles were observed at a corner portion of the peripheral sealed portion 9, 29 of the drug solution bag 6, 26. These observation results are shown in Tables 9-33.

### 3. Plate drop strength

After the steam sterilization process, each drug solution bag of 500 ml capacity was immersed in water with ice, and the drug solution bag was covered with ice so as not to float and left in this state for 5 hours. During this process, ice was added suitably so as not to disappear. After the elapse of not less than 5 hours, one drug solution bag was taken out, a thermometer was inserted therein to measure the temperature of the drug solution and confirm that the drug solution temperature was not more than 4°C.

Thereafter, the other drug solution bags were placed on the iron plate below the apparatus shown in FIG. 4, and an iron plate was dropped at heights of 5 cm increments from 10 cm to 1 5cm, 20 cm, ..., and up to 100 cm, and the value of the height at which the drug solution leaked from the drug solution bag or at which the drug solution bag ruptured was recorded as the plate drop strength.

The plate drop strength was rated as good (A) if it was ≥ 60cm, as slightly poor but adequate for practical use (B) if it was 40 cm to < 60 cm, and as failing (C) if it was < 40cm. Five to ten test samples were prepared and an average value was employed as the result. The numerical value in parenthesis next to the ABC evaluation is the height (cm).

### 4. Oxygen permeability

Water was removed from the surface of the drug solution bag after the steam sterilization process by blowing hot air of approximately 40°C for 1 minute. The bag was then left in an environment of 25°C and a humidity of 60% RH, and then an oxygen concentration of the water for injection inside the drug solution bag was measured using a nondestructive oxygen concentration meter (product name: "Fibox 3"; made by PreSens GmbH). The measurement of oxygen concentration was performed first after the elapse of 6 hours from the steam sterilization process and then after each elapse of 1 day from the steam sterilization process. An apparatus of the trade name "OX-TRAN (registered trademark) " made by MOCON Inc. was used for measurement of the oxygen permeability.

### 5. Water vapor permeability

The water vapor permeability of the drug solution bag after the steam sterilization process was measured in accordance with method A (humidity sensor method) defined in JIS K 7129 (1992) "Water Vapor Permeability Test Method for Plastic Films and Sheets (Apparatus Measurement Method)." Model "L80-5000," made by Lissy Co., was used as the measurement apparatus. The measurement conditions were 40°C and 90% RH.

### 6. Discussion

In regard to the examples and comparative examples of the multilayer film (II), the drug solution bags of Examples 1-5 (Tables 9 and 10) are examples in which a resin material (2-1) of the same composition was used as the A-2 layers and resin materials of different compositions were used as the A-1 layers and the A-3 layers. With the multilayer films of all of these drug solution bags, the transparency was adequate for practical use (A or B) and whitening of the headspace portion and wrinkles were not observed.

On the other hand, with the drug solution bags of Comparative Examples 1 and 2 (Table 19), at least one of the evaluation items among the transparency of the multilayer film, the whitening of the headspace portion, and wrinkles of the drug solution bag was evaluated as failing.

The drug solution bags of Examples 6-14 (Tables 10-13) are examples in which resin materials of the same composition were used as the A-1 layers and the A-3 layers (A-1 layer: 1-5; A-3 layer: 1-6) and resin materials of different compositions were used as the A-2 layers and are the most preferable examples among the examples.

The density of the polyethylene mixture making up each A-2 layer was 0.910-0.916 g/cm³. The composition of each polyethylene mixture was made of 10-30 wt.-% of the linear polyethylene having the density of 0.919 g/cm³ (PE-LLD in Table 1), 5-15 wt.-% of the high-density polyethylene having the density of 0.959 g/cm³ (PE-HD in Table 1), and 60-80 wt.-% of the polyethylene polymerized using the metallocene catalyst and having the density of 0.904 g/cm³ (m-PE-LLD in Table 1).

With all of these examples, the transparency of the multilayer film was good (A) or (B), and in particular, the plate drop strength, with which the density of the A-2 layer is a dominant factor, was (A) in all cases. Also, whitening of the headspace portion and wrinkles were not observed.

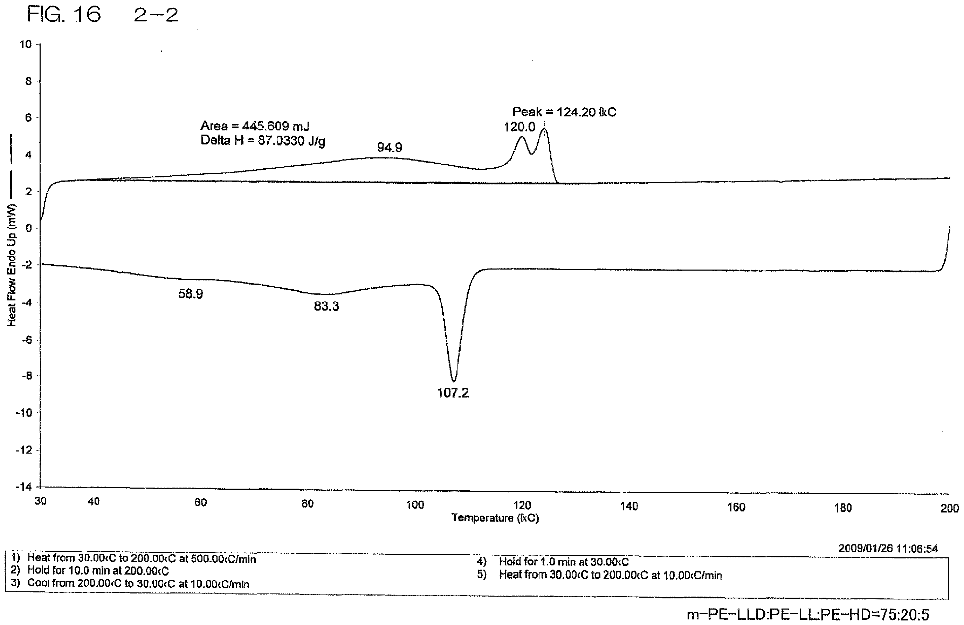

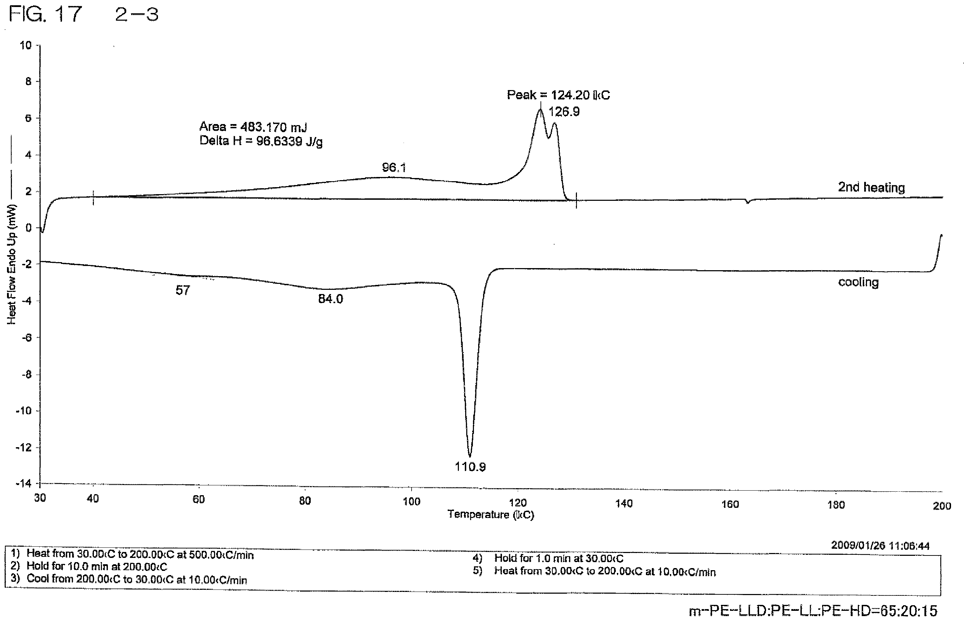

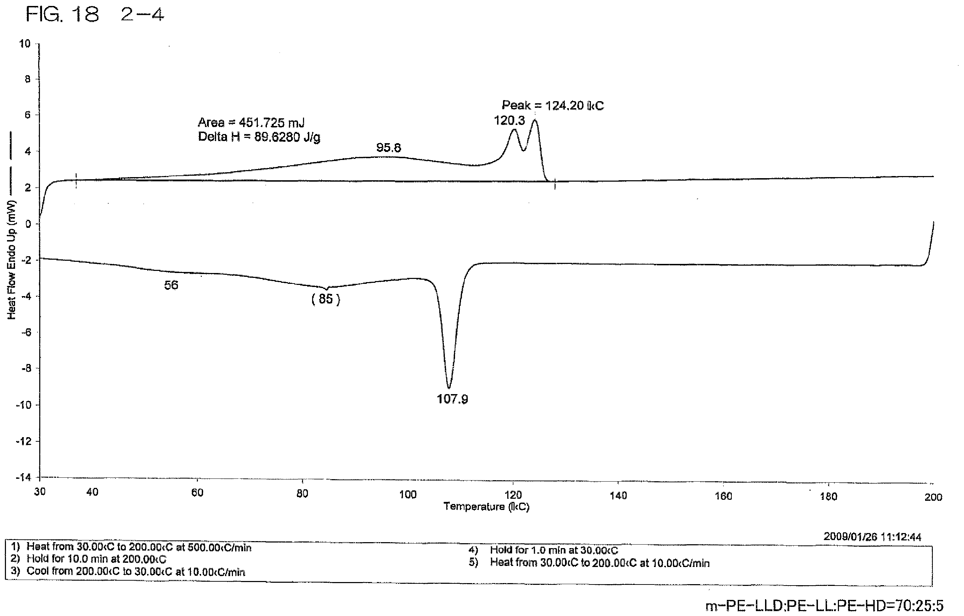

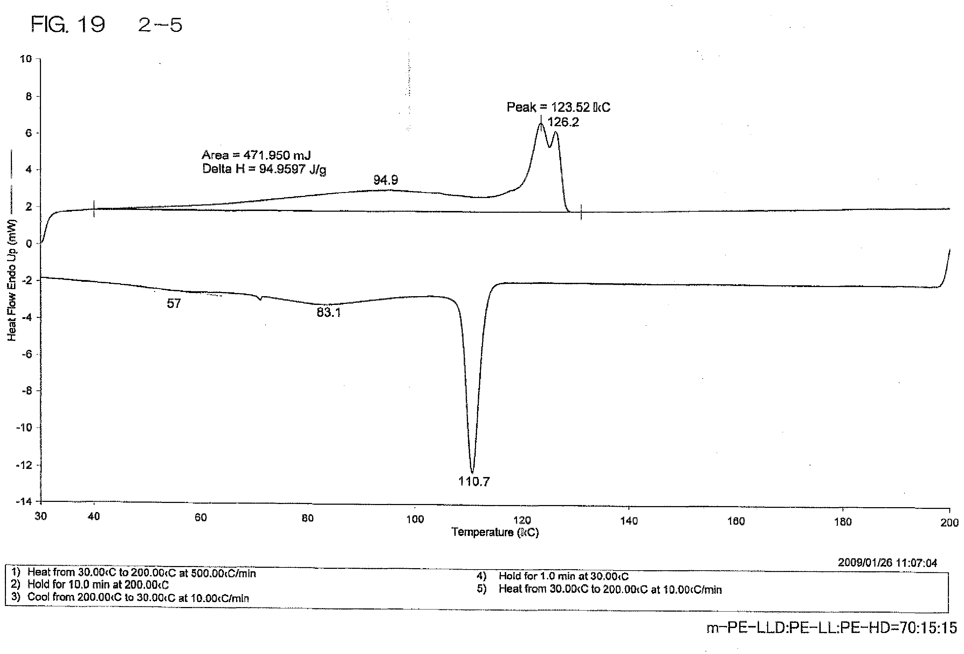

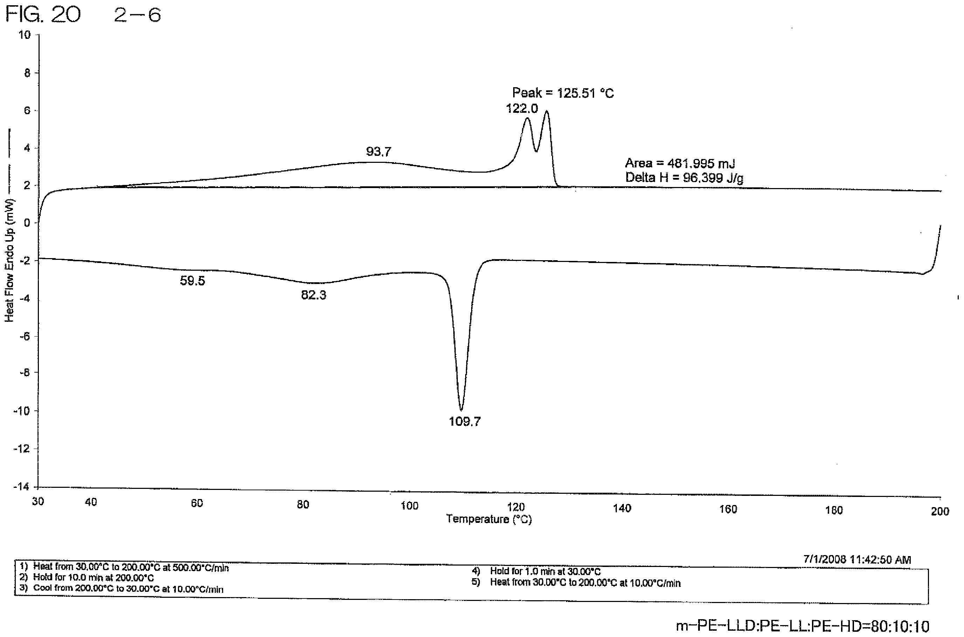

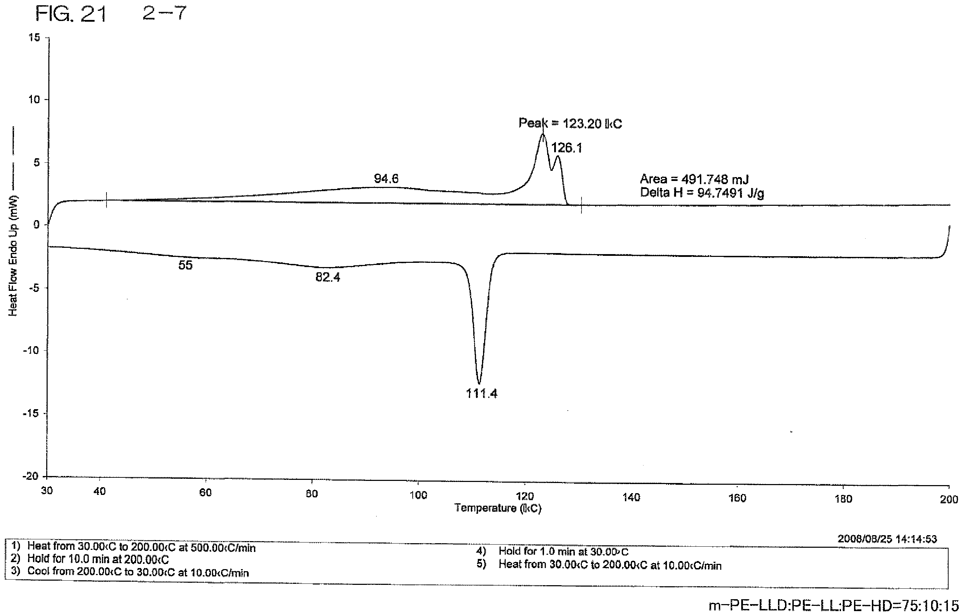

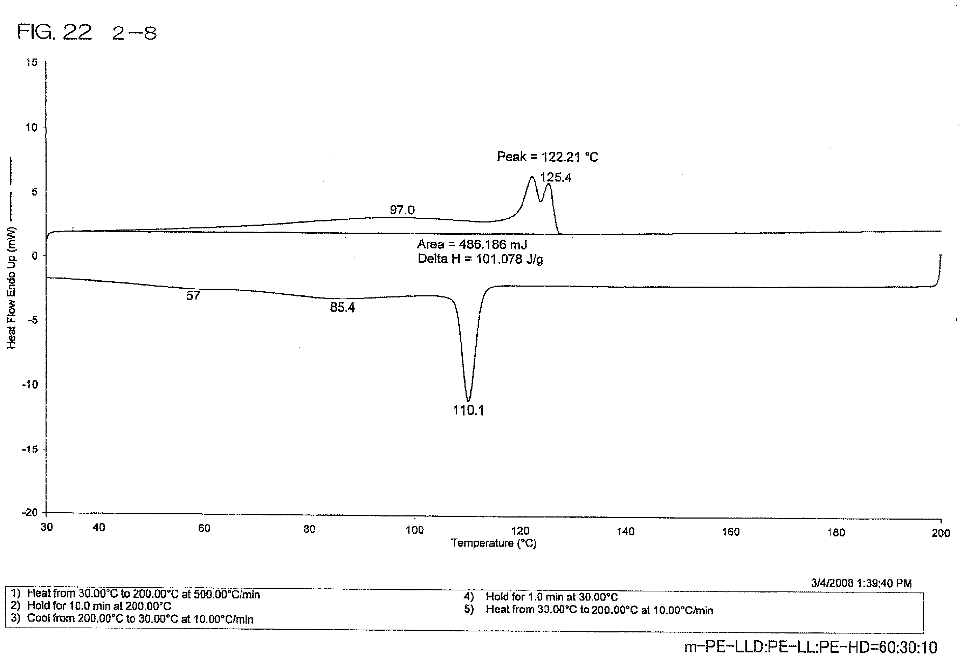

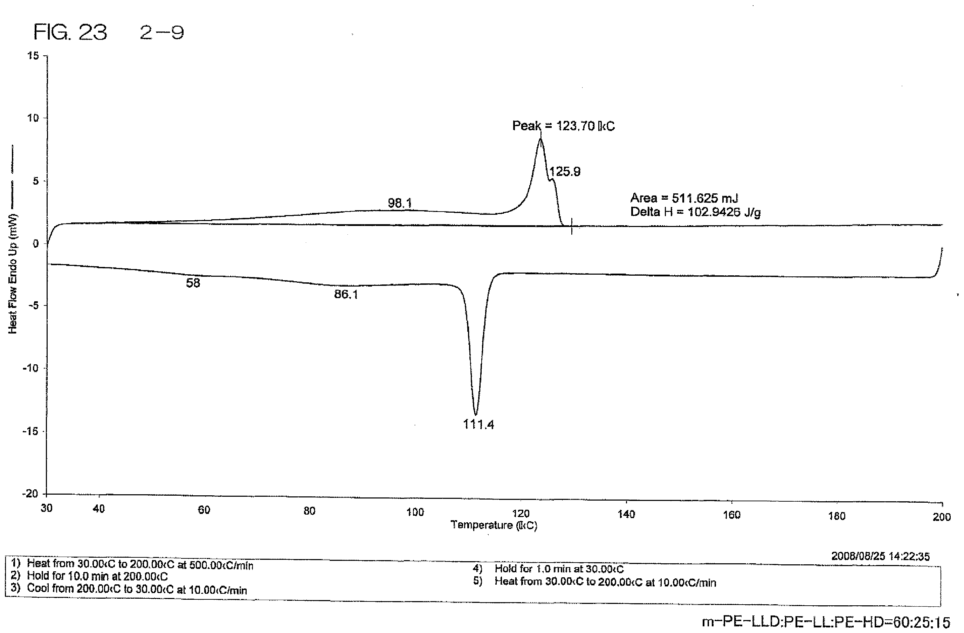

Also, as is clear from FIGS. 15-23, each of the DSC curves of the A-2 layers has a shape with the DSC melting point peak in a range of 120-126°C, and the second peak lower than the DSC melting point peak in a range of 90-105°C. Also, ΔH is not less than 85 J/g. Also, the HL/Hp values are within a range of 0.20-0.50. Thus, both transparency and plate drop strength are realized at the same time.

The drug solution bags of Examples 15-20 (Tables 13-15) are examples in which resin materials of the same composition were used as the A-1 layers and the A-3 layers (A-1 layer: 1-5; A-3 layer: 1-6) and resin materials of different compositions were used as the A-2 layers and are the next most preferable range of examples among the examples.

The density of the polyethylene mixture making up each A-2 layer is 0.910-0.918 g/cm³. The composition of each polyethylene mixture was made of 0-40 wt.-% of the linear polyethylene having the density of 0.919 g/cm³ (PE-LLD in Table 1), 5-15 weight % of the high-density polyethylene having the density of 0.959 g/cm³ (PE-HD in Table 1), and 50-85 wt.-% of the polyethylene polymerized using the metallocene catalyst and having the density of 0.904 g/cm³ (m-PE-LLD in Table 1).

With all of these examples, the transparency of the multilayer film was good (A) or (B), and the plate drop strength was good (A) or (B). Also, whitening of the headspace portion and wrinkles were not observed.

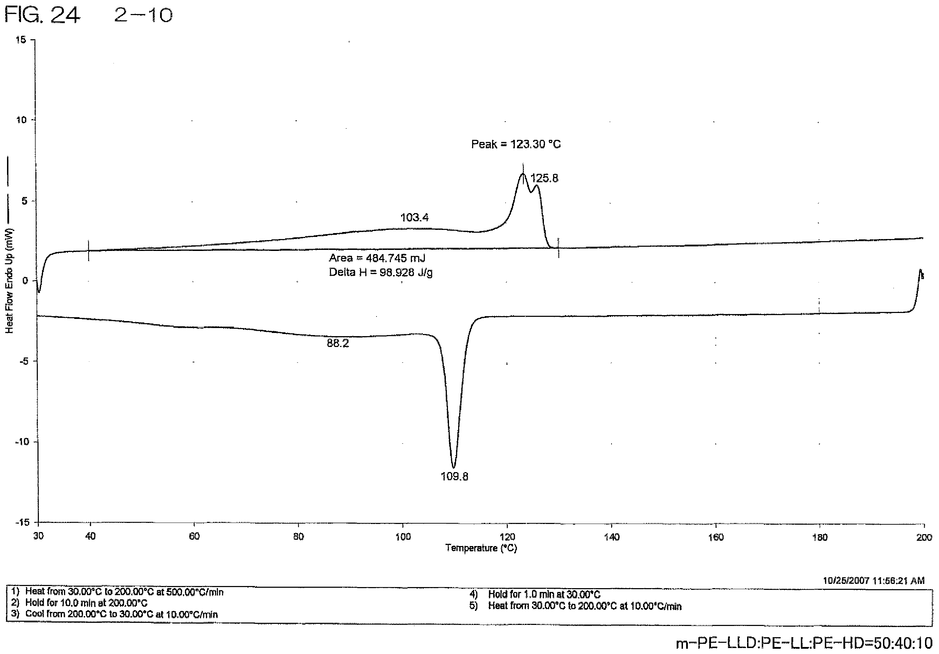

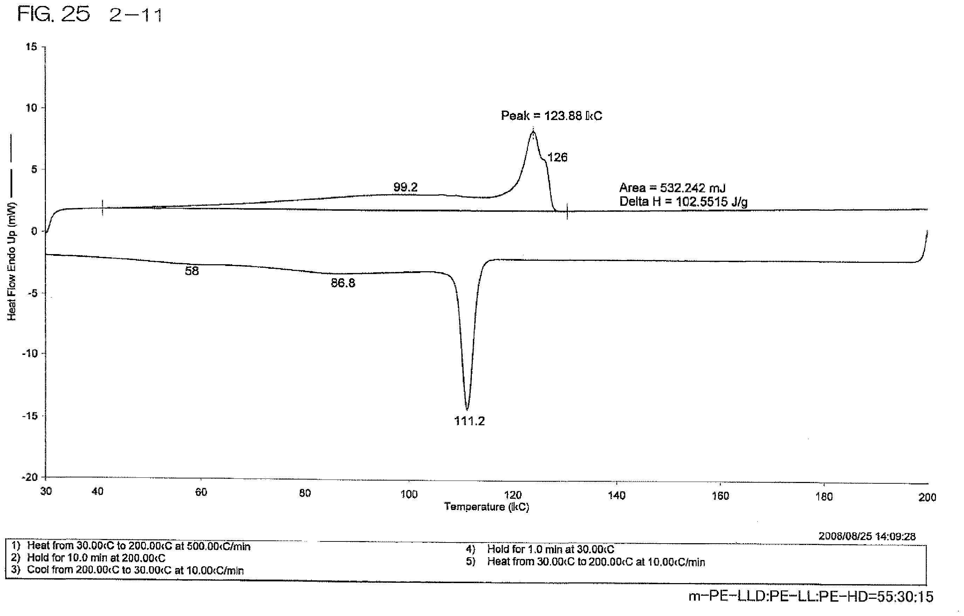

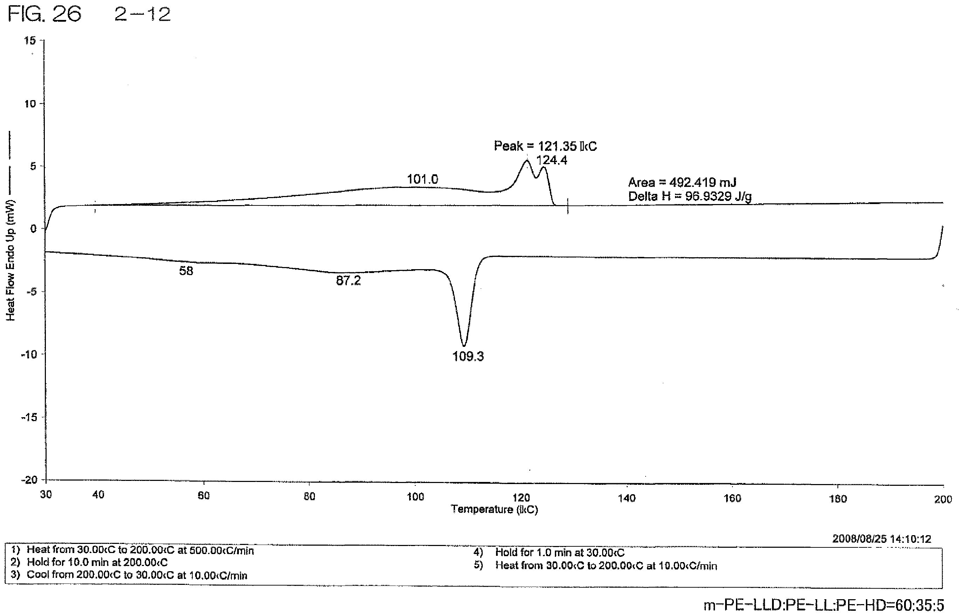

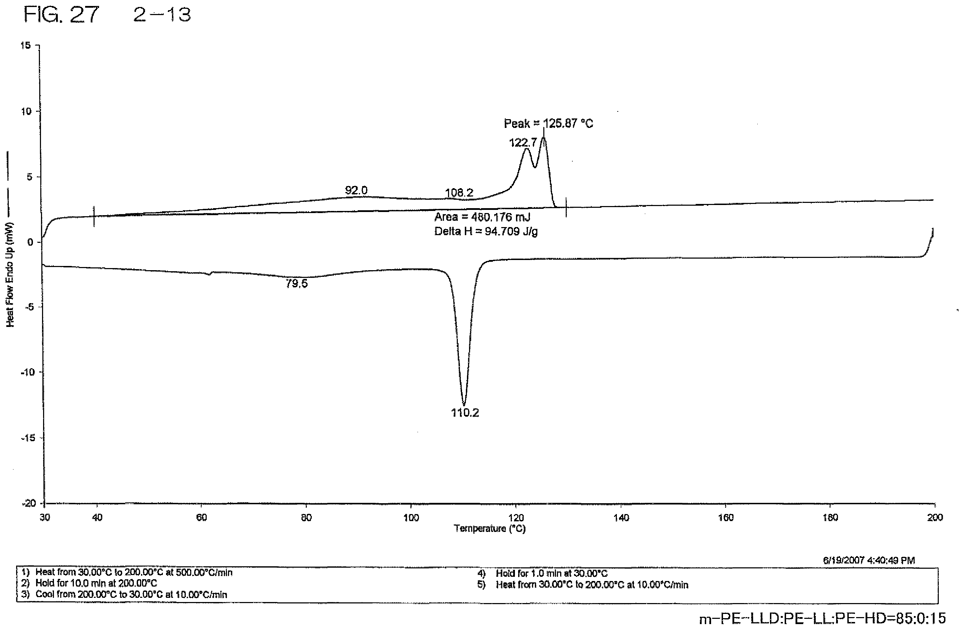

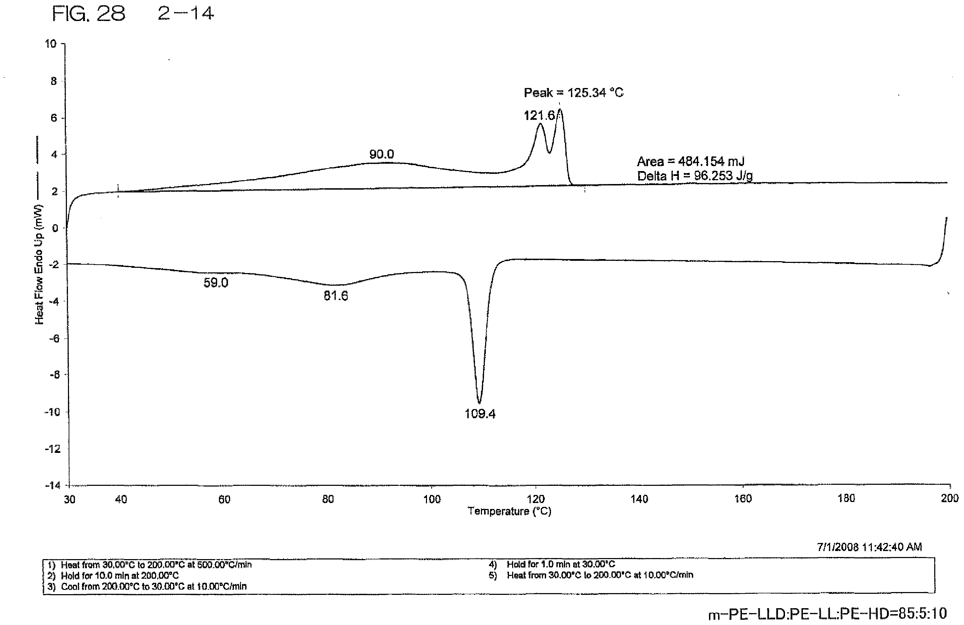

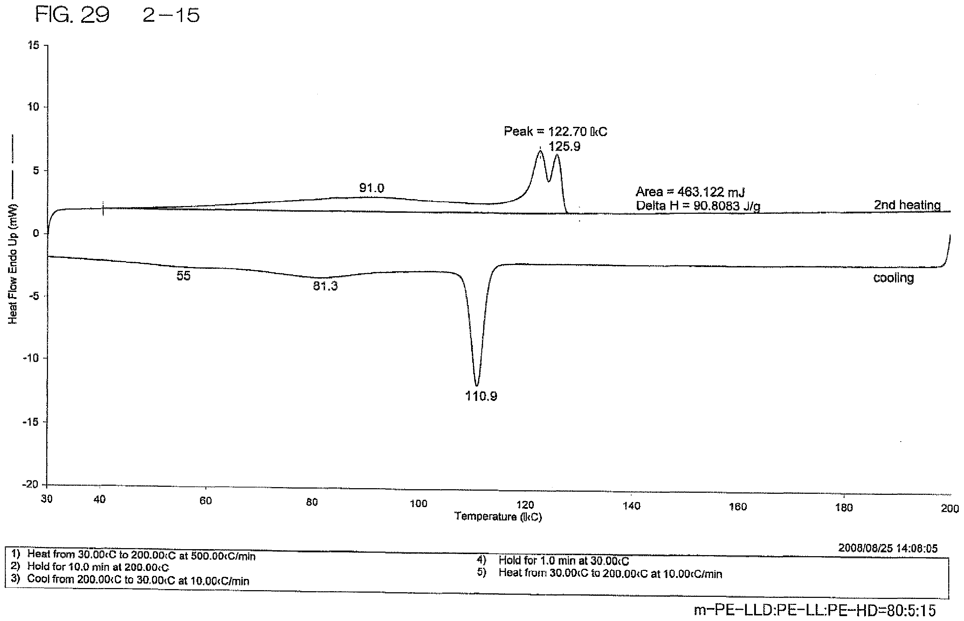

Also, as is clear from FIGS. 24-29, each of the DSC curves of the A-2 layers has a shape with the DSC melting point peak in the range of 120-126°C, and the second peak lower than the DSC melting point peak in the range of 90-105°C. Also, ΔH is ≥ 85 J/g. Also, the HL/Hp values are within the range of 0.20-0.50. Thus, both transparency and plate drop strength are realized at the same time.

The drug solution bags of Examples 21-24 (Tables 15 and 16) are examples in which resin materials of the same composition were used as the A-1 layers and the A-3 layers (A-1 layer: 1-5; A-3 layer: 1-6) and resin materials of different compositions were used as the A-2 layers and are a preferable range of examples among the examples.

The density of the polyethylene mixture making up each A-2 layer is 0.910-0.920 g/cm³. The composition of each polyethylene mixture is made of 40-55 wt.-% of the linear polyethylene having the density of 0.919 g/cm³ (PE-LLD in Table 1), 5-15 wt.-% of the high-density polyethylene having the density of 0.959 g/cm³ (PE-HD in Table 1), and 35-50 wt.-% of the polyethylene polymerized using the metallocene catalyst and having the density of 0.904 g/cm³ (m-PE-LLD in Table 1).

With all of these examples, the transparency of the multilayer film was good (A) or (B), and the plate drop strength was good (A) or (B). Also, whitening of the headspace portion and wrinkles were not observed.

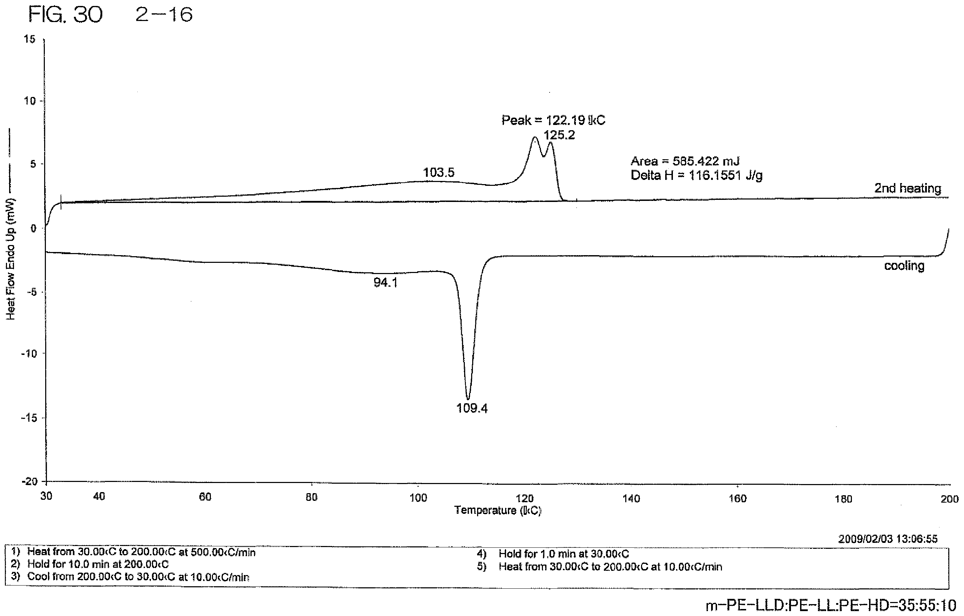

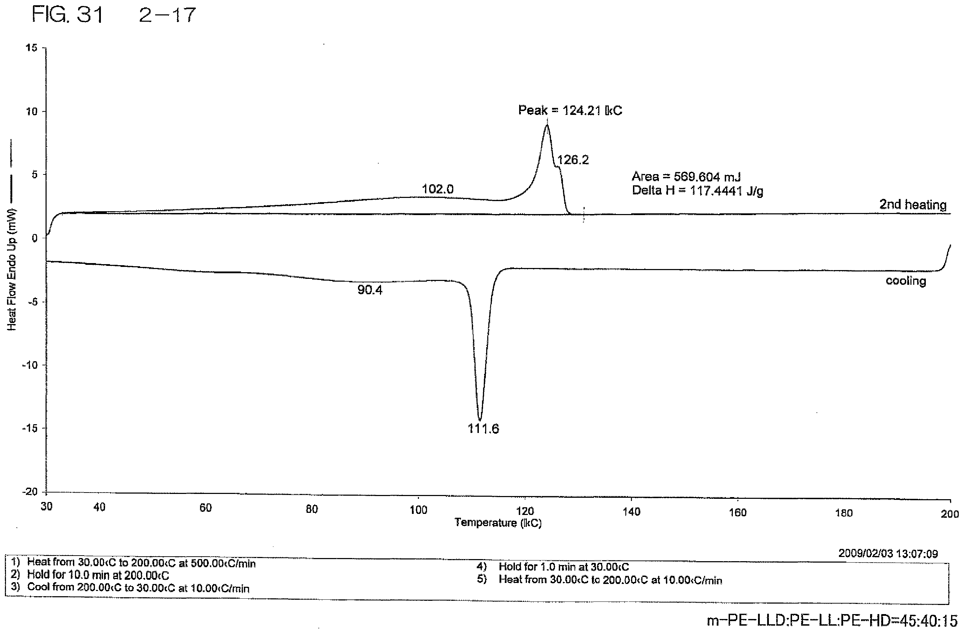

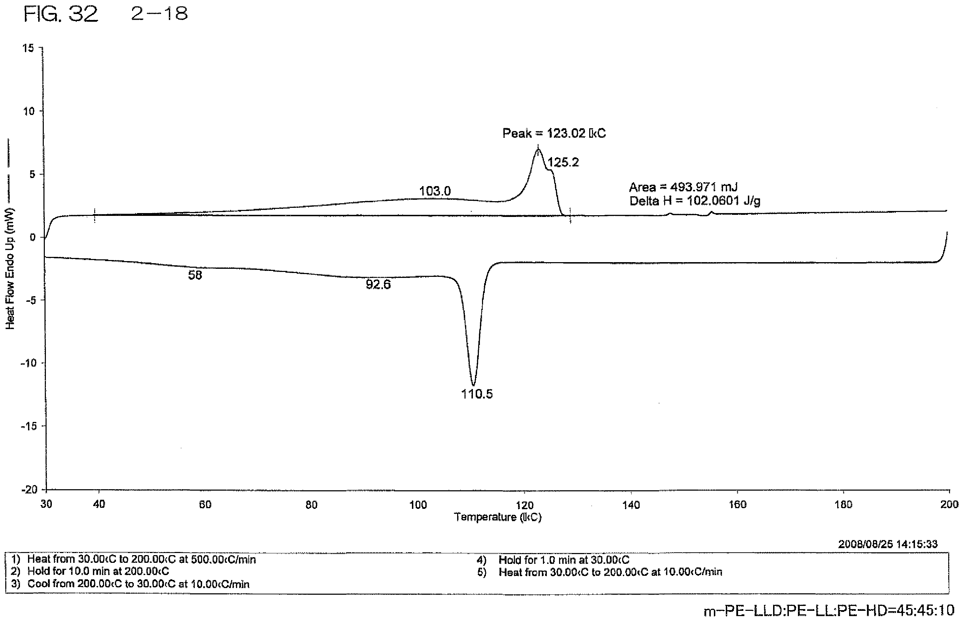

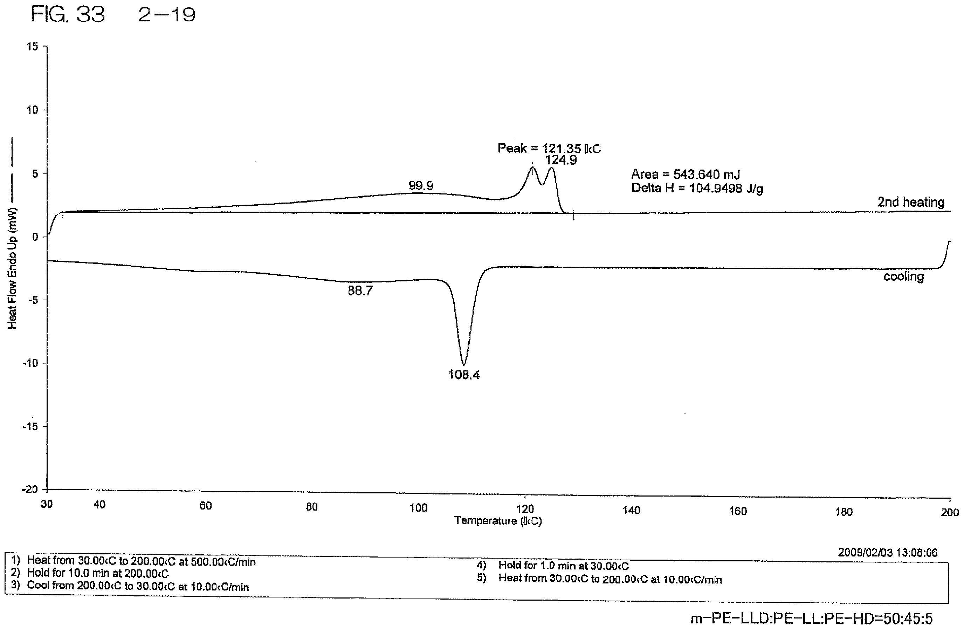

Also, as is clear from FIGS. 30-33, each of the DSC curves of the A-2 layers has a shape with the DSC melting point peak in the range of 120-126°C, and the second peak lower than the DSC melting point peak in the range of 90-105°C. Also, ΔH is ≥ 85 J/g. Also, the HL/Hp values are within the range of 0.20-0.50. Thus, both transparency and plate drop strength are realized at the same time.

The drug solution bags of Examples 25 and 26 (Table 17) are examples in which all three layers of the multilayer film were made of the resin materials of the same composition as the three layers of Example 1 and with which a proportion of thickness of the A-2 layer was changed. With both of these examples, the transparency of the multilayer film was good (A) or (B), and the plate drop strength was good (A). Also, whitening of the headspace portion and wrinkles were not observed.

On the other hand, with the drug solution bags of Comparative Examples 3-17 (Tables 20-25), at least one of the evaluation items among the transparency of the multilayer film, the whitening of the headspace portion, wrinkles of the drug solution bag, and the plate drop test was evaluated as failing.

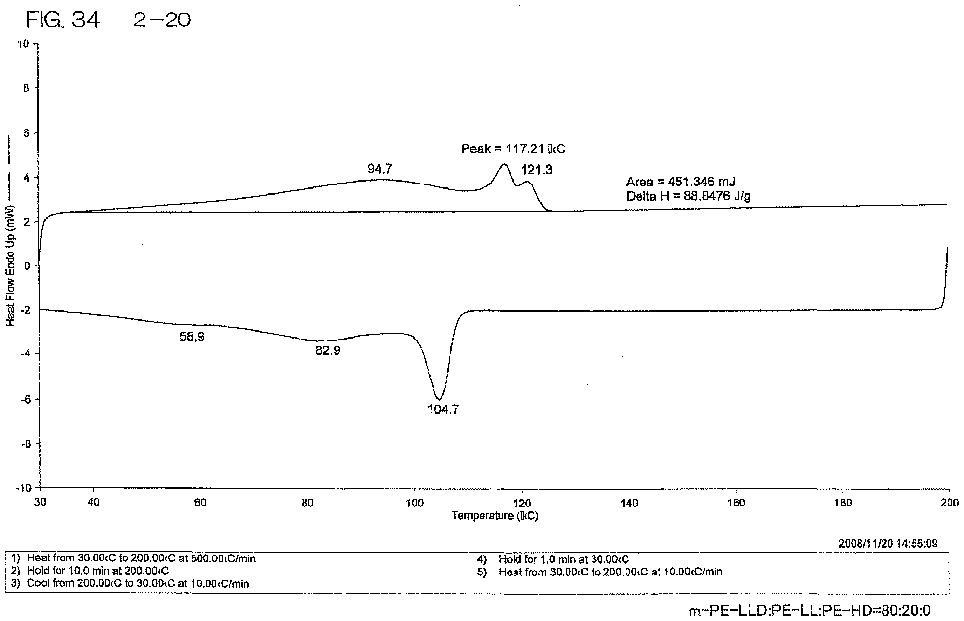

For example, with Comparative Example 3, the content of the high-density polyethylene (PE-HD in Table 1) in the A-2 layer was 0 wt.-%. The DSC melting point of the A-2 layer was thus 117.2°C (see FIG. 34) (the DSC melting point of the A-2 layer in the present invention is 120-126°C), and wrinkles were generated.

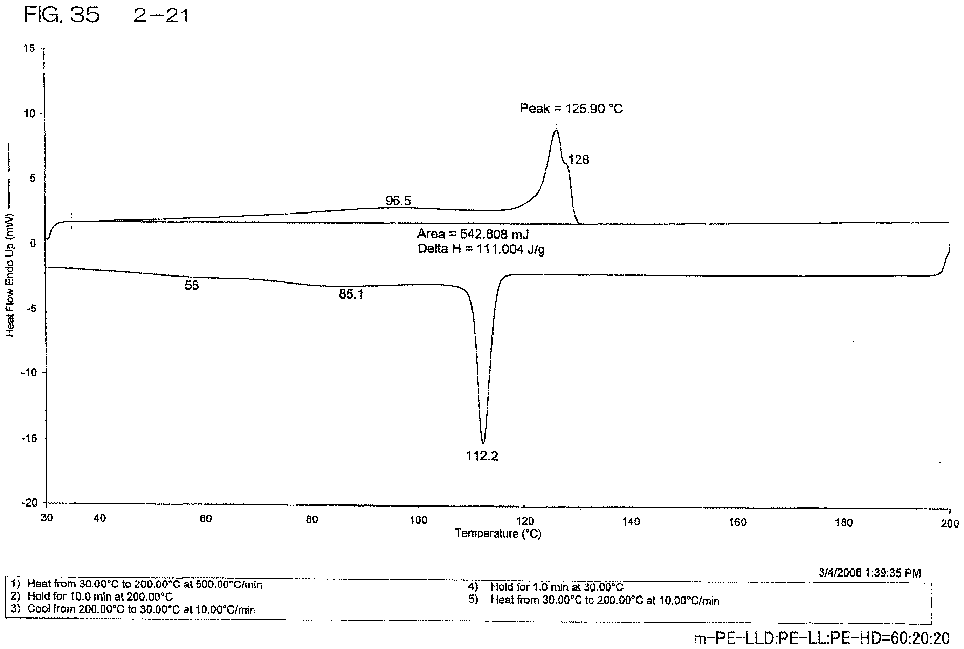

Also, with Comparative Example 4, the content of the high-density polyethylene (PE-HD in Table 1) in the A-2 layer was 20 wt.-%. Thus, in the DSC curve of the A-2 layer (see FIG. 35), HL/Hp = 0.17 (the preferable range in the present invention is 0.20-0.50) and the transparency was evaluated as failing.

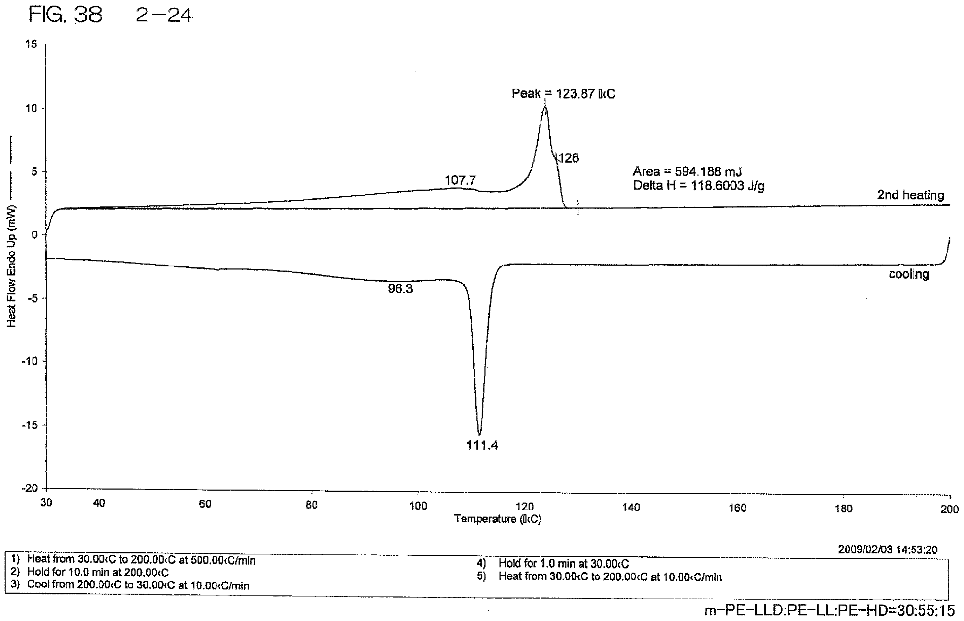

Also, with Comparative Example 7, the content of the polyethylene polymerized using the metallocene catalyst (m-PE-LLD in Table 1) in the A-2 layer was 30 wt.-%. Thus, in the DSC curve of the A-2 layer (see FIG. 38), the temperature of the second peak lower than the DSC melting point peak was 107.7°C (the preferable range in the present invention is 90-105°C), and the transparency was evaluated as failing and the plate drop strength was also low.

Further, with Comparative Example 10, the density of the A-2 layer was 0.908 g/cm³ and low in comparison to those of the examples. ΔH was thus 80.4 J/g (the preferable range in the present invention is not less than 85 J/g) and wrinkles were generated.

In regard to the examples and comparative examples of the multilayer film (III), the drug solution bags of Examples 29-32 (Table 26) are examples related to the B-1 layer and the B-5 layer. With all of these examples, the transparency of the multilayer film was good (A) and whitening of the headspace portion and wrinkles were not observed.

On the other hand, with the drug solution bags of Comparative Examples 18-21 (Table 31), at least one of the evaluation items among the transparency of the multilayer film, the whitening of the headspace portion, and wrinkles of the drug solution bag was evaluated as failing.

The drug solution bags of Example 29 (Table 26) and Example 33 (Table 26) are examples related to the B-3 layer. With both examples, the transparency of the multilayer film was good (A) and whitening of the headspace portion and wrinkles were not observed.

On the other hand, with the drug solution bags of Comparative Examples 22 and 23 (Table 31), at least one of the evaluation items among the transparency of the multilayer film, the whitening of the headspace portion, and wrinkles of the drug solution bag was evaluated as failing.

The drug solution bags of Examples 34-42 (Table 27 and Table 28) are the most preferable examples among the examples related to the B-2 layer and the B-4 layer. With each mixture, the density was 0.910-0.916 g/cm³, and the composition was made of 60-80 wt.-% of the polyethylene polymerized using the single-site catalyst and having the density of 0.904 g/cm³ (m-PE-LLD in Table 1), 10-30 wt.-% of the linear polyethylene having the density of 0.919 g/cm³ (PE-LLD in Table 1), and 5-15 wt.-% of the high-density polyethylene having the density of 0.959g/cm³ (PE-HD in Table 1) .

With all of these examples, the transparency of the multilayer film was good (A) or (B), and in particular, the plate drop strength, with which the densities of the B-2 layer and the B-4 layer are dominant factors, was (A) in all cases. Also, whitening of the headspace portion and wrinkles were not observed. Also, as is clear from FIGS. 15-23, each of the DSC curves has a shape having the DSC melting point peak at 120-126°C, and the second peak, lower than the DSC melting point peak, at 90-105°C. Also, ΔH is ≥ 85J/g. Also, the HL/Hp values are within the range of 0.20-0.50. Thus, both transparency and plate drop strength are realized at the same time.

The drug solution bags of Examples 43-48 (Tables 28 and 29) are the next most preferable examples among the examples related to the B-2 layer and the B-4 layer. With each mixture, the density was 0.910-0.918 g/cm³, and the composition was made of 50-85 wt.-% of the polyethylene polymerized using the single-site catalyst and having the density of 0.904 g/cm³ (m-PE-LLD in Table 1), 0-40 wt.-% of the linear polyethylene having the density of 0.919 g/cm³ (PE-LLD in Table 1), and 5-15 wt.-% of the high-density polyethylene having the density of 0.959 g/cm³ (PE-HD in Table 1).

With all of these examples, the transparency of the multilayer film was good (A) or (B), and the plate drop strength was good (A) or (B). Also, whitening of the headspace portion and wrinkles were not observed. Also, as is clear from FIGS. 24-29, each of the DSC curves has a shape having the DSC melting point peak at ≥ 120°C and < 126°C, and the second peak, lower than the DSC melting point peak, at 90-105°C. Also, ΔH is not less than 85 J/g, and the HL/Hp values are within the range of 0.20-0.50. Thus, both transparency and plate drop strength are realized at the same time.

The drug solution bags of Examples 49-52 (Table 30) are preferable range of examples among the examples related to the B-2 layer and the B-4 layer. With each mixture, the density was 0.910-0.920 g/cm³, and the composition was made of 35-85 wt.-% of the polyethylene polymerized using the single-site catalyst and having the density of 0.904 g/cm³ (m-PE-LLD in Table 1), 0-55 wt.-% of the linear polyethylene having the density of 0.919 g/cm³ (PE-LLD in Table 1), and 5-15 wt.-% of the high-density polyethylene having the density of 0.959 g/cm³ (PE-HD in Table 1) .

With all of these examples, the transparency of the multilayer film was good (A) or (B), and the plate drop strength was good (A) or (B). Also, whitening of the headspace portion and wrinkles were not observed. Also, as is clear from FIGS. 30-33, each of the DSC curves has a shape having the DSC melting point peak at ≥ 120°C and < 126°C, and the second peak, lower than the DSC melting point peak, at 90-105°C. Also, ΔH is not less than 85 J/g. Also, the HL/Hp values are within the range of 0.20-0.50. Thus, both transparency and plate drop strength are realized at the same time.

The drug solution bags of Examples 53 and 54 (Table 30) are examples, among the examples related to the B-2 layer and the B-4 layer, in which the proportions of thickness of the respective layers were changed. With both examples, the transparency of the multilayer film was good (A) or (B), and the plate drop strength was good (A). Also, whitening of the headspace portion and wrinkles were not observed.

The drug solution bag of Example 55 is an example in which the high pressure method polyethylene (HD-LDPE in Table 1) is used in combination in the B-3 layer. With this example, effects of alleviation of thinning of the sealed portion in the peripheral sealing process and alleviation of resulting of pinholes in the film due to heat sealing of the mouth member can be anticipated from the effects of the high pressure method polyethylene.

On the other hand, with the drug solution bags of Comparative Examples 24-34 (Tables 32 and 33), at least one of the evaluation items among the transparency of the multilayer film, the whitening of the headspace portion, wrinkles of the drug solution bag, and the plate drop test was evaluated as failing.

For example, with FIG. 34 (Comparative Example 24), the DSC melting point was 117°C (the required range is 120-126°C) and wrinkles were generated because the content of the high-density polyethylene (PE-HD in Table 1) was 0 wt.-%. Also, with FIG. 35 (Comparative Example 25), HL/Hp = 0.17 (the preferable range is 0.20-0.50) and the transparency was evaluated as failing because the content of the high-density polyethylene (PE-HD in Table 1) was 20 wt.-%.

Also, with FIG. 38 (Comparative Example 28), the second peak lower than the DSC melting point peak was at 108°C (the preferable temperature is ≤ 105°C) and the transparency was evaluated as failing and the plate drop strength was also low because the content of the polyethylene polymerized using the single-site catalyst (m-PE-LLD in Table 1) was 30 wt.-%.

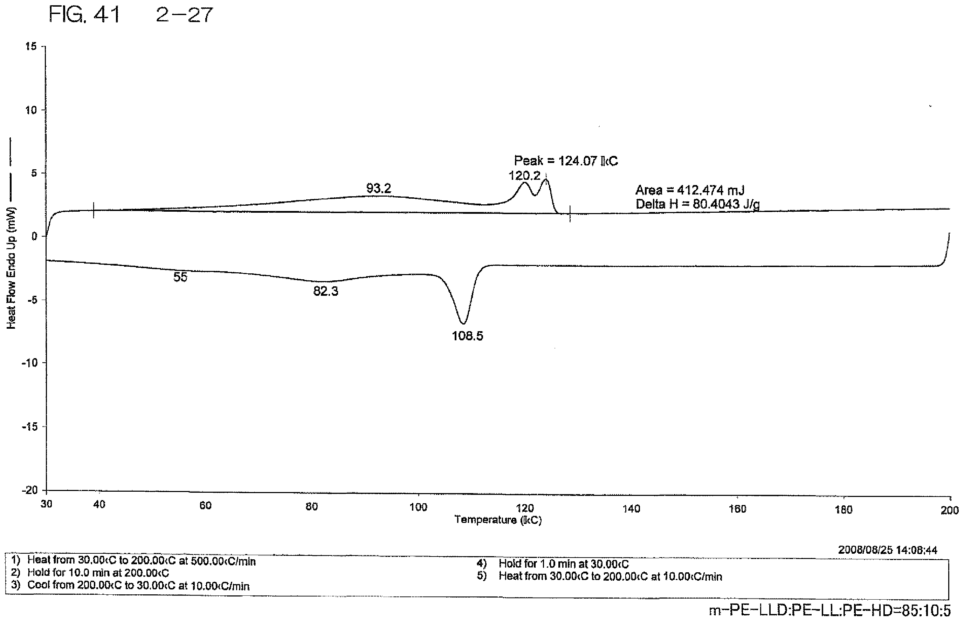

With FIG. 41 (Comparative Example 31), the density was 0.908 g/cm³ and low, and thus ΔH was 80 J/g (the preferable value is not less than 85 J/g) and wrinkles were generated.

### <TEST EXAMPLES>

### 1. Manufacture of multilayer films

Upon selecting a plurality of types of combinations of the A-1 layer, A-2 layer, and A-3 layer exemplified in the above-described embodiment, a plurality of multilayer films, made of a three-layer structure with a thickness of 240 µm, were manufactured by three-layer co-extrusion inflation molding.

### 2. Manufacture of drug solution bags

Further, the drug solution bags 6, shown in FIG. 2, were manufactured from the films obtained. The peripheral sealed portion 9 was formed by heat sealing the two multilayer films 4, 5 by a heat sealing die (see FIG. 3) . The conditions of the heat sealing of the peripheral sealed portion 9 were set to conditions of: a die temperature of 135°C; a pressure of 0.4 MPa; and 1.5 seconds. In regard to the size of the drug solution bag 6, the containment volume of the container portion 10 was set to approximately 1000 ml, the length (L1) in the longitudinal direction of the container portion 10 was set to 30.5 cm, and the width (W1) in the lateral direction was set to 21.3 cm (see FIG. 2) .

### 3. Evaluation tests of the drug solution bags

Each of the container portions 10 of the drug solution bags 6 obtained in the test examples were filled with 500 ml and 1000 ml of water for injection, sealed, and subject to 15 minutes of high-pressure shower sterilization process at 121°C.

### (1) Oxygen permeability

The oxygen permeability of each drug solution bag was measured by the same method as the method for measuring the oxygen permeability of the examples.

### (2) Water vapor permeability

The water vapor permeability of each drug solution bag was measured by the same method as the method for measuring the water vapor permeability of the examples.

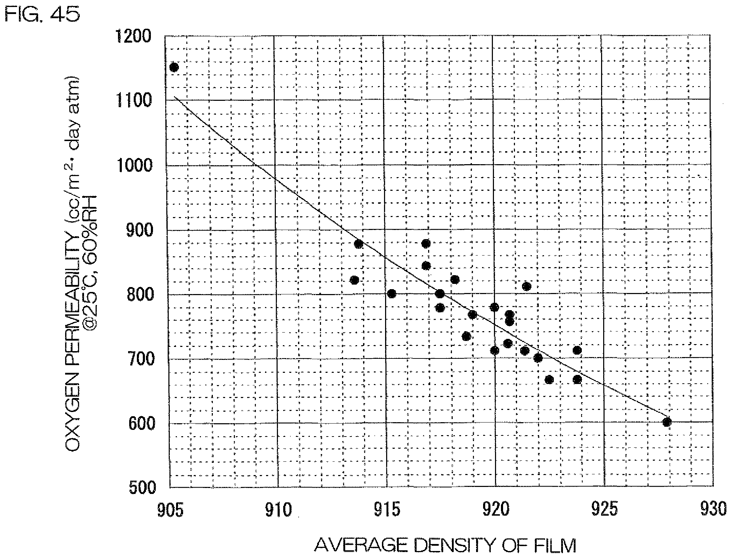

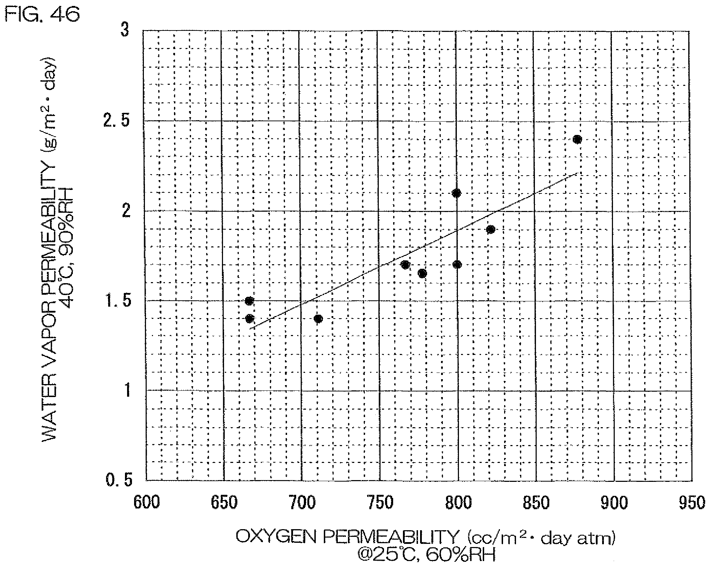

Based on the results obtained from (1) and (2), graphs of a relationship of average density and oxygen permeability of the film and a relationship of oxygen permeability and water vapor permeability of the film were prepared. The results are shown in FIG. 45 and FIG. 46.

As described above, in comparison to the comparison examples, multilayer films favorable for drug solution containing bags having heat resistance, transparency, and flexibility at the same time could be obtained in all of the examples of the present invention.

The present invention is not restricted to the above description, and various design changes can be applied within the scope of the matters described in the claims.

For example, although with the embodiments described above, the multilayer film made of a three-layer structure of the A-1 layer 1, the A-2 layer 2, and the A-3 layer 3, the multilayer film made of the B-1 layer 21, the B-2 layer 22, the B-3 layer 23, the B-4 layer 24, and the B-5 layer 25, and the drug solution bags 6, 26 formed using these multilayer films were taken up as examples, the multilayer film according to the present invention may be of an embodiment made of four layers, six layers, or a plural layers of an even larger number.

**Table 1**

| Abbreviation | Type of resin | Density (g/cm³) | DSC melting point (°C) | MFR (g/10min) | DSC chart |
|---|---|---|---|---|---|
| PE-L | Linear polyethylene polymerized using Ziegler catalyst (ethylene-1-butene copolymer) | 0.937 | 123.9 | 2.25 (190°C) | FIG. 5 |
| PE-L(2) | Linear polyethylene polymerized using Ziegler catalyst (ethylene-1-butene copolymer) | 0.928 | 117.9 | 2.25 (190°C) | FIG. 6 |
| PE-LLD | Linear polyethylene polymerized using Ziegler catalyst (ethylene-4-methyl-1-pentene copolymer) | 0.919 | 119.5 | 2.1 (190°C) | FIG. 7 |
| PE-HD | High-density polyethylene polymerized using Ziegler catalyst | 0.959 | 131.0 | 17.0 (190°C) | FIG. 8 |
| PE-HD(2) | High-density polyethylene polymerized using Ziegler catalyst | 0.967 | 133.2 | 15.0 (190°C) | FIG. 9 |
| m-PE-LLD | Linear low-density polyethylene polymerized using metallocene catalyst | 0.904 | 116.5 | 1.25 (190°C) | FIG. 10 |
| HD-LDPE | Polyethylene polymerized by the high pressure method | 0.928 | - | 1 | - |

**Table 2**

| Abbreviation | Composition of resin material | Density (g/cm³) | DSC melting point (°C) | DSC chart |
|---|---|---|---|---|
| 1-1 | PE-L+PE-HD (80:20) | 0.941 | 128.0 | FIG. 11 |
| 1-2 | PE-L+PE-HD (85:15) | 0.940 | 126.4 | FIG. 12 |
| 1-3 | PE-L+PE-HD (90:10) | 0.939 | 125.7 | FIG. 13 |
| 1-4 | PE-L+PE-HD (70:30) | 0.943 | 129.0 | - |
| 1-5 | PE-L+PE-HD(2) (75:25) | 0.944 | 128.5 | - |
| 1-6 | PE-L+PE-HD (75:25) | 0.942 | 128.4 | - |
| 1-7 | PE-L+PE-HD(2) (80:20) | 0.942 | 127.4 | - |
| 1-8 | PE-L+PE-HD(2) (70:30) | 0.945 | 129.0 | - |
| 1-9 | PE-L+PE-HD (70:30) | 0.943 | 128.0 | - |
| 1-10 | PE-L+PE-HD(2) (85:15) | 0.941 | 126.5 | - |
| 1-11 | PE-L+PE-HD(2) (50:50) | 0.942 | 129.7 | FIG. 14 |
| 1-12 | PE-L+PE-HD (65:35) | 0.944 | 129.0 | - |

**Table 3**

| Abbreviation | Composition of resin material | Density (g/cm³) | DSC melting point (°C) | DSC chart |
|---|---|---|---|---|
| 2-1 | PE-LLD+PE-HD+m-PE-LLD (20:10:70) | 0.912 | 124.9 | FIG. 15 |
| 2-2 | PE-LLD+PE-HD+m-PE-LLD (20:5:75) | 0.910 | 124.2 | FIG. 16 |
| 2-3 | PE-LLD+PE-HD+m-PE-LLD (20:15:65) | 0.915 | 124.2 | FIG. 17 |
| 2-4 | PE-LLD+PE-HD+m-PE-LLD (25:5:70) | 0.910 | 124.2 | FIG. 18 |
| 2-5 | PE-LLD+PE-HD+m-PE-LLD (15:15:70) | 0.914 | 123.5 | FIG. 19 |
| 2-6 | PE-LLD+PE-HD+m-PE-LLD (10:10:80) | 0.911 | 125.5 | FIG. 20 |
| 2-7 | PE-LLD+PE-HD+m-PE-LLD (10:15:75) | 0.913 | 123.2 | FIG. 21 |
| 2-8 | PE-LLD+PE-HD+m-PE-LLD (30:10:60) | 0.914 | 122.2 | FIG. 22 |
| 2-9 | PE-LLD+PE-HD+m-PE-LLD (25:15:60) | 0.915 | 123.7 | FIG. 23 |
| 2-10 | PE-LLD+PE-HD+m-PE-LLD (40:10:50) | 0.915 | 123.3 | FIG. 24 |
| 2-11 | PE-LLD+PE-HD+m-PE-LLD (30:15:55) | 0.916 | 123.9 | FIG. 25 |
| 2-12 | PE-LLD+PE-HD+m-PE-LLD (35:5:60) | 0.912 | 121.4 | FIG. 26 |
| 2-13 | PE-HD+m-PE-LLD (15:85) | 0.912 | 125.9 | FIG. 27 |
| 2-14 | PE-LLD+PE-HD+m-PE-LLD (5:10:85) | 0.910 | 125.3 | FIG. 28 |
| 2-15 | PE-LLD+PE-HD+m-PE-LLD (5:15:80) | 0.913 | 122.7 | FIG. 29 |
| 2-16 | PE-LLD+PE-HD+m-PE-LLD (55:10:35) | 0.917 | 122.2 | FIG. 30 |

| 2-17 | PE-LLD+PE-HD+m-PE-LLD (40:15:45) | 0.918 | 124.2 | FIG. 31 |
|---|---|---|---|---|
| 2-18 | PE-LLD+PE-HD+m-PE-LLD (45:10:45) | 0.916 | 123.0 | FIG. 32 |
| 2-19 | PE-LLD+PE-HD+m-PE-LLD (45:5:50) | 0.913 | 121.4 | FIG. 33 |
| 2-20 | PE-LLD+PE-HD+m-PE-LLD (20:0:80) | 0.907 | 117.2 | FIG. 34 |
| 2-21 | PE-LLD+PE-HD+m-PE-LLD (20:20:60) | 0.917 | 125.9 | FIG. 35 |
| 2-22 | PE-LLD+PE-HD+m-PE-LLD (30:0:70) | 0.908 | 117.7 | FIG. 36 |
| 2-23 | PE-LLD+PE-HD+m-PE-LLD (10:20:70) | 0.916 | 125.0 | FIG. 37 |
| 2-24 | PE-LLD+PE-HD+m-PE-LLD (55:15:30) | 0.920 | 123.9 | FIG. 38 |
| 2-25 | PE-LLD+PE-HD+m-PE-LLD (60:10:30) | 0.918 | 123.0 | FIG. 39 |
| 2-26 | PE-LLD+PE-HD+m-PE-LLD (60:5:35) | 0.915 | 121.4 | FIG. 40 |
| 2-27 | PE-LLD+PE-HD+m-PE-LLD (10:5:85) | 0.908 | 124.1 | FIG. 41 |
| 2-28 | PE-HD+m-PE-LLD (10:90) | 0.909 | 124.9 | FIG. 42 |
| 2-29 | PE-HD+m-PE-LLD (20:80) | 0.914 | 124.2 | FIG. 43 |
| 2-30 | PE-LLD+PE-HD+m-PE-LLD (5:20:75) | 0.915 | 123.9 | FIG. 44 |

**Table 4**

| Abbreviation | Composition of resin material | Density (g/cm³) | DSC melting point (°C) | DSC chart |
|---|---|---|---|---|
| 3-1 | PE-L alone | 0.937 | 123.8 | FIG. 5 |
| 3-2 | PE-L+PE-HD (95:5) | 0.938 | 124.8 | - |
| 3-3 | m-PE-LLD alone | 0.904 | 116.5 | FIG. 10 |
| 3-4 | PE-L(2) alone | 0.928 | 117.9 | FIG. 6 |
| 3-5 | HD-LDPE+PE-HD (95:10) | 0.931 | - | - |

**Table 5**

| | DSC peaks (°C) | DSC melting point Tpm (°C) | ΔH (J/g) | HL/Hp |
|---|---|---|---|---|
| FIG. 5 PE-L | 123.9 | 123.9 | 158.1 | - |
| FIG. 7 PE-LLD | 104.9/119.5/122.4 | 119.5 | 111.7 | - |
| FIG. 8 PE-HD | 130.8 | 130.8 | 208.3 | - |
| FIG. 10 m-PE-LLD | 90.5/116.5/120.5 | 116.5 | 78.5 | - |
| FIG. 6 PE-L(2) | 117.9 | 117.9 | 136.0 | - |
| FIG. 15 Mixture | 94.9/121.5/124.9 | 124.9 | 95.2 | 0.32 |

**Table 6**

| | DSC peaks (°C) | DSC melting point Tpm (°C) | ΔH (J/g) | HL/Hp |
|---|---|---|---|---|
| FIG. 20 2-6 | 93.7/122.0/125.5 | 125.5 | 96.4 | 0.35 |
| FIG. 21 2-7 | 94.6/123.2/126.1 | 123.2 | 94.7 | 0.24 |
| FIG. 22 2-8 | 97.0/122.2/125.4 | 122.2 | 101.1 | 0.29 |
| FIG. 23 2-9 | 98.1/123.7/125.9 | 123.7 | 102.9 | 0.22 |
| FIG. 24 2-10 | 103.4/123.3/125.8 | 123.2 | 98.9 | 0.29 |
| FIG. 25 2-11 | 99.2/123.9/126.0 | 123.9 | 102.6 | 0.21 |

**Table 7**

| | DSC peaks (°C) | DSC melting point Tpm (°C) | ΔH (J/g) | HL/Hp |
|---|---|---|---|---|
| FIG. 26 2-12 | 101.0/121.4/124.4 | 121.4 | 96.9 | 0.42 |
| FIG. 27 2-13 | 92.0/108.2/122.7/125.9 | 125.9 | 94.7 | 0.22 |
| FIG. 28 2-14 | 90.0/121.6/125.3 | 125.3 | 96.3 | 0.35 |
| FIG. 29 2-15 | 91.0/122.7/125.9 | 122.7 | 90.8 | 0.25 |
| FIG. 32 2-18 | 103.0/123.0/125.2 | 123.0 | 102.1 | 0.27 |

**Table 8**

| | DSC peaks (°C) | DSC melting point Tpm (°C) | ΔH (J/g) | HL/Hp |
|---|---|---|---|---|
| FIG. 35 2-21 | 96.5/125.9/128.0 | 125.9 | 111.0 | 0.17 |
| FIG. 39 2-25 | 107.3/123.0/125.1 | 123.0 | 114.6 | 0.25 |
| FIG. 41 2-27 | 93.2/120.2/124.1 | 124.1 | 80.4 | 0.51 |
| FIG. 42 2-28 | 92.0/121.0/124.9 | 124.9 | 86.7 | 0.32 |
| FIG. 43 2-29 | 91.5/124.2/126.4 | 124.2 | 98.2 | 0.20 |

**Table 9**

| | Example 1 | Example 2 | Example 3 |
|---|---|---|---|
| Layer arrangement | | | |
| | 1-5 | 1-7 | 1-8 |
| A-1 layer (outer layer) | PE-L+PE-HD(2) (75:25) | PE-L+PE-HD(2) (80:20) | PE-L+PE-HD(2) (70:30) |
| | 0.944g/cm³, 128.5°C | 0.942g/cm³, 127.4°C | 0.945g/cm³, 129.0°C |
| | 20µm | 20µm | 20µm |
| A-2 layer (intermediate layer) | 2-1 | 2-1 | 2-1 |
| | PE-LLD+PE-HD+m-PE-LLD (20:10:70) | | |
| | 0.912g/cm³, 124.9°C | | |
| | 200µm | 200µm | 200µm |
| | 1-6 | 1-6 | 1-6 |
| A-3 layer (inner layer) | PE-L+PE-HD (75:25) | | |
| | 0.942g/cm³, 128.4°C | | |
| | 20µm | 20µm | 20µm |
| Total thickness | 240µm | 240µm | 240µm |
| Average density of film | 0.917g/cm³ | 0.917g/cm³ | 0.917g/cm³ |
| Evaluation results | | | |
| Transparency | B (74%) | B (74%) | B (74%) |
| Whitening | None | None | None |
| Wrinkles | None | None | None |
| DSC curve of A-2 layer | | | |
| DSC melting point | 124.9 | 124.9 | 124.9 |
| Temperature of HL peak (°C) | 94.9 | 94.9 | 94.9 |
| ΔH | 95.2 | 95.2 | 95.2 |
| HL/HP | 0.32 | 0.32 | 0.32 |

**Table 10**

| | Example 4 | Example 5 | Example 6 |
|---|---|---|---|
| Layer arrangement | | | |
| | 1-5 | 1-5 | 1-5 |
| A-1 layer (outer layer) | | PE-L+PE-HD(2) (75:25) 0.944g/cm³, 128.5°C | |
| | 20µm | 20µm | 20µm |
| | 2-1 | 2-1 | 2-2 |
| A-2 layer (intermediate layer) | PE-LLD+PE-HD+m-PE-LLD (20:10:70) 0.912g/cm³, 124.9°C | | PE-LLD+PE-HD+m-PE-LLD (20:5:75) 0.910g/cm³, 124.2°C |
| | 200µm | 200µm | 200µm |
| | 1-2 | 1-9 | 1-6 |
| A-3 layer (inner layer) | PE-L+PE-HD (85:15) 0.940g/cm³, 126.4°C | PE-L+PE-HD (70:30) 0.943g/cm³, 128.0°C | PE-L+PE-HD (75:25) 0.942g/cm³, 128.4°C |
| | 20µm | 20µm | 20µm |
| Total thickness | 240µm | 240µm | 240µm |
| Average density of film | 0.917g/cm³ | 0.917g/cm³ | 0.915g/cm³ |
| Evaluation results | | | |
| Transparency | A (76%) | B (74%) | A (76%) |
| Whitening | None | None | None |
| Wrinkles | None | None | None |
| Plate drop strength | - | - | A (90cm) |
| Oxygen permeability | - | - | 860cc/cm² |
| Water vapor permeability | - | - | 2.2g/cm² |
| DSC curve of A-2 layer | | | |
| DSC melting point | 124.9 | 124.9 | 124.2 |
| Temperature of HL peak (°C) | 94.9 | 94.9 | 94.9 |
| ΔH | 95.2 | 95.2 | 87.0 |
| HL/HP | 0.32 | 0.32 | 0.47 |

**Table 11**

| | Example 7 | Example 8 | Example 9 |
|---|---|---|---|
| Layer arrangement | | | |
| | 1-5 | 1-5 | 1-5 |
| A-1 layer (outer layer) | | PE-L+PE-HD(2) (75:25) 0.944g/cm³, 128.5°C | |
| | 20µm | 20µm | 20µm |
| | 2-1 | 2-3 | 2-4 |
| A-2 layer (intermediate layer) | PE-LLD+PE-HD+m-PE-LLD (20:10:70) 0.912g/cm³, 124.9°C | PE-LLD+PE-HD+m-PE-LLD (20:15:65) 0.915g/cm³, 124.2°C | PE-LLD+PE-HD+m-PE-LLD (25:5:70) 0.910g/cm³, 124.2°C |
| | 200µm | 200µm | 200µm |
| | 1-6 | 1-6 | 1-6 |
| A-3 layer (inner layer) | | PE-L+PE-HD (75:25) 0.942g/cm³, 128.4°C | |
| | 20µm | 20µm | 20µm |
| Total thickness | 240µm | 240µm | 240µm |
| Average density of film | 0.917g/cm³ | 0.919g/cm³ | 0.916g/cm³ |
| Evaluation results | | | |
| Transparency | B (74%) | B (71%) | A (76%) |
| Whitening | None | None | None |
| Wrinkles | None | None | None |
| Plate drop strength | A (77cm) | A (60cm) | A (90cm) |
| Oxygen permeability | 844cc/cm² | 760cc/cm² | - |
| Water vapor permeability | 2.1g/cm² | 1.7g/cm² | - |
| DSC curve of A-2 layer | | | |
| DSC melting point (°C) | 124.9 | 124.2 | 124.2 |
| Temperature of HL peak (°C) | 94.9 | 96.1 | 95.8 |
| ΔH | 95.2 | 96.6 | 89.6 |
| HL/Hp | 0.32 | 0.25 | 0.41 |

**Table 12**

| | Example 10 | Example 11 | Example 12 |
|---|---|---|---|
| Layer arrangement | | | |
| | 1-5 | 1-5 | 1-5 |
| A-1 layer (outer layer) | | PE-L+PE-HD(2) (75:25) 0.944g/cm³, 128.5°C | |
| | 20µm | 20µm | 20µm |
| | 2-5 | 2-6 | 2-7 |
| A-2 layer (intermediate layer) | PE-LLD+PE-HD+m-PE-LLD (15:15:70) 0.914g/cm³, 123.5°C | PE-LLD+PE-HD+m-PE-LLD (10:10:80) 0.911g/cm³, 125.5°C | PE-LLD+PE-HD+m-PE-LLD (10:15:75) 0.913g/cm³, 123.2°C |
| | 200µm | 200µm | 200µm |
| | 1-6 | 1-6 | 1-6 |
| A-3 layer (inner layer) | | PE-L+PE-HD (75:25) 0.942g/cm³, 128.4°C | |
| | 20µm | 20µm | 20µm |
| Total thickness | 240µm | 240µm | 240µm |
| Average density of film | 0.919g/cm³ | 0.916g/cm³ | 0.918g/cm³ |
| Evaluation results | | | |
| Transparency | B (72%) | A (75%) | B (73%) |
| Whitening | None | None | None |
| Wrinkles | None | None | None |
| Plate drop strength | A (65cm) | A (85cm) | A (70cm) |
| DSC curve of A-2 layer | | | |
| DSC melting point | 123.5 | 125.5 | 123.2 |
| Temperature of HL peak (°C) | 94.9 | 93.7 | 94.6 |
| ΔH | 95.0 | 96.4 | 97.7 |
| HL/Hp | 0.25 | 0.35 | 0.24 |

**Table 13**

| | Example 13 | Example 14 | Example 15 |
|---|---|---|---|
| Layer arrangement | | | |
| | 1-5 | 1-5 | 1-5 |
| A-1 layer (outer layer) | | PE-L+PE-HD(2) (75:25) 0.944g/cm³, 128.5°C | |
| | 20µm | 20µm | 20µm |
| | 2-8 | 2-9 | 2-10 |
| A-2 layer (intermediate layer) | PE-LLD+PE-HD+m-PE-LLD (30:10:60) 0.914g/cm³, 122.2°C | PE-LLD+PE-HD+m-PE-LLD (25:15:60) 0.915g/cm³, 123.7°C | PE-LLD+PE-HD+m-PE-LLD (40:10:50) 0.915g/cm³, 123.3°C |
| | 200µm | 200µm | 200µm |
| | 1-6 | 1-6 | 1-6 |
| A-3 layer (inner layer) | | PE-L+PE-HD (75:25) 0.942g/cm³, 128.4°C | |
| | 20µm | 20µm | 20µm |
| Total thickness | 240µm | 240µm | 240µm |
| Average density of film | 0.918g/cm³ | 0.920g/cm³ | 0.920g/cm³ |
| Evaluation results | | | |
| Transparency | B (72%) | B (71%) | B (71%) |
| Whitening | None | None | None |
| Wrinkles | None | None | None |
| Plate drop strength | A (67cm) | A (60cm) | A (60cm) |
| DSC curve of A-2 layer | | | |
| DSC melting point | 122.2 | 123.7 | 123.3 |
| Temperature of HL peak (°C) | 97.0 | 98.1 | 103.4 |
| ΔH | 101.1 | 102.9 | 98.9 |
| HL/Hp | 0.29 | 0.22 | 0.29 |

**Table 14**

| | Example 16 | Example 17 | Example 18 |
|---|---|---|---|
| Layer arrangement | | | |
| | 1-5 | 1-5 | 1-5 |
| A-1 layer (outer layer) | | PE-L+PE-HD(2) (75:25) 0.944g/cm³, 128.5°C | |
| | 20µm | 20µm | 20µm |
| | 2-11 | 2-12 | 2-13 |
| A-2 layer (intermediate layer) | PE-LLD+PE-HD+m-PE-LLD (30:15:55) 0.916g/cm³, 123.4°C | PE-LLD+PE-HD+m-PE-LLD (35:5:60) 0.912g/cm³, 121.4°C | PE-HD+m-PE-LLD (15:85) 0.912g/cm³, 125.9°C |
| | 200µm | 200µm | 200µm |
| | 1-6 | 1-6 | 1-6 |
| A-3 layer (inner layer) | | PE-L+PE-HD (75:25) 0.942g/cm³, 128.4°C | |
| | 20µm | 20µm | 20µm |
| Total thickness | 240µm | 240µm | 240µm |
| Average density of film | 0.921g/cm³ | 0.917g/cm³ | 0.917g/cm³ |
| Evaluation results | | | |
| Transparency | B (70%) | B (74%) | B (74%) |
| Whitening | None | None | None |
| Wrinkles | None | None | None |
| Plate drop strength | B (50cm) | A (80cm) | A (80cm) |
| Oxygen permeability | 730cc/cm² | - | - |
| Water vapor permeability | 1.6g/ m² | - | - |
| DSC curve of A-2 layer | | | |
| DSC melting point (°C) | 123.9 | 121.4 | 125.9 |
| Temperature of HL peak (°C) | 99.2 | 101.0 | 92.0 |
| ΔH | 102.6 | 96.9 | 94.7 |
| HL/Hp | 0.21 | 0.42 | 0.22 |

**Table 15**

| | Example 19 | Example 20 | Example 21 |
|---|---|---|---|
| Layer arrangement | | | |
| | 1-5 | 1-5 | 1-5 |
| A-1 layer (outer layer) | | PE-L+PE-HD(2) (75:25) 0.944g/cm³, 128.5°C | |
| | 20µm | 20µm | 20µm |
| | 2-14 | 2-15 | 2-16 |
| A-2 layer (intermediate layer) | PE-LLD+PE-HD+m-PE-LLD (5:10:85) 0.910g/cm³, 125.3°C | PE-LLD+PE-HD+m-PE-LLD (5:15:80) 0.913g/cm³, 122.7°C | PE-LLD+PE-HD+m-PE-LLD (55:10:35) 0.917g/cm³, 122.2°C |
| | 200µm | 200µm | 200µm |
| | 1-6 | 1-6 | 1-6 |
| A-3 layer (inner layer) | | PE-L+PE-HD (75:25) 0.942g/cm³, 128.4°C | |
| | 20µm | 20µm | 20µm |
| Total thickness | 240µm | 240µm | 240µm |
| Average density of film | 0.915g/cm³ | 0.918g/cm³ | 0.922g/cm³ |
| Evaluation results | | | |
| Transparency | A (76%) | B (73%) | B (71%) |
| Whitening | None | None | None |
| Wrinkles | None | None | None |
| Plate drop strength | A (90cm) | A (75cm) | B (41cm) |
| DSC curve of A-2 layer | | | |
| DSC melting point | 125.3 | 122.7 | 122.2 |
| Temperature of HL peak (°C) | 90.0 | 91.0 | 103.5 |
| ΔH | 96.3 | 90.8 | 116.2 |
| HL/Hp | 0.35 | 0.35 | 0.34 |

**Table 16**

| | Example 22 | Example 23 | Example 24 |
|---|---|---|---|
| Layer arrangement | | | |
| | 1-5 | 1-5 | 1-5 |
| A-1 layer (outer layer) | | PE-L+PE-HD(2) (75:25) 0.944g/cm³, 128.5°C | |
| | 20µm | 20µm | 20µm |
| | 2-17 | 2-18 | 2-19 |
| A-2 layer (intermediate layer) | PE-LLD+PE-HD+m-PE-LLD (40:15:45) 0.918g/cm³, 124.2°C | PE-LLD+PE-HD+m-PE-LLD (45:10:45) 0.916g/cm³, 123.0°C | PE-LLD+PE-HD+m-PE-LLD (45:5:50) 0.913g/cm³, 121.4°C |
| | 200µm | 200µm | 200µm |
| | 1-6 | 1-6 | 1-6 |
| A-3 layer (inner layer) | | PE-L+PE-HD (75:25) 0.942g/cm³, 128.4°C | |
| | 20µm | 20µm | 20µm |
| Total thickness | 240µm | 240µm | 240µm |
| Average density of film | 0.922g/cm³ | 0.920g/cm³ | 0.918g/cm³ |
| Evaluation results | | | |
| Transparency | B (70%) | B (71%) | B (73%) |
| Whitening | None | None | None |
| Wrinkles | None | None | None |
| Plate drop strength | B (40cm) | B (53cm) | A (72cm) |
| Oxygen permeability | 710cc/cm² | - | - |
| Water vapor permeability | 1.5g/ m² | - | - |
| DSC curve of A-2 layer | | | |
| DSC melting point | 124.2 | 123.0 | 121.4 |
| Temperature of HL peak (°C) | 102.0 | 103.0 | 99.0 |
| ΔH | 117.4 | 102.1 | 104.9 |
| HL/Hp | 0.20 | 0.27 | 0.44 |

**Table 17**

| | Example 25 | Example 26 |
|---|---|---|
| Layer arrangement | | |
| | 1-5 | 1-5 |
| A-1 layer (outer layer) | PE-L+PE-HD(2) (75:25) 0.944g/cm³, 128.5°C | |
| | 20µm | 20µm |
| A-2 layer (intermediate layer) | 2-1 | 2-1 |
| | PE-LLD+PE-HD+m-PE-LLD (20:10:70) 0.912g/cm³, 124.9°C | |
| | 220µm | 180µm |
| | 1-6 | 1-6 |
| A-3 layer (inner layer) | PE-L+PE-HD (75:25) 0.942g/cm³, 128.4°C | |
| | 20µm | 20µm |
| Total thickness | 260µm | 220µm |
| Average density of film | 0.917g/cm³ | 0.918g/cm³ |
| Evaluation results | | |
| Transparency | B (70%) | B (74%) |
| Whitening | None | None |
| Wrinkles | None | None |
| Plate drop strength | A (60cm) | A (72cm) |
| DSC curve of A-2 layer | | |
| DSC melting point | 124.9 | 124.9 |
| Temperature of HL peak (°C) | 94.9 | 94.9 |
| ΔH | 95.2 | 95.2 |
| HL/Hp | 0.32 | 0.32 |

**Table 18**

| | Example 27 | Example 28 |
|---|---|---|
| Layer arrangement | | |
| | 1-11 | 1-5 |
| A-1 layer (outer layer) | PE-L+PE-HD(2) (50:50) 0.952g/cm³, 129.8°C | PE-L+PE-HD(2) (75:25) 0.944g/cm³, 128.5°C |
| | 20µm | 20µm |
| A-2 layer (intermediate layer) | 2-1 | 2-1 |
| | PE-LLD+PE-HD+m-PE-LLD (20:10:70) 0.912g/cm³, 124.9°C | |
| | 200µm | 200µm |
| | 1-6 | 1-11 |
| A-3 layer (inner layer) | PE-L+PE-HD (75:25) 0.942g/cm³, 128.4°C | PE-L+PE-HD(2) (50:50) 0.944g/cm³, 129.8°C |
| | 20µm | 20µm |
| Total thickness | 240µm | 240µm |
| Average density of film | 0.918g/cm³ | 0.918g/cm³ |
| Evaluation results | | |
| Transparency | B (70%) | B (70%) |
| Whitening | None | None |
| Wrinkles | None | None |
| DSC curve of A-2 layer | | |
| DSC melting point | 124.9 | 124.9 |
| Temperature of HL peak (°C) | 94.9 | 94.9 |
| ΔH | 95.2 | 95.2 |
| HL/Hp | 0.32 | 0.32 |

**Table 19**

| | Comparative Example 1 | Comparative Example 2 |
|---|---|---|
| Layer arrangement | | |
| | 1-3 | 1-5 |
| A-1 layer (outer layer) | PE-L+PE-HD (90:10) | PE-L+PE-HD(2) (75:25) |
| | 0.939g/cm³, 125.7°C | 0.944g/cm³, 128.5°C |
| | 20µm | 20µm |
| A-2 layer (intermediate layer) | 2-1 | 2-1 |
| | PE-LLD+PE-HD+m-PE-LLD (20:10:70) | |
| | 0.912g/cm³, 124.9°C | |
| | 200µm | 200µm |
| | 1-6 | 3-1 |
| A-3 layer (inner layer) | PE-L+PE-HD (75:25) | PE-L alone |
| | 0.942g/cm³, 128.4°C | 0.937g/cm³, 123.8°C |
| | 20µm | 20µm |
| Total thickness | 240µm | 240µm |
| Average density of film | 0.917/cm³ | 0.917/cm³ |
| Evaluation results | | |
| Transparency | B (74%) | - |
| Whitening | Present | Present |
| Wrinkles | Present (entirety) | Present |
| DSC curve of A-2 layer | | |
| DSC melting point | 124.9 | 124.9 |
| Temperature of HL peak (°C) | 94.9 | 94.9 |
| ΔH | 95.2 | 95.2 |
| HL/Hp | 0.32 | 0.32 |

**Table 20**

| | Comparative Example 3 | Comparative Example 4 |
|---|---|---|
| Layer arrangement | | |
| | 1-5 | 1-5 |
| A-1 layer (outer layer) | PE-L+PE-HD(2) (75:25) | |
| | 0.944g/cm³, 128.5°C | |
| | 20µm | 20µm |
| | 2-20 | 2-21 |
| A-2 layer (intermediate layer) | PE-LLD+PE-HD+m-PE-LLD (20:0:80) | PE-LLD+PE-HD+m-PE-LLD (20:20:60) |
| | 0.907g/cm³, 117.2°C | 0.917g/cm³, 125.9°C |
| | 200µm | 200µm |
| | 1-6 | 1-6 |
| A-3 layer (inner layer) | PE-L+PE-HD (75:25) | |
| | 0.942g/cm³, 128.4°C | |
| | 20µm | 20µm |
| Total thickness | 240µm | 240µm |
| Average density of film | 0.913/cm³ | 0.922/cm³ |
| Evaluation results | | |
| Transparency | - | C (68%) |
| Whitening | Present (entirety) | None |
| Wrinkles | Present (entirety) | None |
| Plate drop strength | - | C (35cm) |
| DSC curve of A-2 layer | | |
| DSC melting point | 117.2 | 125.9 |
| Temperature of HL peak (°C) | 94.7 | 96.5 |
| ΔH | 88.8 | 111.0 |
| HL/Hp | 0.69 | 0.17 |

**Table 21**

| | Comparative Example 5 | Comparative Example 6 | Comparative Example 7 |
|---|---|---|---|
| Layer arrangement | | | |
| | 1-5 | 1-5 | 1-5 |
| A-1 layer (outer layer) | PE-L+PE-HD(2) (75:25) | | |
| | 0.944g/cm³, 128.5°C | | |
| | 20µm | 20 µm | 20µm |
| | 2-22 | 2-23 | 2-24 |
| A-2 layer (intermediate layer) | PE-LLD+PE-HD+m-PE-LLD (30:0:70) | PE-LLD+PE-HD+m-PE-LLD (10:20:70) | PE-LLD+PE-HD+m-PE-LLD (55:15:30) |
| | 0.908g/cm³, 117.7°C | 0.916g/cm³, 125.0°C | 0.920g/cm³, 123.9°C |
| | 200µm | 200µm | 200µm |
| | 1-6 | 1-6 | 1-6 |
| A-3 layer (inner layer) | PE-L+PE-HD (75:25) | | |
| | 0.942g/cm³, 128.4°C | | |
| | 20µm | 20 µm | 20µm |
| Total thickness | 240µm | 240µm | 240µm |
| Average density of film | 0.914g/cm³ | 0.920g/cm³ | 0.924g/cm³ |
| Evaluation results | | | |
| Transparency | - | C (69%) | C (64%) |
| Whitening | Present (entirety) | None | None |
| Wrinkles | Present (entirety) | None | None |
| Plate drop strength | - | B (40cm) | C (20cm) |
| DSC curve of A-2 layer | | | |
| DSC melting point | 117.7 | 125.0 | 123.9 |
| Temperature of HL peak (°C) | 96.4 | 93.7 | 107.7 |
| ΔH | 93.2 | 113.3 | 118.6 |
| HL/Hp | 0.71 | 0.18 | 0.22 |

**Table 22**

| | Comparative Example 8 | Comparative Example 9 | Comparative Example 10 |
|---|---|---|---|
| Layer arrangement | | | |
| | 1-5 | 1-5 | 1-5 |
| A-1 layer (outer layer) | PE-L+PE-HD(2) (75:25) | | |
| | 0.944g/cm³, 128.5°C | | |
| | 20µm | 20µm | 20µm |
| | 2-25 | 2-26 | 2-27 |
| A-2 layer (intermediate layer) | PE-LLD+PE-HD+m-PE-LLD (60:10:30) | PE-LLD+PE-HD+m-PE-LLD (60:5:35) | PE-LLD+PE-HD+m-PE-LLD (10:5:85) |
| | 0.918g/cm³, 123.0°C | 0.915g/cm³, 121.4°C | 0.908g/cm³, 124.1°C |
| | 200µm | 200µm | 200µm |
| | 1-6 | 1-6 | 1-6 |
| A-3 layer (inner layer) | PE-L+PE-HD (75:25) | | |
| | 0.942g/cm³, 128.4°C | | |
| | 20µm | 20µm | 20µm |
| Total thickness | 240µm | 240µm | 240µm |
| Average density of film | 0.921g/cm³ | 0.920g/cm³ | 0.914g/cm³ |
| Evaluation results | | | |
| Transparency | C (68%) | C (69%) | - |
| Whitening | None | None | Present |
| Wrinkles | None | None | Present (entirety) |
| Plate drop strength | C (30cm) | B (40cm) | - |
| DSC curve of A-2 layer | | | |
| DSC melting point | 123.0 | 121.4 | 124.1 |
| Temperature of HL peak (°C) | 107.3 | 104.0 | 93.2 |
| ΔH | 114.6 | 112.8 | 80.4 |
| HL/Hp | 0.25 | 0.41 | 0.51 |

**Table 23**

| | Comparative Example 11 | Comparative Example 12 | Comparative Example 13 |
|---|---|---|---|
| Layer arrangement | | | |
| | 1-5 | 1-5 | 1-5 |
| A-1 layer (outer layer) | PE-L+PE-HD(2) (75:25) | | |
| | 0.944g/cm³, 128.5°C | | |
| | 20µm | 20µm | 20µm |
| | 2-28 | 2-29 | 2-30 |
| A-2 layer (intermediate layer) | PE-HD+m-PE-LLD (10:90) | PE-HD+m-PE-LLD (20:80) | PE-LLD+PE-HD+m-PE-LLD (5:20:75) |
| | 0.909g/cm³, 124.9°C | 0.914g/cm³, 124.2°C | 0.915g/cm³, 123.9°C |
| | 200µm | 200µm | 200µm |
| | 1-6 | 1-6 | 1-6 |
| A-3 layer (inner layer) | PE-L+PE-HD (75:25) | | |
| | 0.942g/cm³, 128.4°C | | |
| | 20µm | 20µm | 20µm |
| Total thickness | 240µm | 240µm | 240µm |
| Average density of film | 0.915g/cm³ | 0.920g/cm³ | 0.920g/cm³ |
| Evaluation results | | | |
| Transparency | A (76%) | C (69%) | C (68%) |
| Whitening | None | None | None |
| Wrinkles | Present (mouth member) | None | None |
| Plate drop strength | A (92cm) | A (62cm) | A (60cm) |
| DSC curve of A-2 layer | | | |
| DSC melting point | 124.9 | 124.2 | 123.9 |
| Temperature of HL peak (°C) | 92.0 | 91.5 | 91.7 |
| ΔH | 86.7 | 98.2 | 105.7 |
| HL/Hp | 0.32 | 0.19 | 0.23 |

**Table 24**

| | Comparative Example 14 | Comparative Example 15 |
|---|---|---|
| Layer arrangement | | |
| | 1-5 | 1-5 |
| A-1 layer (outer layer) | PE-L+PE-HD(2) (75:25) | |
| | 0.944g/cm³, 128.5°C | |
| | 20µm | 20µm |
| A-2 layer (intermediate layer) | 2-1 | 2-1 |
| | PE-LLD+PE-HD+m-PE-LLD (20:10:70) | |
| | 0.912g/cm³, 124.9°C | |
| | 260µm | 135µm |
| | 1-6 | 1-6 |
| A-3 layer (inner layer) | PE-L+PE-HD (75:25) | |
| | 0.942g/cm³, 128.4°C | |
| | 20µm | 20µm |
| Total thickness | 300µm | 175µm |
| Average density of film | 0.916g/cm³ | 0.919g/cm³ |
| Evaluation results | | |
| Transparency | C (65%) | A (75%) |
| Whitening | None | Present |
| Wrinkles | None | Present |
| Plate drop strength | A (60cm) | C (30cm) |
| DSC curve of A-2 layer | | |
| DSC melting point | 124.9 | 124.9 |
| Temperature of HL peak (°C) | 94.9 | 94.9 |
| ΔH | 95.2 | 95.2 |
| HL/Hp | 0.32 | 0.32 |

**Table 25**

| | Comparative Example 16 | Comparative Example 17 |
|---|---|---|
| Layer arrangement | | |
| | 2-13 | 1-5 |
| A-1 layer (outer layer) | PE-HD+m-PE-LLD (15:85) | PE-L+PE-HD(2) (75:25) |
| | 0.912g/cm³, 125.9°C | 0.944g/cm³, 128.5°C |
| | 20 µm | 20µm |
| A-2 layer (intermediate layer) | 2-17 | 2-17 |
| | PE-LLD+PE-HD+m-PE-LLD (40:15:45) | |
| | 0.918g/cm³, 124.2°C | |
| | 200µm | 200µm |
| | 1-6 | 2-1 |
| A-3 layer (inner layer) | PE-L+PE-HD (75:25) | PE-LLD+PE-HD+m-PE-LLD (20:10:70) |
| | 0.942g/cm³, 128.4°C | 0.912g/cm³, 124.9°C |
| | 20µm | 20 µm |
| Total thickness | 240µm | 240µm |
| Average density of film | 0.g/gg/cm³ | 0.919g/cm³ |
| Evaluation results | | |
| Transparency | Impossible to evaluate due to deformation | Impossible to evaluate due to deformation |
| Whitening | Impossible to evaluate due to deformation | Impossible to evaluate due to deformation |
| Wrinkles | Impossible to evaluate due to deformation | Impossible to evaluate due to deformation |
| DSC curve of A-2 layer | | |
| DSC melting point | 125.9 | 125.9 |
| Temperature of HL peak (°C) | 92.0 | 92.0 |
| ΔH | 94.7 | 94.7 |
| HL/Hp | 0.22 | 0.22 |

**Table 26**

| | Outer layer/Inner layer Examples 29 to 32 Intermediate layer Example 33 | | | | | | | | |
|---|---|---|---|---|---|---|---|---|---|
| | [Example 29] | | [Example 30] | | [Example 31] | | [Example 32] | | [Example 33] |
| B-1 layer | 1-1 20µm | | 1-3 20µm | | 1-1 20µm | | 1-1 20µm | | 1-1 20µm |
| B-2 layer | 2-1 90µm | | 2-1 90µm | | 2-1 90µm | | 2-1 90µm | | 2-1 90µm |
| B-3 layer | 3-1 20µm | | 3-1 20µm | | 3-1 20µm | | 3-1 20µm | | 3-2 20µm |
| B-4 layer | 2-1 90µm | | 2-1 90µm | | 2-1 90µm | | 2-1 90µm | | 2-1 90µm |
| B-5 layer | 1-2 30µm | | 1-2 30µm | | 1-3 20µm | | 1-1 20µm | | 1-2 30µm |
| | | | | | | | | | |
| Density of intermediate layer | - | - | | - | | - | | 0.938 | |
| Transparency | A | A | | A | | A | | A (75) | |
| Whitening | None | None | | None | | None | | None | |
| Wrinkles | None | None | | None | | None | | None | |
| Plate drop strength | - | - | | - | | - | | A (75) | |

**Table 27**

| | Outer intermediate layer/Inner intermediate layer Examples 34 to 38 | | | | | | | | |
|---|---|---|---|---|---|---|---|---|---|
| | [Example 34] | | [Example 35] | | [Example 36] | | [Example 37] | | [Example 38] |
| B-1 layer | 1-1 20µm | | 1-1 20µm | | 1-1 20µm | | 1-1 20µm | | 1-1 20µm |
| B-2 layer | 2-2 90µm | | 2-1 90µm | | 2-3 90µm | | 2-4 90µm | | 2-5 90µm |
| B-3 layer | 3-1 20µm | | 3-1 20µm | | 3-1 20µm | | 3-1 20µm | | 3-1 20µm |
| B-4 layer | 2-2 90µm | | 2-1 90µm | | 2-3 90µm | | 2-4 90µm | | 2-5 90µm |
| B-5 layer | 1-2 30µm | | 1-2 30µm | | 1-2 30µm | | 1-2 30µm | | 1-2 30µm |
| | | | | | | | | | |
| Density of inner intermediate /outer intermediate layer | 0.910 | 0.912 | | 0.915 | | 0.910 | | 0.914 | |
| Transparency (A>75) | A (78) | A (77) | | B (73) | | A (79) | | B (74) | |
| Whitening | None | None | | None | | None | | None | |
| Wrinkles | None | None | | None | | None | | None | |
| Plate drop test (A>60) | A (77) | A (78) | | A (60) | | A (74) | | A (62) | |

**Table 28**

| | Outer intermediate layer/Inner intermediate layer Examples 39 to 43 | | | | | | | | |
|---|---|---|---|---|---|---|---|---|---|
| | [Example 39] | | [Example 40] | | [Example 41] | | [Example 42] | | [Example 43] |
| B-1 layer | 1-1 20µm | | 1-1 20µm | | 1-1 20µm | | 1-1 20µm | | 1-1 20µm |
| B-2 layer | 2-6 90µm | | 2-7 90µm | | 2-8 90µm | | 2-9 90µm | | 2-10 90µm |
| B-3 layer | 3-1 20µm | | 3-1 20µm | | 3-1 20µm | | 3-1 20µm | | 3-1 20µm |
| B-4 layer | 2-6 90µm | | 2-7 90µm | | 2-8 90µm | | 2-9 90µm | | 2-10 90µm |
| B-5 layer | 1-2 30µm | | 1-2 30µm | | 1-2 30µm | | 1-2 30µm | | 1-2 30µm |
| | | | | | | | | | |
| Density of inner intermediate /outer intermediate layer | 0.911 | 0.913 | | 0.914 | | 0.915 | | 0.915 | |
| Transparency (A>75) | A (78) | A (75) | | B (73) | | B (71) | | B (73) | |
| Whitening | None | None | | None | | None | | None | |
| Wrinkles | None | None | | None | | None | | None | |
| Plate drop test (A>60) | A (75) | A (68) | | A (65) | | A (60) | | A (62) | |

**Table 29**

| | Outer intermediate layer/Inner intermediate layer Examples 44 to 49 | | | | | |
|---|---|---|---|---|---|---|
| | [Example 44] | [Example 45] | [Example 46] | [Example 47] | [Example 48] | [Example 49] |
| B-1 layer | 1-1 20µm | 1-1 20µm | 1-1 20µm | 1-1 20µm | 1-1 20µm | 1-1 20µm |
| B-2 layer | 2-11 90µm | 2-12 90µm | 2-13 90µm | 2-14 90µm | 2-15 90µm | 2-16 90µm |
| B-3 layer | 3-1 20µm | 3-1 20µm | 3-1 20µm | 3-1 20µm | 3-1 20µm | 3-1 20µm |
| B-4 layer | 2-11 90µm | 2-12 90µm | 2-13 90µm | 2-14 90µm | 2-15 90µm | 2-16 90µm |
| B-5 layer | 1-2 30µm | 1-2 30µm | 1-2 30µm | 1-2 30µm | 1-2 30µm | 1-2 30µm |
| | | | | | | |
| Density of inner intermediate /outer intermediate layer | 0.916 | 0.912 | 0.912 | 0.910 | 0.913 | 0.917 |
| Transparency (A>75) | B (71) | A (76) | B (74) | A (79) | B (74) | B (70) |
| Whitening | None | None | None | None | None | None |
| Wrinkles | None | None | None | None | None | None |
| Plate drop test (A>60) | B (56) | A (71) | A (70) | A (70) | A (67) | B (51) |

**Table 30**

| | Outer intermediate layer/Inner intermediate layer Examples 50 to 54 Intermediate layer Examples 55 | | | | | |
|---|---|---|---|---|---|---|
| | [Example 50] | [Example 51] | [Example 52] | [Example 53] | [Example 54] | [Example 55] |
| B-1 layer | 1-1 20µm | 1-1 20µm | 1-1 20µm | 1-1 15µm | 1-1 25µm | 1-5 20µm |
| B-2 layer | 2-17 90µm | 2-18 90µm | 2-19 90µm | 2-1 100µm | 2-1 80µm | 2-1 90µm |
| B-3 layer | 3-1 20µm | 3-1 20µm | 3-1 20µm | 3-1 20µm | 3-1 20µm | 3-5 20µm |
| B-4 layer | 2-17 90µm | 2-18 90µm | 2-19 90µm | 2-1 100µm | 2-1 80µm | 2-1 90µm |
| B-5 layer | 1-2 30µm | 1-2 30µm | 1-2 30µm | 1-2 25µm | 1-2 40µm | 1-6 30µm |
| | | | | | | |
| Density of inner intermediate /outer intermediate layer | 0.918 | 0.916 | 0.913 | 0.912 | 0.912 | 0.931 |
| Transparency (A>75) | B (70) | B (71) | B (74) | A (80) | A (71) | A (74) |
| Whitening | None | None | None | None | None | None |
| Wrinkles | None | None | None | None | None | None |
| Plate drop test (A>60) | B (47) | B (55) | A (67) | A (76) | A (65) | A (71) |

**Table 31**

| | Outer layer/Inner layer Comparative Examples 18 to 21 Intermediate layer Comparative Examples 22 to 23 | | | | | |
|---|---|---|---|---|---|---|
| | [Comparative Example 18] | [Comparative Example 19] | [Comparative Example 20] | [Comparative Example 21] | [Comparative Example 22] | [Comparative Example 23] |
| B-1 layer | 3-1 20µm | 1-4 20µm | 1-1 20µm | 1-1 20µm | 1-1 20µm | 1-1 20µm |
| B-2 layer | 2-1 90µm | 2-1 90µm | 2-1 90µm | 2-1 90µm | 2-1 90µm | 2-1 90µm |
| B-3 layer | 3-1 20µm | 3-1 20µm | 3-1 20 µm | 3-1 20 µm | 1-2 20µm | 3-4 20µm |
| B-4 layer | 2-1 90µm | 2-1 90µm | 2-1 90µm | 2-1 90µm | 2-1 90µm | 2-1 90µm |
| B-5 layer | 1-2 30µm | 1-2 30µm | 3-1 20 µm | 1-4 20 µm | 1-2 20µm | 1-2 20µm |
| | | | | | | |
| Density of intermediate layer | - | - | - | - | 0.940 | 0.928 |
| Transparency | C | C | C | C | A (72) | C (68) |
| Whitening | None | None | Present | Present | None | Present |
| Wrinkles | Present (entirety) | Present (mouth member) | Present (entirety) | Present (mouth member) | Present (mouth portion, corner portion) | Present (entirety) |
| Plate drop strength | - | - | - | - | A (72) | A (70) |

**Table 32**

| | Outer intermediate layer/Inner intermediate layer Comparative Examples 24 to 29 | | | | | |
|---|---|---|---|---|---|---|
| | [Comparative Example 24] | [Comparative Example 25] | [Comparative Example 26] | [Comparative Example 27] | [Comparative Example 28] | [Comparative Example 29] |
| B-1 layer | 1-1 20µm | 1-1 20µm | 1-1 20µm | 1-1 20µm | 1-1 20µm | 1-1 20µm |
| B-2 layer | 2-20 90µm | 2-21 90µm | 2-22 90µm | 2-23 90µm | 2-24 90µm | 2-25 90µm |
| B-3 layer | 3-1 20µm | 3-1 20µm | 3-1 20µm | 3-1 20µm | 3-1 20µm | 3-1 20µm |
| B-4 layer | 2-20 90µm | 2-21 90µm | 2-22 90µm | 2-23 90µm | 2-24 90µm | 2-25 90µm |
| B-5 layer | 1-2 30µm | 1-2 30µm | 1-2 30µm | 1-2 30µm | 1-2 30µm | 1-2 30µm |
| | | | | | | |
| Density of inner intermediate /outer intermediate layer | 0.907 | 0.917 | 0.908 | 0.916 | 0.920 | 0.918 |
| Transparency (A>75) | - | C (67) | - | C (68) | C (65) | C (69) |
| Whitening | Present (entirety) | None | Present (entirety) | None | None | None |
| Wrinkles | Present (entirety) | None | Present (entirety) | None | None | None |
| Plate drop test (A>60) | - | B (50) | - | B (56) | C (38) | B (43) |

**Table 33**

| | Outer intermediate layer/Inner intermediate layer Comparative Examples 30 to 34 | | | | |
|---|---|---|---|---|---|
| | [Comparative Example 30] | [Comparative Example 31] | [Comparative Example 32] | [Comparative Example 33] | [Comparative Example 34] |
| B-1 layer | 1-1 20µm | 1-1 20µm | 1-1 20µm | 1-1 20µm | 1-1 20µm |
| B-2 layer | 2-26 90µm | 2-27 90µm | 2-28 90µm | 2-29 90µm | 2-30 90µm |
| B-3 layer | 3-1 20µm | 3-1 20µm | 3-1 20µm | 3-1 20µm | 3-1 20µm |
| B-4 layer | 2-26 90µm | 2-27 90µm | 2-28 90µm | 2-29 90µm | 2-30 90µm |
| B-5 layer | 1-2 30µm | 1-2 30µm | 1-2 30µm | 1-2 30µm | 1-2 30µm |
| | | | | | |
| Density of inner intermediate /outer intermediate layer | 0.915 | 0.908 | 0.909 | 0.914 | 0.915 |
| Transparency (A>75) | C (69) | - | A (76) | C (69) | C (69) |
| Whitening | None | Present | None | None | None |
| Wrinkles | N one | Present (entirety) | Present (mouth member) | None | None |
| Plate drop test (A>60) | B (60) | - | A (78) | A (62) | A (62) |

### [DESCRIPTION OF SYMBOLS]

1: A-1 layer (first layer), 2: A-2 layer (second layer), 3: A-3 layer (third layer), 4: multilayer film (II), 5: multilayer film (II), 6: drug solution bag, 9: peripheral sealed portion, 21: B-1 layer (first layer), 22: B-2 layer (second layer), 23: B-3 layer (third layer), 24: B-4 layer (fourth layer), 25: B-5 (fifth layer), 26: drug solution bag, 27: multilayer film (III), 28: multilayer film (III), 29: peripheral sealed portion

## Claims

1. A multilayer film, which is a three-layer film having a laminated structure formed by laminating a layer (A-1), a layer (A-2) and a layer (A-3) in that order, wherein
(i) layer (A-1) comprises a polyethylene or a mixture of two or more types of polyethylene having a DSC melting point of > 126°C and ≤ 132°C and a density higher than a density of the A-2 layer,
(ii) layer (A-3) comprises a polyethylene or a mixture of two or more types of polyethylene having a DSC melting point of > 125°C and ≤ 130°C and a density higher than the density of the A-2 layer,
(iii) layer (A-2) comprises a polyethylene mixture having a DSC melting point of 120-126°C and a density of 0.910-0.920 g/cm³, the polyethylene mixture making up the A-2 layer comprises:
- 10-55 wt.-% of a linear polyethylene having a density of 0.910-0.930 g/cm³;
- 5-15 wt.-% of a high-density polyethylene having a density of 0.950-0.970 g/cm³; and
- 35-85 wt.-% of a linear polyethylene having a density of 0.900-0.910 g/cm³ and polymerized using a single-site catalyst, and
the thickness of the entirety of the film is 180-280 µm.

2. The multilayer film of claim 1, wherein the density of the layer (A-1) is 0.940-0.951 g/cm³, and the density of the layer (A-3) is 0.937-0.946 g/cm³.

3. The multilayer film of Claim 1 or 2, wherein
(i) the layer (A-1) comprises:
- 55-85 wt.-% of a linear polyethylene having a DSC melting point of 120-125°C and a density of 0.930-0.940 g/cm³; and
- 15-45 wt.-% of a high-density polyethylene having a density of 0.950-0.970 g/cm³, and
(iii) the layer (A-3) is a polyethylene mixture comprising:
- 70-85 wt.-% of a linear polyethylene having a DSC melting point of 120-125°C and a density of 0.930-0.940 g/cm³; and
- 15-30 wt.-% of a high-density polyethylene having a density of 0.950-0.970 g/cm³.

4. The multilayer film of any of claims 1-3, wherein the thickness of the layer (A-1) is 10-30 µm, the thickness of the layer (A-2) is 140-250 µm, and the thickness of the layer (A-3) is 15-45 µm.

5. The multilayer film of any of claims 1-4, wherein
the DSC curve of the polyethylene mixture making up the layer (A-2) has at least a DSC melting point peak in the range of 120-126°C and a second peak, lower than the DSC melting point peak, in the range of 90-105°C, and
the ratio of the height HL of the second peak with respect to the height Hp of the DSC melting point peak (HL/Hp) is 0.20-0.50.

6. A bag using the multilayer film of any of claims 1-5 and being formed so that the layer (A-1) is an outer layer and the layer (A-3) is an inner layer.

7. A multilayer film, which is a five-layer film having a laminated structure formed by laminating a layer (B-1), a layer (B-2), a layer (B-3), a layer (B-4), and a layer (B-5) in that order, wherein
(i) each of the layers (B-1) and (B-5) comprises a linear polyethylene having a DSC melting point of > 125°C and ≤ 130°C and a density of 0.935-0.946 g/cm³,
the linear polyethylene mixture making up the layer (B-1) and the layer (B-5) comprises:
- 75-90 wt.-% of a linear polyethylene having a DSC melting point of 120-125°C and a density of 0.930-0.940 g/cm³; and
- 10-25 wt.-% of a high-density polyethylene having a density of 0.950-0.970 g/cm³,
(ii) the layer (B-3) comprises a linear polyethylene having a DSC melting point of 120-125°C and a density of 0.930-0.940 g/cm³,
(iii) each of the layers (B-2) and (B-4) comprises a linear polyethylene mixture having a DSC melting point of 120-126°C and a density of 0.910-0.920 g/cm³,
the linear polyethylene mixture making up the layer (B-2) and the layer (B-4) comprises:
- 35-85 wt.-% of a linear polyethylene having a density of 0.900-0.910 g/cm³ and polymerized using a single-site catalyst;
- 0-55 wt.-% of a linear polyethylene having a density of 0.910-0.930 g/cm³; and
- 5-15 wt.-% of a high-density polyethylene having a density of 0.950-0.970 g/cm³.

8. The multilayer film of claim 7, wherein the thickness of each of the layers (B-1) and (B-3) is 10-30 µm, the thickness of each of the layers (B-2) and (B-4) is 70-110 µm, and the thickness of the layer (B-5) is 15-45 µm.

9. A bag using the multilayer film of claim 7 or 8 and being formed so that the layer (B-1) is an outer layer and the layer (B-5) is an inner layer.

## Patentansprüche

1. Mehrschichtige Folie, die eine dreischichtige Folie mit einer laminierten Struktur ist, die gebildet ist durch Laminieren einer Schicht (A-1), einer Schicht (A-2) und einer Schicht (A-3) in dieser Reihenfolge, worin
(i) Schicht (A-1) ein Polyethylen oder ein Gemisch aus zwei oder mehr Arten eines Polyethylens umfasst, das einen DSC-Schmelzpunkt von > 126°C und ≤ 132°C und eine Dichte aufweist, die höher ist als die Dichte der A-2 Schicht,
(ii) Schicht (A-3) ein Polyethylen oder ein Gemisch aus zwei oder mehr Arten eines Polyethylens umfasst, das einen DSC-Schmelzpunkt von > 125°C und ≤ 130°C und eine Dichte aufweist, die höher ist als die Dichte der A-2 Schicht,
(iii) Schicht (A-2) ein Polyethylen-Gemisch umfasst, das einen DSC-Schmelzpunkt von 120-126°C und eine Dichte von 0,910-0,920 g/cm³ aufweist, das Polyethylen, aus dem die A-2 Schicht besteht, umfassend:
- 10-55 Gew.-% eines linearen Polyethylens, das eine Dichte von 0,910-0,930 g/cm³ aufweist;
- 5-15 Gew.-% eines Polyethylens hoher Dichte, das eine Dichte von 0,950-0,970 g/cm³ aufweist; und
- 35-85 Gew.-% eines linearen Polyethylens, das eine Dichte von 0,900-0,910 g/cm³ aufweist und mittels eines Single-Site-Katalysators polymerisiert ist, und
die Dicke der gesamten Folie 180-280 µm beträgt.

2. Mehrschichtige Folie gemäß Anspruch 1, worin die Dichte der Schicht (A-1) 0,940-0,951 g/cm³ beträgt und die Dichte der Schicht (A-3) 0,937-0,946 g/cm³ beträgt.

3. Mehrschichtige Folie gemäß Anspruch 1 oder 2, worin
(i) die Schicht (A-1) umfasst:
- 55-85 Gew.-% eines linearen Polyethylens, das einen DSC-Schmelzpunkt von 120-125°C und eine Dichte von 0,930-0,940 g/cm³ aufweist; und
- 15-45 Gew.-% eines Polyethylens hoher Dichte, das eine Dichte von 0,950-0,970 g/cm³ aufweist, und
(iii) die Schicht (A-3) ein Polyethylen-Gemisch ist, umfassend:
- 70-85 Gew.-% eines linearen Polyethylens, das einen DSC-Schmelzpunkt 120-125°C und eine Dichte von 0,930-0,940 g/cm³ aufweist; und
- 15-30 Gew.-% eines Polyethylens hoher Dichte, das eine Dichte von 0,950-0,970 g/cm³ aufweist.

4. Mehrschichtige Folie gemäß mindestens einem der Ansprüche 1-3, worin die Dicke der Schicht (A-1) 10-30 µm beträgt, die Dicke der Schicht (A-2) 140-250 µm beträgt und die Dicke der Schicht (A-3) 15-45 µm beträgt.

5. Mehrschichtige Folie gemäß mindestens einem der Ansprüche 1-4, worin die DSC-Kurve des Polyethylen-Gemischs, aus dem die Schicht (A-2) besteht, mindestens einen DSC-Schmelzpunktpeak im Bereich von 120-126°C und einen zweiten Peak im Bereich von 90-105°C aufweist, der niedriger ist als der DSC-Schmelzpunktpeak, und
das Verhältnis der Höhe HL des zweiten Peaks bezogen auf die Höhe Hp des DSC-Schmelzpunktpeaks (HL/Hp) 0,20-0,50 beträgt.

6. Tasche, die die mehrschichtige Folie gemäß mindestens einem der Ansprüche 1-5 verwendet und so geformt ist, dass die Schicht (A-1) eine äußere Schicht ist und die Schicht (A-3) eine innere Schicht ist.

7. Mehrschichtige Folie, die eine fünfschichtige Folie mit einer laminierten Struktur ist, die gebildet ist durch Laminieren einer Schicht (B-1), einer Schicht (B-2), einer Schicht (B-3), einer Schicht (B-4) und einer Schicht (B-5) in dieser Reihenfolge, worin
(i) jede der Schichten (B-1) und (B-5) ein lineares Polyethylen umfasst, das einen DSC-Schmelzpunkt von > 125°C und ≤ 130°C und eine Dichte von 0,935-0,946 g/cm³ aufweist,
das lineare Polyethylen-Gemisch, aus dem die Schicht (B-1) und die Schicht (B-5) bestehen, umfasst:
- 75-90 Gew.-% eines linearen Polyethylens, das einen DSC-Schmelzpunkt von 120-125°C und eine Dichte von 0,930-0,940 g/cm³ aufweist; und
- 10-25 Gew.-% eines Polyethylens hoher Dichte, das eine Dichte von 0,950-0,970 g/cm³ aufweist,
(ii) die Schicht (B-3) ein lineares Polyethylen umfasst, das einen DSC-Schmelzpunkt von 120-125°C und eine Dichte von 0,930-0,940 g/cm³ aufweist,
(iii) jede der Schichten (B-2) und (B-4) ein lineares Polyethylen-Gemisch umfasst, das einen DSC-Schmelzpunkt von 120-126°C und eine Dichte von 0,910-0,920 g/cm³ aufweist,
das lineare Polyethylen-Gemisch, aus dem die Schicht (B-2) und die Schicht (B-4) bestehen, umfasst:
- 35-85 Gew.-% eines linearen Polyethylens, das eine Dichte von 0,900-0,910 g/cm³ aufweist und mittels eines Single-Site-Katalysators polymerisiert ist; und
- 0-55 Gew.-% eines linearen Polyethylens, das eine Dichte von 0,910-0,930 g/cm³ aufweist; und
- 5-15 Gew.-% eines Polyethylens hoher Dichte, das eine Dichte von 0,950-0,970 g/cm³ aufweist.

8. Mehrschichtige Folie gemäß Anspruch 7, worin die Dicke jeder der Schichten (B-1) und (B-3) 10-30 µm beträgt, die Dicke jeder der Schichten (B-2) und (B-4) 70-110 µm beträgt und die Dicke der Schicht (B-5) 15-45 µm beträgt.

9. Tasche, die die mehrschichtige Folie gemäß Anspruch 7 oder 8 verwendet und so geformt ist, dass die Schicht (B-1) eine äußere Schicht ist und die Schicht (B-5) eine innere Schicht ist.

## Revendications

1. Film à plusieurs couches, qui est un film à trois couches ayant une structure stratifiée formée en stratifiant une couche (A-1), une couche (A-2) et une couche (A-3) dans cet ordre, dans lequel
(i) la couche (A-1) comprend un polyéthylène ou un mélange de deux ou plusieurs types de polyéthylène ayant un point de fusion DSC > 126 °C et ≤ 132 °C et une densité plus élevée qu'une densité de la couche A-2,
(ii) la couche (A-3) comprend un polyéthylène ou un mélange de deux ou plusieurs types de polyéthylène ayant un point de fusion DSC > 125 °C et ≤ 130 °C et une densité plus élevée que la densité de la couche A-2,
(iii) la couche (A-2) comprend un mélange de polyéthylène ayant un point de fusion DSC de 120 à 126 °C et une densité de 0,910 à 0,920 g/cm³, le mélange de polyéthylène composant la couche A-2 comprend :
- 10 à 55 % en poids d'un polyéthylène linéaire ayant une densité de 0,910 à 0,930 g/cm³ ;
- 5 à 15 % en poids d'un polyéthylène haute densité ayant une densité de 0,950 à 0,970 g/cm³ ; et
- 35 à 85% en poids d'un polyéthylène linéaire ayant une densité de 0,900 à 0,910 g/cm³ et polymérisé en utilisant un catalyseur à site simple, et
l'épaisseur de l'intégralité du film est de 180 à 280 µm.

2. Film à plusieurs couches selon la revendication 1, dans lequel la densité de la couche (A-1) est de 0,940 à 0,951 g/cm³ et la densité de la couche (A-3) est de 0,937 à 0,946 g/cm³.

3. Film à plusieurs couches selon la revendication 1 ou 2, dans lequel
(i) la couche (A-1) comprend :
- 55 à 85 % en poids d'un polyéthylène linéaire ayant un point de fusion DSC de 120 à 125 °C et une densité de 0,930 à 0,940 g/cm³ ; et
- 15 à 45 % en poids d'un polyéthylène haute densité ayant une densité de 0,950 à 0,970 g/cm³, et
(iii) la couche (A-3) est un mélange de polyéthylène comprenant :
- 70 à 85 % en poids d'un polyéthylène linéaire ayant un point de fusion DSC de 120 à 125 °C et une densité de 0,930 à 0,940 g/cm³ ; et
- 15 à 30 % en poids d'un polyéthylène haute densité ayant une densité de 0,950 à 0,970 g/cm³.

4. Film à plusieurs couches selon l'une quelconque des revendications 1 à 3, dans lequel l'épaisseur de la couche (A-1) est de 10 à 30 µm, l'épaisseur de la couche (A-2) est de 140 à 250 µm et l'épaisseur de la couche (A-3) est de 15 à 45 µm.

5. Film à plusieurs couches selon l'une quelconque des revendications 1 à 4, dans lequel
la courbe DSC du mélange de polyéthylène composant la couche (A-2) a au moins un pic de point de fusion DSC dans la plage de 120 à 126 °C et un second pic, inférieur au pic de point de fusion DSC, dans la plage de 90 à 105 °C, et
le rapport de la hauteur HL du second pic par rapport à la hauteur Hp du pic de point de fusion DSC (HL/Hp) est de 0,20 à 0,50.

6. Poche utilisant le film à plusieurs couches selon l'une quelconque des revendications 1 à 5 et étant formée de sorte que la couche (A-1) est une couche extérieure et la couche (A-3) est une couche intérieure.

7. Film à plusieurs couches, qui est un film à cinq couches ayant une structure stratifiée formée en stratifiant une couche (B-1), une couche (B-2), une couche (B-3), une couche (B-4) et une couche (B-5) dans cet ordre, dans lequel
(i) chacune des couches (B-1) et (B-5) comprend un polyéthylène linéaire ayant un point de fusion DSC > 125 °C et ≤ 130 °C et une densité de 0,935 à 0,946 g/cm³,
le mélange de polyéthylène linéaire composant la couche (B-1) et la couche (B-5) comprend :
- 75 à 90 % en poids d'un polyéthylène linéaire ayant un point de fusion DSC de 120 à 125 °C et une densité de 0,930 à 0,940 g/cm³ ; et
- 10 à 25 % en poids d'un polyéthylène haute densité ayant une densité de 0,950 à 0,970 g/cm³,
(ii) la couche (B-3) comprend un polyéthylène linéaire ayant un point de fusion DSC de 120 à 125 °C et une densité de 0,930 à 0,940 g/cm³,
(iii) chacune des couches (B-2) et (B-4) comprend un mélange de polyéthylène linéaire ayant un point de fusion DSC de 120 à 126 °C et une densité de 0,910 à 0,920 g/cm³,
le mélange de polyéthylène linéaire composant la couche (B-2) et la couche (B-4) comprend :
- 35 à 85 % en poids d'un polyéthylène linéaire ayant une densité de 0,900 à 0,910 g/cm³ et polymérisé en utilisant un catalyseur à site simple ;
- 0 à 55 % en poids d'un polyéthylène linéaire ayant une densité de 0,910 à 0,930 g/cm³ ; et
- 5 à 15 % en poids d'un polyéthylène haute densité ayant une densité de 0,950 à 0,970 g/cm³.

8. Film à plusieurs couches selon la revendication 7, dans lequel l'épaisseur de chacune des couches (B-1) et (B-3) est de 10 à 30 µm, l'épaisseur de chacune des couches (B-2) et (B-4) est de 70 à 110 µm et l'épaisseur de la couche (B-5) est de 15 à 45 µm.

9. Poche utilisant le film à plusieurs couches selon la revendication 7 ou 8 et étant formée de sorte que la couche (B-1) est une couche extérieure et la couche (B-5) est une couche intérieure.
